# EUROPEAN PATENT APPLICATION

(11) **EP 2 282 552 A1**
(43) Date of publication of application: **09.02.2011**
(21) Application number: 09754783.0
(22) Date of filing: 28.05.2009
(51) Int. Cl.: H04Q 9/00

(54) **DATA PROCESSING DEVICE, DATA PROCESSING SYSTEM, DATA PROCESSING DEVICE CONTROL METHOD, CONTROL PROGRAM, AND COMPUTER-READABLE RECORDING MEDIUM CONTAINING THE PROGRAM**

(30) Priority: 29.05.2008 JP 2008141021
(71) Applicant: Sharp Kabushiki Kaisha, Osaka-shi, Osaka 545-8522 (JP)
(72) Inventor: MAMEDA, Kenji, Osaka 545-8522 (JP); KONYA, Minehiro, Osaka 545-8522 (JP); NOJIMA, Mitsunori, Osaka 545-8522 (JP); IWAMI, Youhei, Osaka 545-8522 (JP); DOI, Katsuo, Osaka 545-8522 (JP); TAKAHASHI, Masafumi, Osaka 545-8522 (JP)
(74) Representative: Müller - Hoffmann & Partner
(86) International application number: PCT/JP2009/059813
(87) International publication number: WO 2009/145275

(57) **Abstract**

A television (11) includes: an executable process storage section (122) having stored therein command names 6 respectively indicating one or more processes that can be executed by the television (11); process-designating information extracting section (112) for extracting, from image data received from an operation device (20), pieces of process-designating information (5) designating processes that are to be executed by a plurality of image data reception processing devices (10); and a process executing section (115) for, from among the processes indicated by the command names (6) stored in the executable process storage section (122), executing a process that matches a process designated by a piece of process-designating information (5) thus obtained. This allows the television to receive data containing process-designating information designating processes that are to be executed by the plurality of image data reception processing devices, including the television, and execute only a process that can be executed by the television.

## Description

### Technical Field

The present invention relates to a data-processing device that receives operation data outputted from an operation device and executes a process in accordance with the operation data, a data-processing system, a method for controlling a data-processing device, a control program, and a computer-readable storage medium containing the program.

### Background Art

In recent years, along with the popularization of digital cameras or, in particular, cellular phones each equipped with a camera having a digital camera function, handling of photos as image data has been widespread. Along with this, devices such as a television that loads image data from a digital camera or a cellular phone and displays the image data thus loaded and a printer that loads image data from a digital camera or a cellular phone and prints the image data thus loaded have been in widespread use.

Further, a technique for image data transfer through wireless communication between such devices has been in widespread use. Common examples of protocols for image data transfer through wireless communication include high-speed infrared communication protocols such as IrSimple (Registered Trademark) and short-distance wireless communication protocols such as Bluetooth (Registered Trademark). Use of such wireless communication has made it easy for a television to display a photo taken by a cellular phone.

Further, among televisions each having an image data receiving function of receiving image data through infrared communication, there is a television that determines whether a received infrared signal is image data transmitted from a cellular phone or the like or a control signal transmitted from an infrared remote controller and, in cases where the received infrared signal is a control signal, controls itself in accordance with the control signal.

Further, Patent Literature 1 discloses a display-processing device that receives image data containing image display control information for performing display control of an image. The display-processing device described in Patent Literature 1 receives image data containing image display control information and displays an image contained in the image data, with the image being scrolled through or scaled up/down in accordance with the image display control information. That is, by simply transmitting image data containing image display control information to the display-processing device, the display-processing device can be made to perform image processing such as scrolling or scaling up/down.

Furthermore, along with the recent popularization of the high-speed Internet, a television has been enabled to obtain photo content from an external server device through a communication network as provided by a service provider and display the photo content thus obtained. Examples of the photo content provided by the service provider include photo content, such as a recipe, which makes a user's life convenient, photo content, such as a travel brochure, which is intended for advertisement, as well as photo content, such as a photo, which is intended for ornamental use.

Further, Patent Literature 2 discloses a technique for recording in an image file a combination of a pointer to information and handling of information indicated by the pointer.

### Citation List

Patent Literature 1
Japanese Patent Application Publication, Tokukai, No. 2004-310744 A (Publication Date: November 4, 2004)
Patent Literature 2
Japanese Patent No. 3522635 (Publication Date: April 26, 2004)

### Summary of Invention

### Technical Problem

In an attempt to display image data on a television having such an image data receiving function, the user must operate both an image data transmitting device (such as a cellular phone) for transmitting the image data to the television and an infrared remote controller for operating the television. This has made the operation so cumbersome and complicated that the user's convenience is hampered.

Further, the display-processing device described in Patent Literature 1 performs image processing in accordance with image display control information contained in received image data. Accordingly, even if the technique described in Patent Literature 1 is applied to a television, the image processing that can be executed by the television is limited to image processing of an image represented by image data transmitted to the television and containing image display control information. Therefore, the user has been unable to perform image processing at will, for example, on photo content obtained from an outside source through a communication network.

Further, in using a television to enjoy a service for obtaining photo content through a communication network, the user is required to input ten or more alphanumeric characters as an ID for the photo content by using an infrared remote controller accessory to the television. This has made the input time-consuming.

Further, in recent years, there has been an increase in number of devices, such as information appliances, capable of processing various types of information. However, it is usual for a service provider who provides various types of content to supply content to such a device (or, in particular, an device that is not connected to an external communication network such as the Internet) via a PC or a memory medium. This has caused such a lot of trouble to the user that the user's convenience is hampered.

Further, the service provider is required to create content for each client-side device that processes the content (e.g., content for use in a television, content for use in a microwave oven, etc.).

Further, according to the technique described in Patent Literature 2, by the user's selecting a menu item corresponding to an image, a process based on a combination of a pointer and information indicated by the point as recorded in an image file corresponding to the menu thus selected is executed by an image file processing device. That is, the image file processing device does not immediately execute a process based on a received image file but executes a process by receiving the user's selection operation. This has caused such trouble to the user that the user's convenience is hampered.

The present invention has been made in view of the foregoing problems, and it is an object of the present invention to provide a data-processing device which receives data containing process-designating information designating processes that are to be executed by a plurality of data-processing devices including the data-processing device and which executes only a process that can be executed by the data-processing device, a data-processing system, a method for controlling a data-processing device, a control program, and a computer-readable storage medium containing the program.

### Solution to Problem

In order to solve the foregoing problems, a data-processing device according to the present invention in a data-processing device for receiving operation data outputted by an operation device to operate a plurality of data-processing devices including at least the data-processing device, and for executing a process in accordance with the operation data, the data-processing device including: an executable process storage section having stored therein pieces of executable process information respectively indicating one or more processes that are able to be executed by the data-processing device; process-designating information obtaining means for obtaining, from the operation data thus received, pieces of process-designating information designating processes that are to be executed by the plurality of data-processing devices; and process executing means for, from among the processes indicated by the pieces of executable process information stored in the executable process storage section, executing a process that matches a process designated by a piece of process-designating information obtained by the process-designating information obtaining means.

Further, a method for controlling a data-processing device according to the present invention is a method for controlling a data-processing device for receiving operation data outputted by an operation device to operate a plurality of data-processing devices including at least the data-processing device, and for executing a process in accordance with the operation data, the data-processing device including an executable process storage section having stored therein pieces of executable process information respectively indicating one or more processes that are able to be executed by the data-processing device, the method including: a process-designating information obtaining step of obtaining, from the operation data thus received, piece of process-designating information designating processes that are to be executed by the plurality of data-processing devices; and a process executing step of, from among the processes indicated by the pieces of executable process information stored in the executable process storage section, executing a process that matches a process designated by a piece of process-designating information obtained in the process-designating information obtaining step.

According to the foregoing configuration, the data-processing device according to the present invention can store, in the executable process storage section, pieces of executable process information respectively indicating one or more processes that can be executed by the data-processing device. Moreover, the data-processing device according to the present invention can receive operation data outputted by the operation device and obtain, from the operation data thus received, pieces of process-designating information designating processes that are to be executed by the plurality of data-processing devices. Moreover, from among the processes indicated by the pieces of executable process information stored in the executable process storage section, the data-processing device according to the present invention can execute a process that matches a process designated by a piece of process-designating information obtained by the process-designating information obtaining means.

This allows the data-processing device according to the present invention to receive operation data containing process-designating information designating processes that are to be executed by the plurality of data-processing devices and execute only a process that can be executed by the data-processing device.

This allows a user of the operation device to, by simply transmitting a piece of operation data to the plurality of data-processing devices, cause the plurality of data-processing devices to execute processes that can be executed by the plurality of data-processing devices respectively.

In other words, there is no need for the user to transmit operation data to each separate data-processing device. That is, there is no need to separately carry out an operation for transmitting, to a first data-processing device, operation data containing process-designating information designating the content of a process that is to be executed by the first data-processing device and an operation for transmitting, to a second data-processing device, operation data containing process-designating information designating the content of a process that is to be executed by the second data-processing device.

Therefore, the present invention brings about an effect of improving in operability and convenience for a user who uses an operation device to operate a data-processing device.

Furthermore, a service provider who provides operating data needs only to provide the user with a piece of operation data containing plural pieces of process-designating information. That is, the service provider can create and provide a piece of operation data containing process-designating information designating the content of a process that is to be executed by a data-processing device and process-designating information designating the content of a process that is to be executed by another data-processing device.

In other words, there is no need for the service provider to separately create operation data containing process-designating information designating the content of a process that is to be executed by a data-processing device and operation data containing process-designating information designating the content of a process that is to be executed by another data-processing device.

Therefore, the present invention brings about an effect of saving the service provider the trouble of creating and managing operation data.

Furthermore, the data-processing device according to the present invention thus configured may further include current mode obtaining means for obtaining a current mode of the data-processing device, wherein: the executable process storage section further has stored therein modes of the data-processing device in which the processes indicated by the pieces of executable process information are to be executed, with the modes associated with the pieces of executable process information; and from among processes indicated by those ones of the pieces of executable process information, stored in the executable process storage section, which are associated with the current mode of the data-processing device as obtained by the current mode obtaining means, the process executing means executes a process that matches a process designated by a piece of process-designating information obtained by the process-designating information obtaining means.

According to the foregoing configuration, the data-processing device according to the present invention can further store, in the executable process storage section, modes of the data-processing device in which the processes indicated by the pieces of executable process information are to be executed, with the modes associated with the pieces of executable process information. Moreover, the data-processing device according to the present invention can obtain a current mode of the data-processing device. Moreover, from among processes indicated by those ones of the pieces of executable process information, stored in the executable process storage section, which are associated with the current mode of the data-processing device, the data-processing device according to the present invention can execute a process that matches a process designated by a piece of process-designating information obtained by the process-designating information obtaining means.

This allows the data-processing device according to the present invention to execute a process according to the mode of the data-processing device, from among processes that can be executed by the data-processing device.

For this reason, by presetting for each mode only a (predictable) process expected by the user, from among the processes that can be executed by the data-processing device, the data-processing device can execute only that process.

In other words, for each mode, the data-processing device according to the present invention can be set not to execute a process that is not appropriate for execution (that the user does not expect to be executed) in that mode. For example, in cases where it is not appropriate (the user does not intend) for the data-processing device to, while displaying a picture of a television broadcast in its display section in the broadcasting mode, display a Web page in its display section as obtained from an HTTP server, the data-processing device can be set not to execute a process for obtaining a Web page from an HTTP server in the broadcasting mode, unless the process is set to be a process that can be executed by the data-processing device.

Therefore, the present invention brings about an effect of improving in convenience for a user who uses an operation device to operate a data-processing device.

Furthermore, the data-processing device according to the present invention thus configured may be configured such that: for each of the modes associated with the pieces of executable process information, the executable process storage section further has stored therein an execution order that a process indicated by that one of the pieces of executable process information which is associated with the mode is to be executed, with the execution order associated with that piece of executable process information; and from among processes indicated by those ones of the pieces of executable process information, stored in the executable process storage section, which are associated with the current mode of the data-processing device as obtained by the current mode obtaining means, the process executing means executes a process that matches a process designated by a piece of process-designating information obtained by the process-designating information obtaining means, the process being executed in accordance with the execution order associated with the process.

According to the foregoing configuration, for each of the modes associated with the pieces of executable process information, the data-processing device according to the present invention can further store, in the executable process storage section, an execution order that a process indicated by that one of the pieces of executable process information which is associated with the mode is to be executed, with the execution order associated with that piece of executable process information. Moreover, from among processes indicated by those ones of the pieces of executable process information, stored in the executable process storage section, which are associated with the current mode of the data-processing device as obtained by the current mode obtaining means, the data-processing device according to the present invention can execute a process that matches a process designated by a piece of process-designating information obtained by the process-designating information obtaining means, the process being executed in accordance with the execution order associated with the process.

This allows the data-processing device according to the present invention to execute a process according to the mode of the data-processing device, from among processes that can be executed by the data-processing device and, in cases where there exist a plurality of processes that are to be executed according to a mode, to execute the processes in that mode in an order starting from an more appropriate one of the processes.

For example, by setting, as a process that can be executed first in a mode, a process for obtaining a group of photo data belonging to an album from a photo album server and setting, as a process that can be executed second in the mode, a process for the data-processing device to display a Web page in its display section as obtained from an HTTP server, the data-processing device first obtains a group of photo data belonging to an album from a photo album server, and then displays a Web page in its display section as obtained from an HTTP server. Alternatively, the data-processing device may execute only the process for obtaining a group of photo data belonging to an album from a photo album server.

Therefore, the present invention brings about an effect of improving in convenience for a user who uses an operation device to operate a data-processing device.

Furthermore, the data-processing device according to the present invention thus configured may be configured such that: the operation data is image data having the pieces of process-designating information stored in a predetermined region; and the process-designating information obtaining means includes process-designating information extracting means for extracting the pieces of process-designating information from the image data.

According to the foregoing configuration, the operation data is image data having the pieces of process-designating information stored in a predetermined region. Moreover, the pieces of process-designating information can be extracted from the image data.

The inclusion of the pieces of process-designating information in image data allows the data-processing device to, upon receiving the image data, extract the pieces of process-designating information from the image data and execute only a process that can be executed by the data-processing device.

For this reason, a service provider who provides image data needs only to provide each data-processing device with a piece of image data containing plural pieces of process-designating information. Further, by simply using the operation device to transmit a piece of image data containing plural pieces of process-designating information to the plurality of data-processing devices, the user can cause the plurality of data-processing devices to execute processes that can be executed by the plurality of data-processing devices respectively.

Therefore, the present invention brings about an effect of saving the service provide the trouble of creating and managing operation data. Further, the present invention brings about an effect of improving in operability and convenience for a user who uses an operation device to operate a data-processing device.

A data-processing system according to the present invention includes; a plurality of such data-processing devices as described above; and an operation device for outputting the operation data to operate the plurality of data-processing devices.

According to the foregoing configuration, a plurality of such data-processing devices as described above are included, and the operation device can operate the plurality of data-processing devices.

This allows the operation device to output, to the plurality of data-processing devices, operation data containing process-designating information designating processes that are to be executed by the plurality of data-processing devices, and allows each of the data-processing devices to receive the operation data and execute only a process that can be executed by the data-processing device.

This allows the user to, by simply using the operation device to transmit a piece of operation data containing one or more pieces of process-designating information to the plurality of data-processing devices, cause the plurality of data-processing devices to execute processes that can be executed by the plurality of data-processing devices respectively.

Therefore, the present invention brings about an effect of improving in operability and convenience for a user who uses an operation device to operate a data-processing device.

Furthermore, the data-processing system according to the present invention thus configured may be configured such that when the operation device transmits the operation data, which contains the pieces of process-designating information designating processes that are to be executed by the plurality of data-processing devices, with the plurality of data-processing devices ready to receive the operation data, each of the data-processing devices uses its process executing means to, from among the processes indicated by the pieces of executable process information stored in the executable process storage section, execute a process that matches a process designated by a piece of process-designating information obtained by the process-designating information obtaining means.

According to the foregoing configuration, when the operation device transmits the operation data, which contains the pieces of process-designating information designating processes that are to be executed by the plurality of data-processing devices, with the plurality of data-processing devices ready to receive the operation data, each of the data-processing devices can uses its process executing means to execute, from among the processes indicated by the pieces of executable process information stored in the executable process storage section, a process that matches a process designated by a piece of process-designating information obtained by the process-designating information obtaining means.

This allows the operation device to output, to the plurality of data-processing devices, a piece of operation data containing process-designating information designating processes that are to be executed by the plurality of data-processing devices, and allows each of the data-processing devices to receive the operation data at the same time and execute only a process that can be executed by the data-processing device.

This allows the user to, by simply using the operation device to only once transmit a piece of operation data containing one or pieces of process-designating information to the plurality of data-processing devices, cause the plurality of data-processing devices to simultaneously execute processes that can be executed by the plurality of data-processing devices respectively.

For example, by only once transmitting, to a microwave oven and a television as data-processing devices, a piece of operation data containing pieces of process-designating information respectively designating a process that is to be executed by the microwave oven (e.g., for cooking) and a process that is to be executed by the television (e.g., for obtaining a Web page containing a photo of a completed dish), it becomes possible, for example, to cause the microwave oven to perform cooking and, at the same time, cause the television to display the photo of the completed dish.

Therefore, the present invention brings about an effect of improving in operability and convenience for a user who uses an operation device to operate a data-processing device.

It should be noted that such a data-processing device may be realized by a computer. In this case, (i) a control program for such a data-processing device to be realized by a computer by causing the computer to function as each of the means and (ii) a computer-readable storage medium containing such a control program are also encompassed in the scope of the present invention.

### Advantageous Effects of Invention

As described above, a data-processing device according to the present invention includes: an executable process storage section having stored therein pieces of executable process information respectively indicating one or more processes that are able to be executed by the data-processing device; process-designating information obtaining means for obtaining, from the operation data thus received, pieces of process-designating information designating processes that are to be executed by the plurality of data-processing devices; and process executing means for, from among the processes indicated by the pieces of executable process information stored in the executable process storage section, executing a process that matches a process designated by a piece of process-designating information obtained by the process-designating information obtaining means.

Further, a method for controlling a data-processing device according to the present invention includes: a process-designating information obtaining step of obtaining, from the operation data thus received, pieces of process-designating information designating processes that are to be executed by the plurality of data-processing devices; and a process executing step of, from among the processes indicated by the pieces of executable process information stored in the executable process storage section, executing a process that matches a process designated by a piece of process-designating information obtained in the process-designating information obtaining step.

This allows the data-processing device according to the present invention to receive operation data containing process-designating information designating processes that are to be executed by the plurality of data-processing devices and execute only a process that can be executed by the data-processing device.

This allows a user of the operation device to, by simply transmitting a piece of operation data to the plurality of data-processing devices, cause the plurality of data-processing devices to execute processes that can be executed by the plurality of data-processing devices respectively.

Therefore, the present invention brings about an effect of improving in operability and convenience for a user who uses an operation device to operate a data-processing device.

Furthermore, a service provider who provides operation data needs only to provide the user with a piece of operation data containing plural pieces of process-designating information. That is, the service provider can create and provide a piece of operation data containing process-designating information designating the content of a process that is to be executed by a data-processing device and process-designating information designating the content of a process that is to be executed by another data-processing device.

Therefore, the present invention brings about an effect of saving the service provider the trouble of creating and managing operation data.

Additional objects, features, and strengths of the present invention will be made clear by the description below. Further, the advantages of the present invention will be evident from the following explanation in reference to the drawings.

### Brief Description of Drawings

Fig. 1

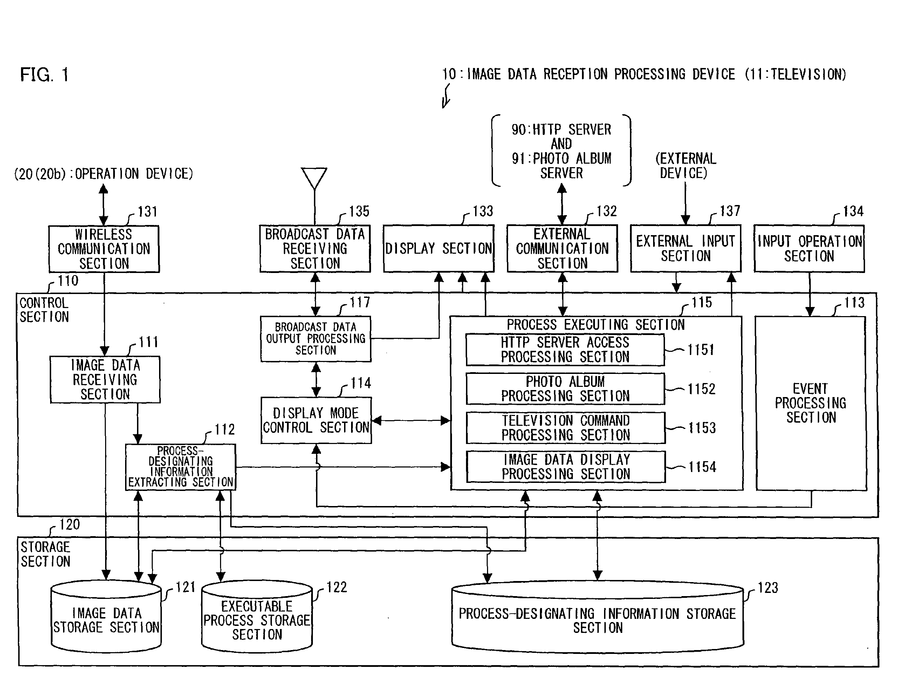

   Fig. 1 is a block diagram schematically showing a configuration of an image data reception processing device (television) according to an embodiment of the present invention.
Fig. 2

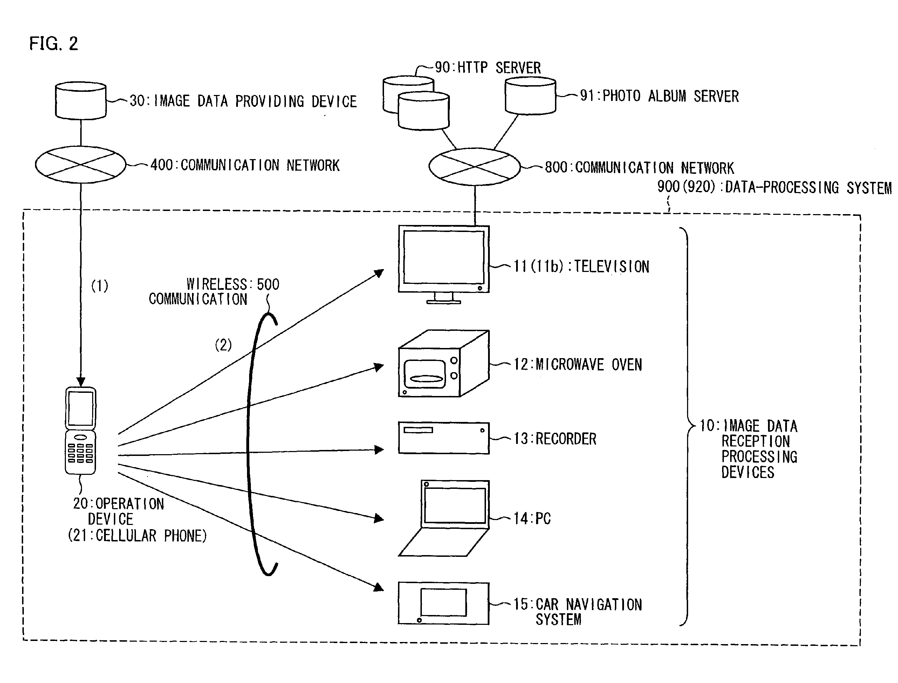

   Fig. 2 is a block diagram schematically showing: an image data providing device; a basic configuration of a data-processing system including an operation device and image data reception processing devices according to an embodiment of the present invention; and the flow of information that is transmitted between the image data providing device and the operation device and between the operation device and each of the image data reception processing devices.
Fig. 3

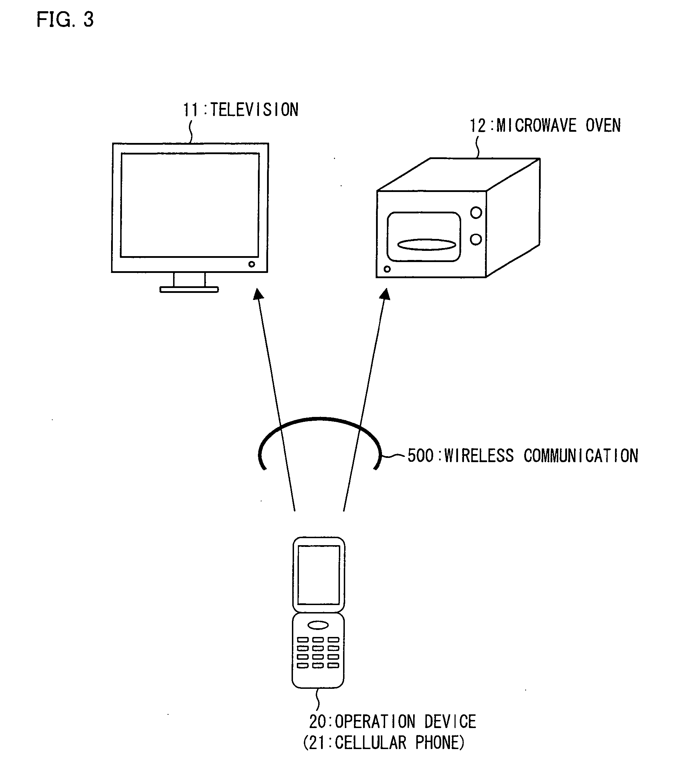

   Fig. 3 is a schematic view showing how the operation device (cellular phone) and the image data reception processing devices (television and microwave oven) included in the data-processing system shown in Fig. 2 are communicably disposed.
Fig. 4

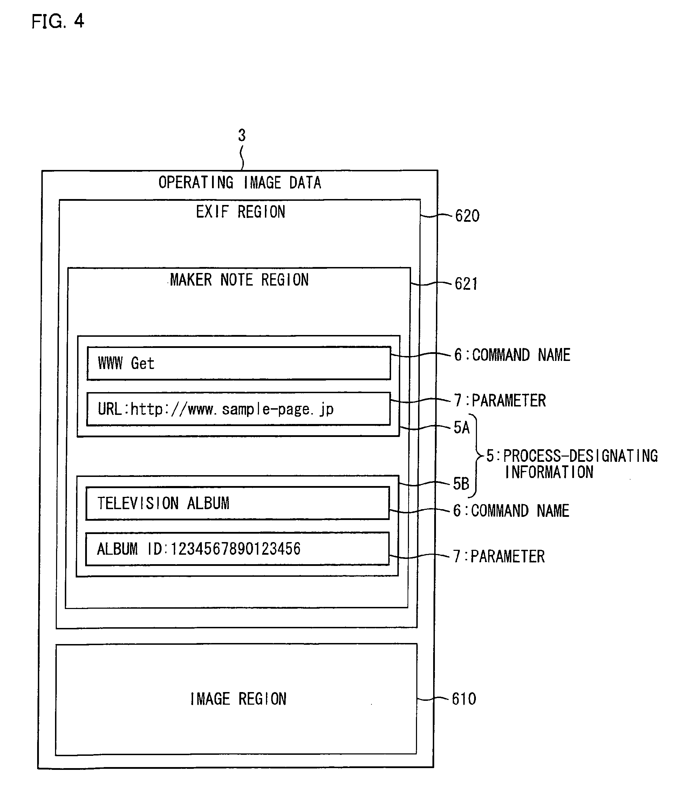

   Fig. 4 is a schematic view schematically showing a data structure of operating image data that is exchanged in the data-processing system shown in Fig. 2.
Fig. 5

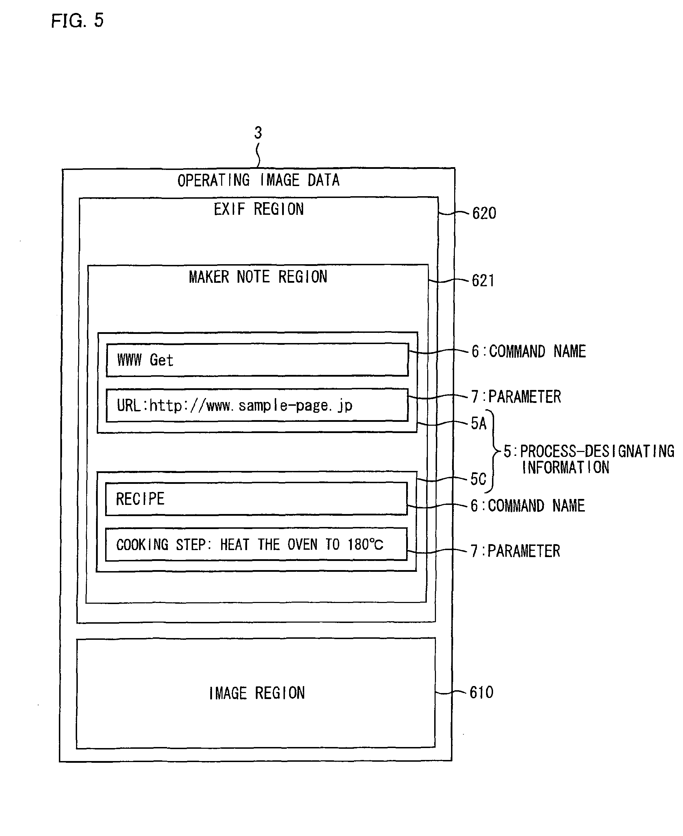

   Fig. 5 is a schematic view schematically showing another example of a data structure of operating image data that is exchanged in the data-processing system shown in Fig. 2.
Fig. 6

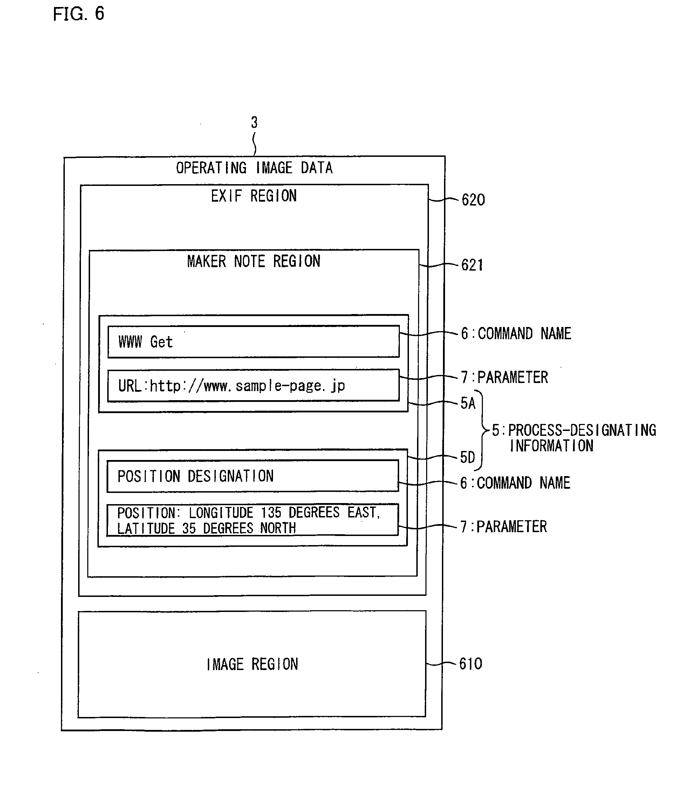

   Fig. 6 is a schematic view schematically showing another example of a data structure of operating image data that is exchanged in the data-processing system shown in Fig. 2.
Fig. 7

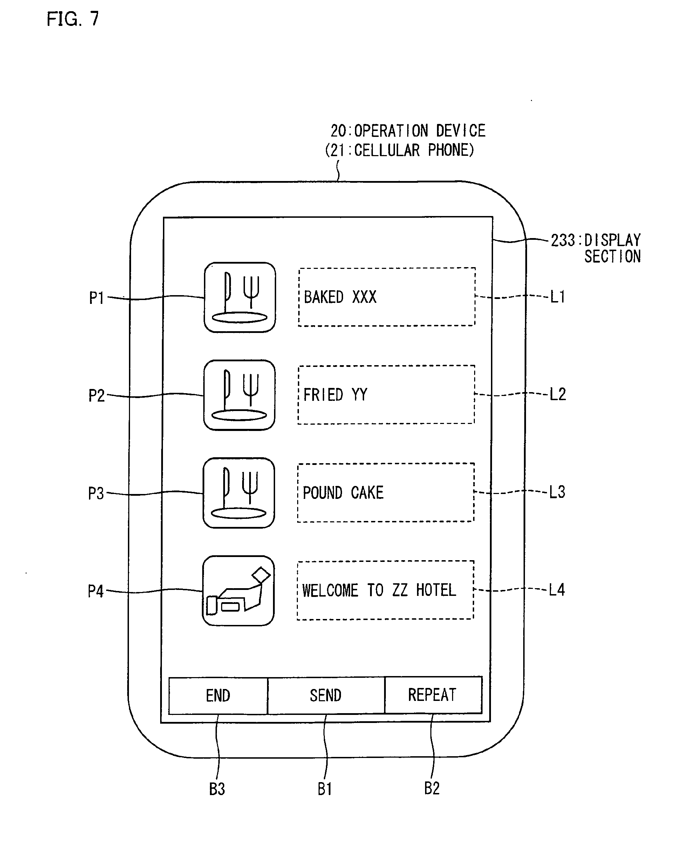

   Fig. 7 is a schematic view showing an example of a menu window, displayed in a display section of the operation device (cellular phone) included in the data-processing system shown in Fig. 2, for transmitting image data.
Fig. 8

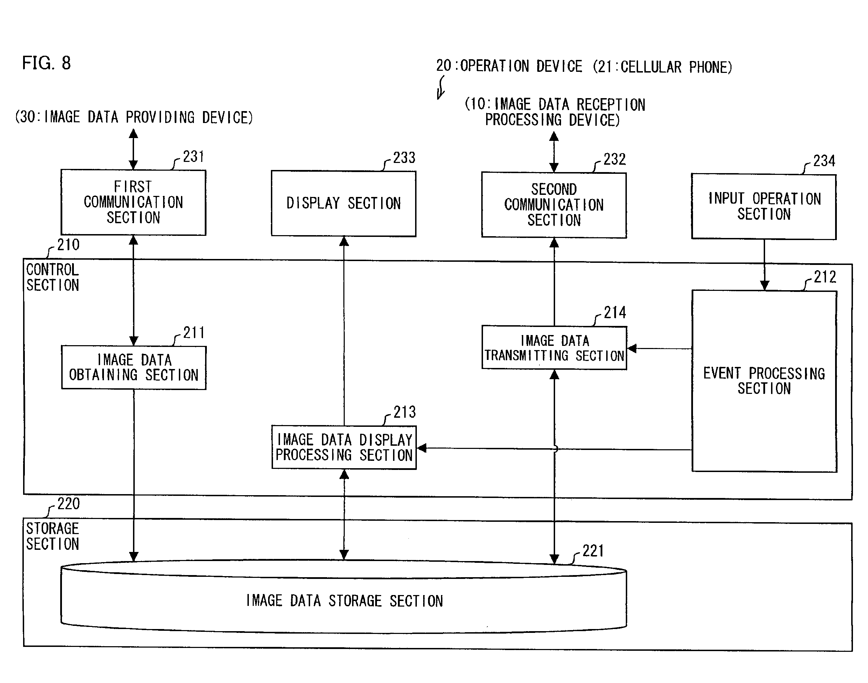

   Fig. 8 is a block diagram schematically showing a configuration of the operation device (cellular phone) included in the data-processing system shown in Fig. 2.
Fig. 9

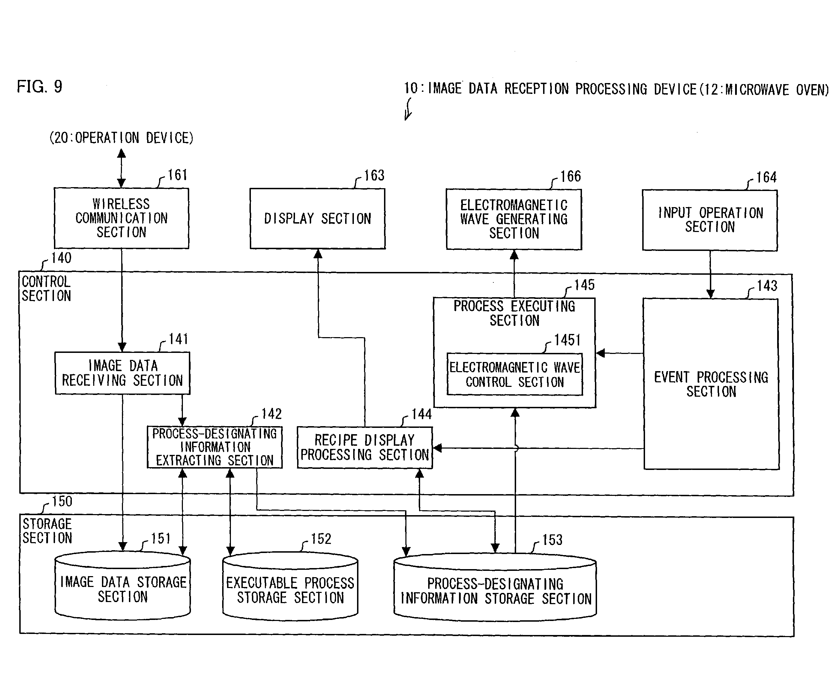

   Fig. 9 is a block diagram schematically showing a configuration of an image data reception processing device (microwave oven) according to an embodiment of the present invention.
Fig. 10

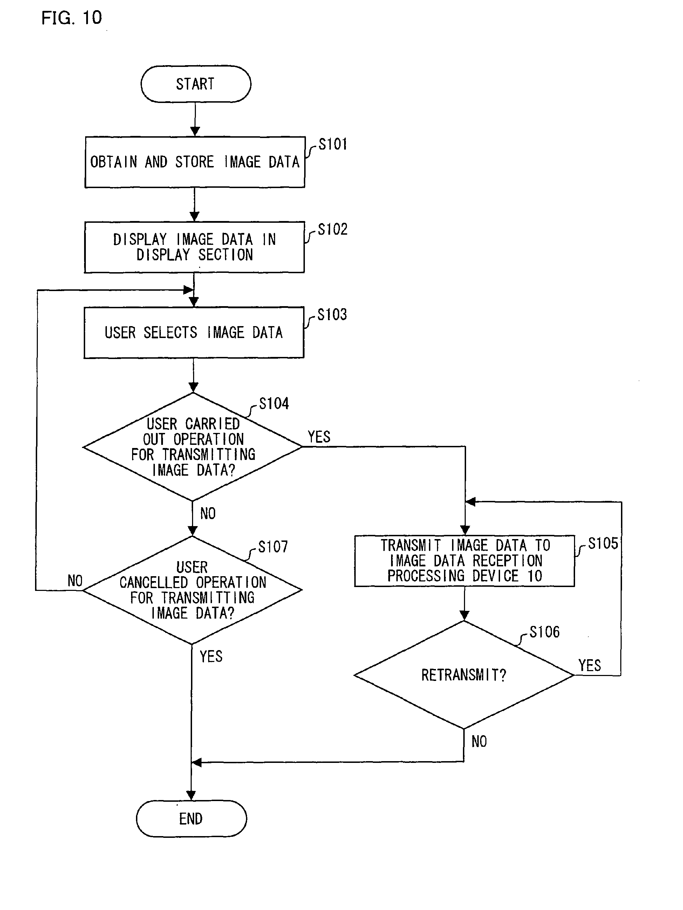

   Fig. 10 is a flow chart schematically showing a flow through which the operation device (cellular phone) shown in Fig. 8 receives image data from the image data providing device and transmits the image data to an image data reception processing device according to the present invention.
Fig. 11

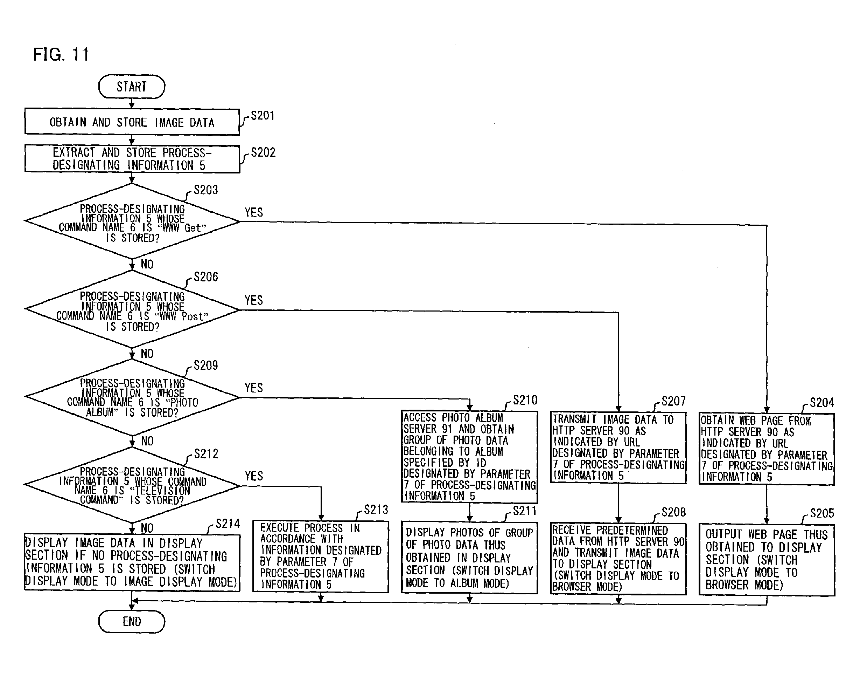

   Fig. 11 is a flow chart schematically showing the flow of a process that the image data reception processing device (television) shown in Fig. 1 performs upon receiving image data.
Fig. 12

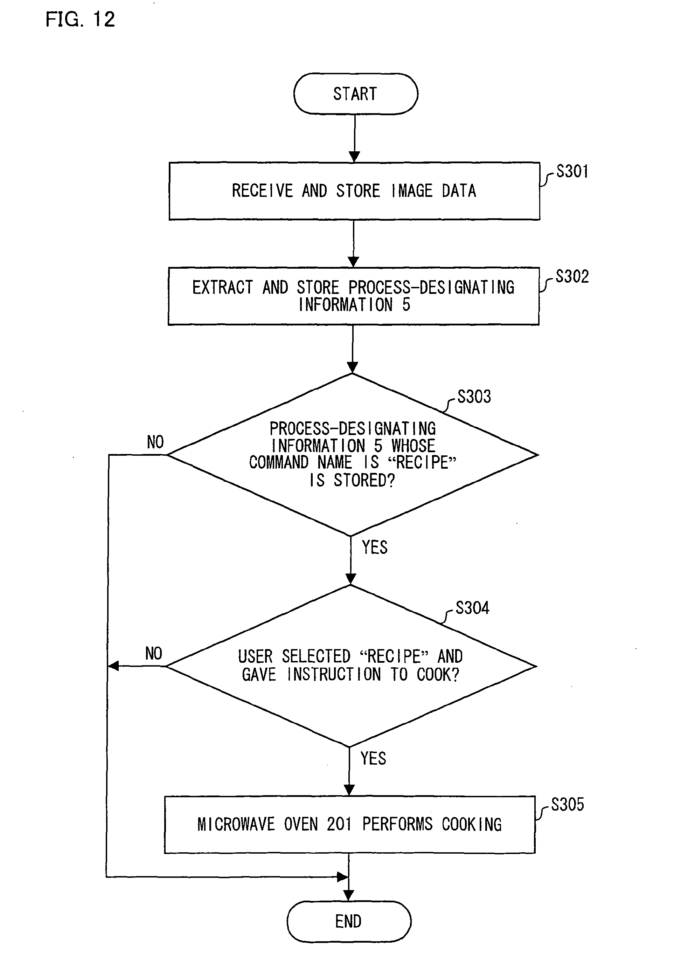

   Fig. 12 is a flow chart schematically showing the flow of a process that the image data reception processing device (microwave oven) shown in Fig. 9 performs upon receiving image data.
Fig. 13

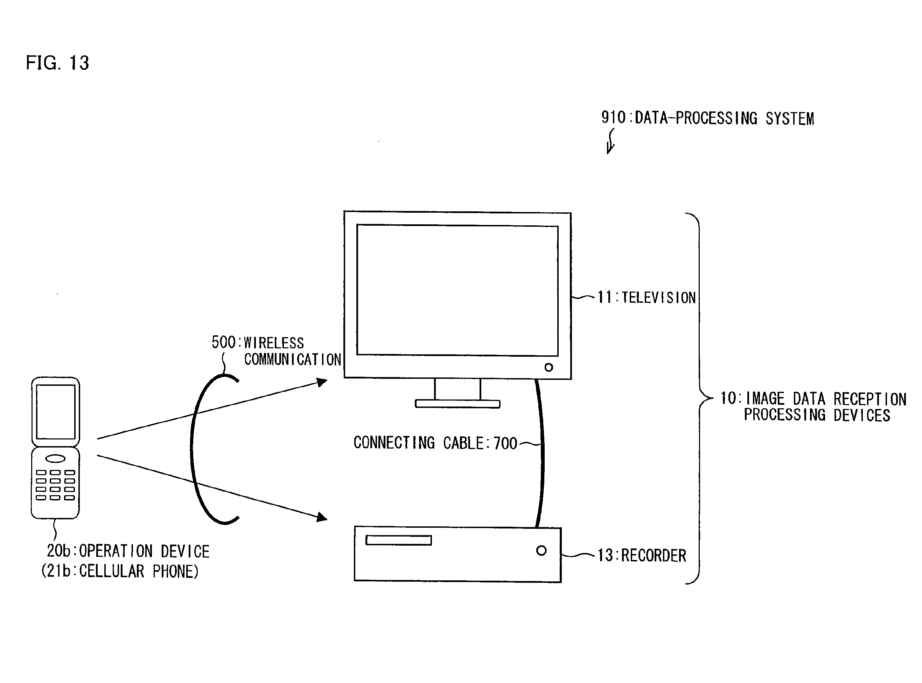

   Fig. 13 is a block diagram schematically showing: a basic configuration of a data-processing system including an operation device and image data reception processing devices according to another embodiment of the present invention; and the flow of information that is transmitted between the operation device and each of the image data reception processing devices and between the image data reception processing devices.
Fig. 14

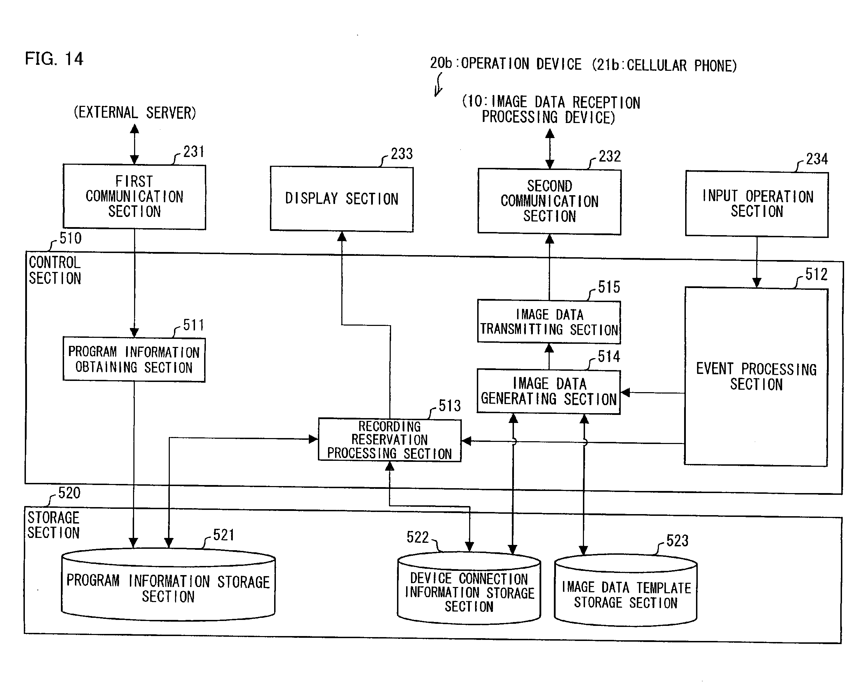

   Fig. 14 is a block diagram schematically showing a configuration of the operation device (cellular phone) included in the data-processing system shown in Fig. 13.
Fig. 15

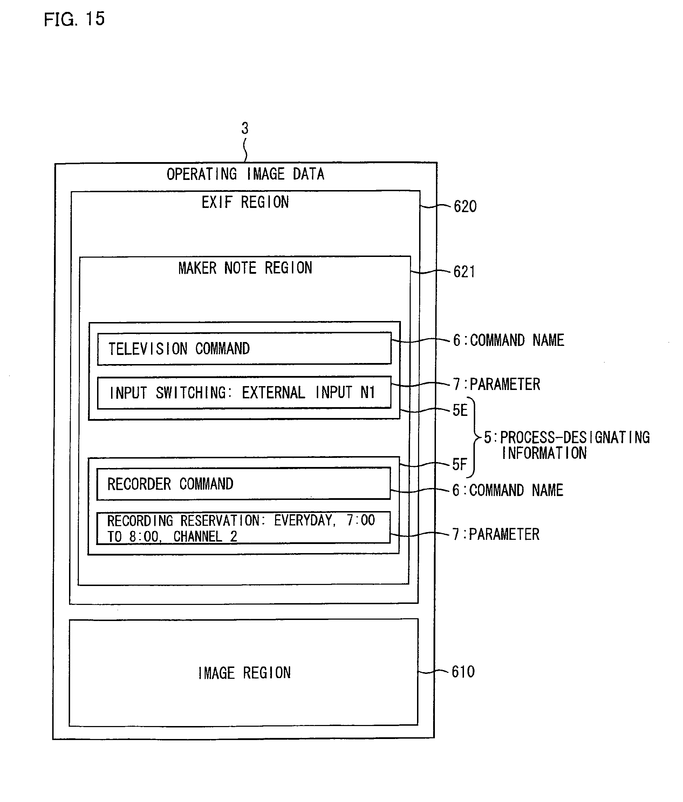

   Fig. 15 is a schematic view showing an example of operating image data that is generated by the operation device (cellular phone) shown in Fig. 14.
Fig. 16

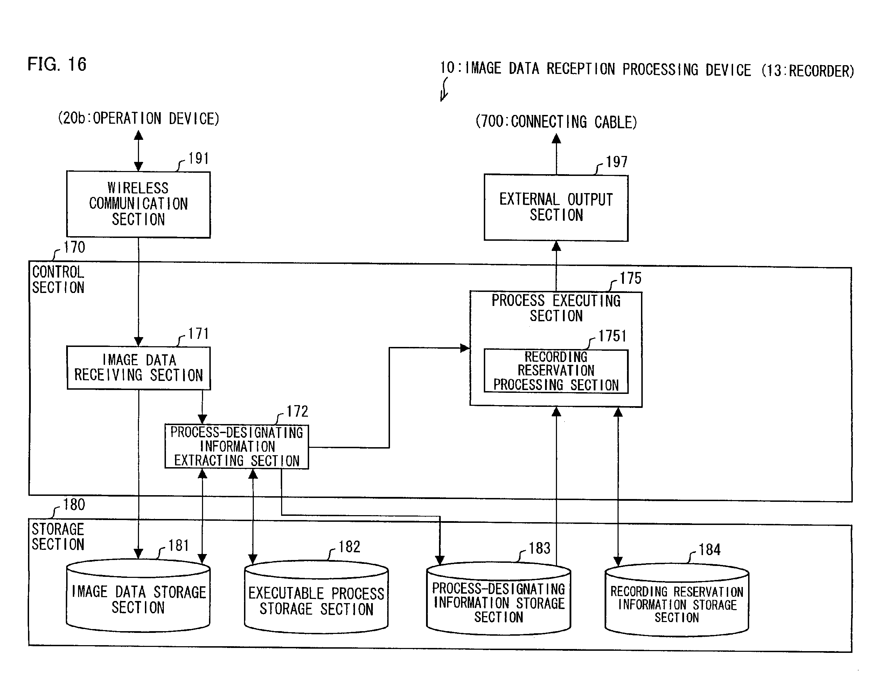

   Fig. 16 is a block diagram schematically showing a configuration of an image data reception processing device (recorder) according to another embodiment of the present invention.
Fig. 17

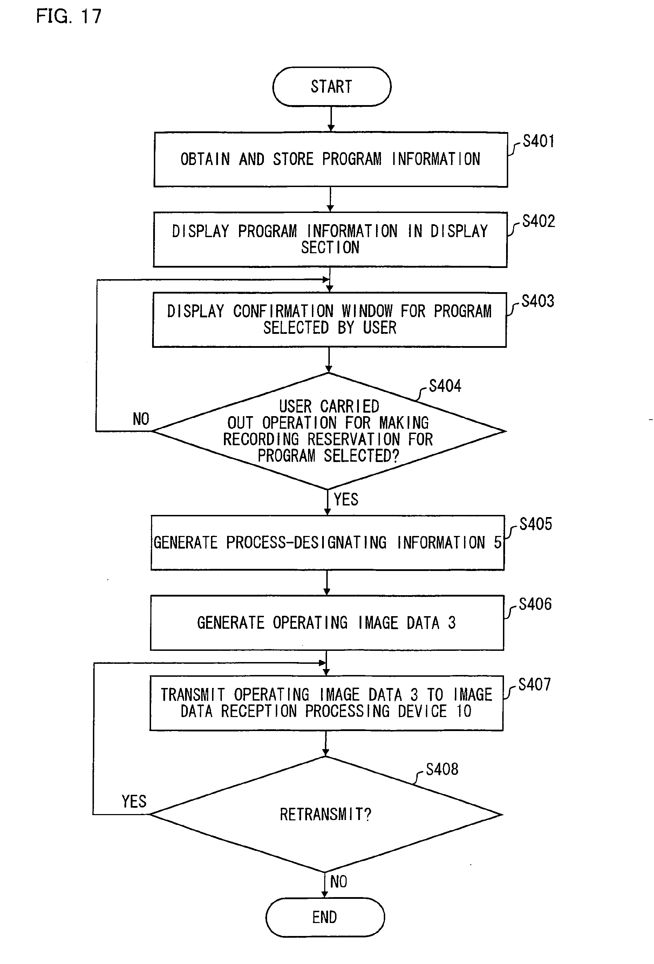

   Fig. 17 is a flow chart schematically showing a flow through which the operation device (cellular phone) shown in Fig. 14 generates operating image data 3 in accordance with program information and transmits the operating image data 3 to an image data reception processing device according to another embodiment of the present invention.
Fig. 18

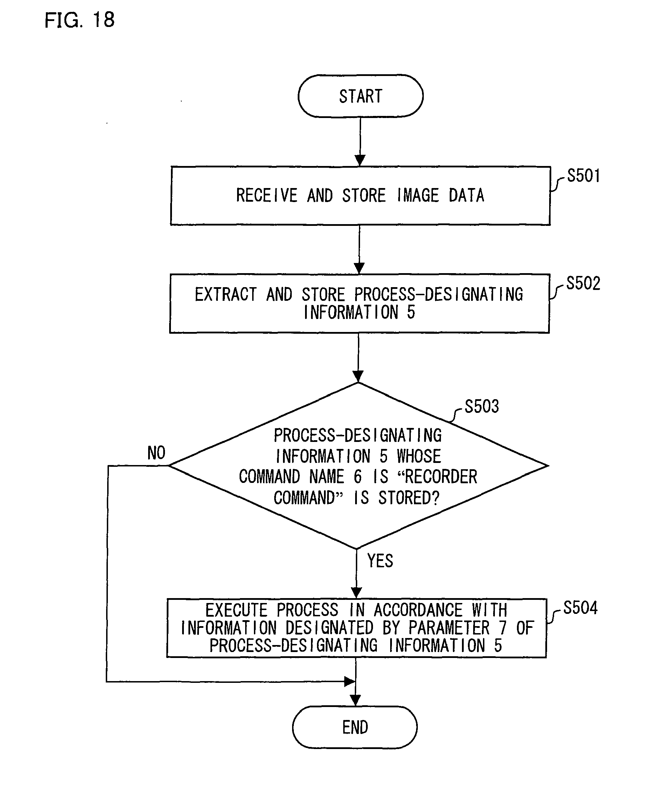

   Fig. 18 is a flow chart schematically showing the flow of a process that the image data reception processing device (recorder) shown in Fig. 16 performs upon receiving operating image data transmitted from the operation device (cellular phone) shown in Fig. 14.
Fig. 19

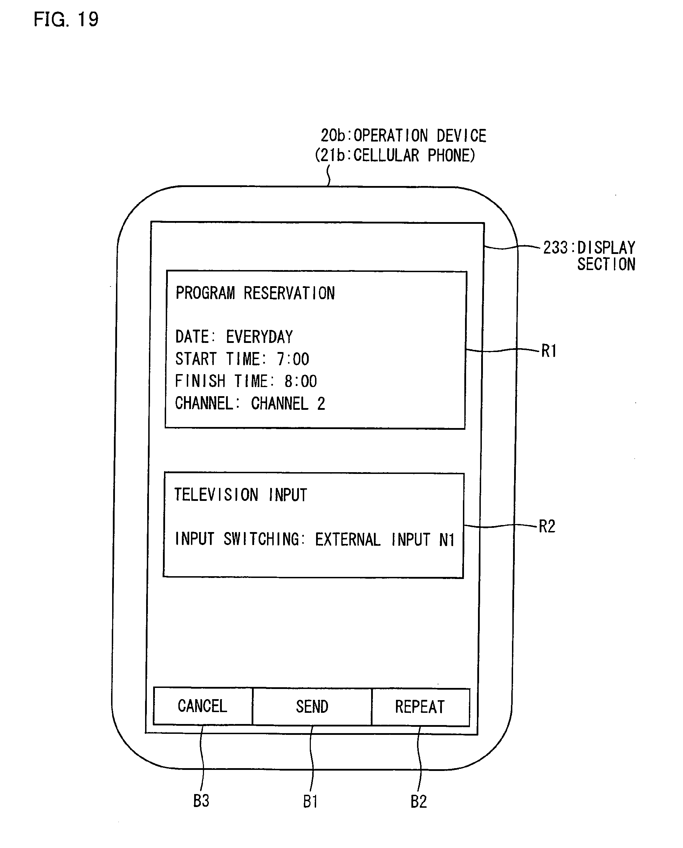

   Fig. 19 schematically shows an example of a window that the operation device (cellular phone) shown in Fig. 14 displays in its display section.
Fig. 20

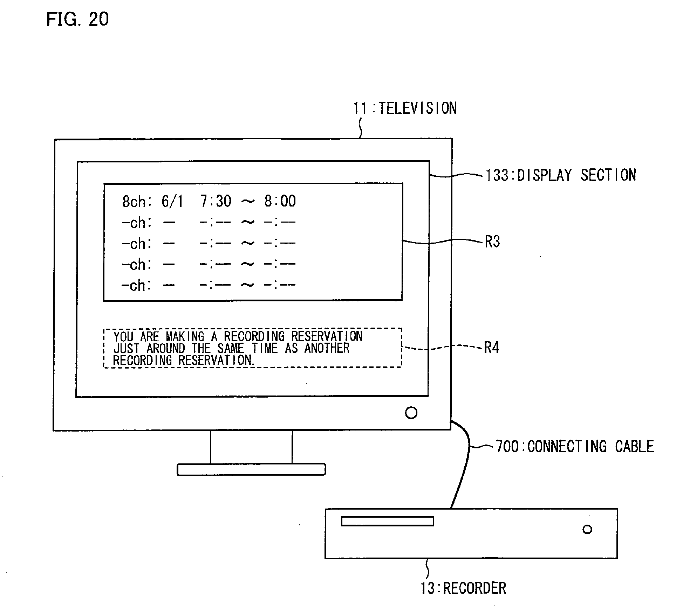

   Fig. 20 schematically shows an example of a window where the image data reception processing device (recorder) shown in Fig. 16 outputs the status of recording reservations and an error message indicating that a recording reservation cannot be made to a display section of another image data reception processing device (television).
Fig. 21

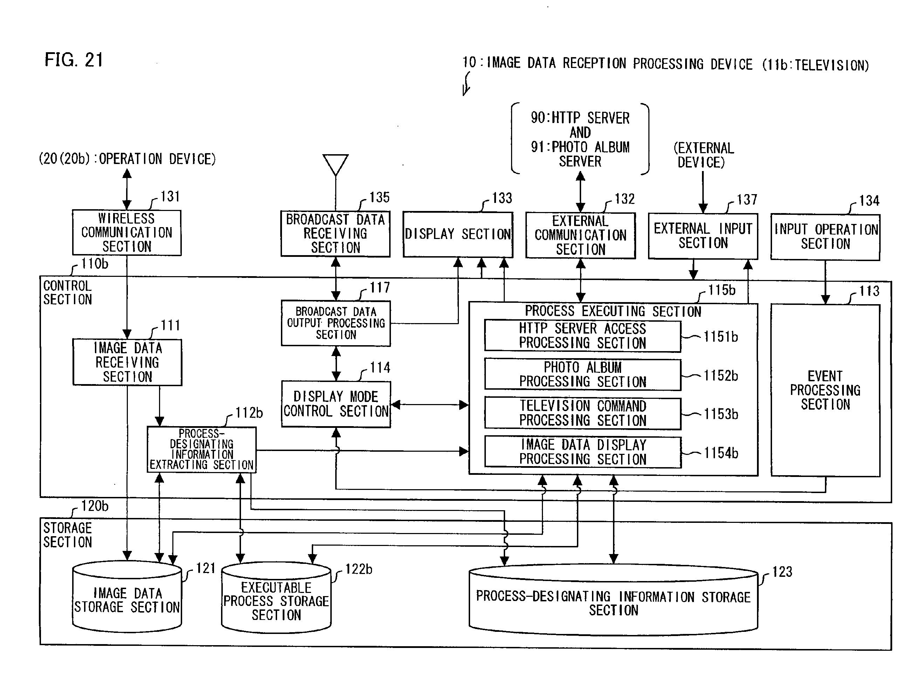

   Fig. 21 is a block diagram schematically showing a configuration of an image data reception processing device (television) according to another embodiment of the present invention.
Fig. 22

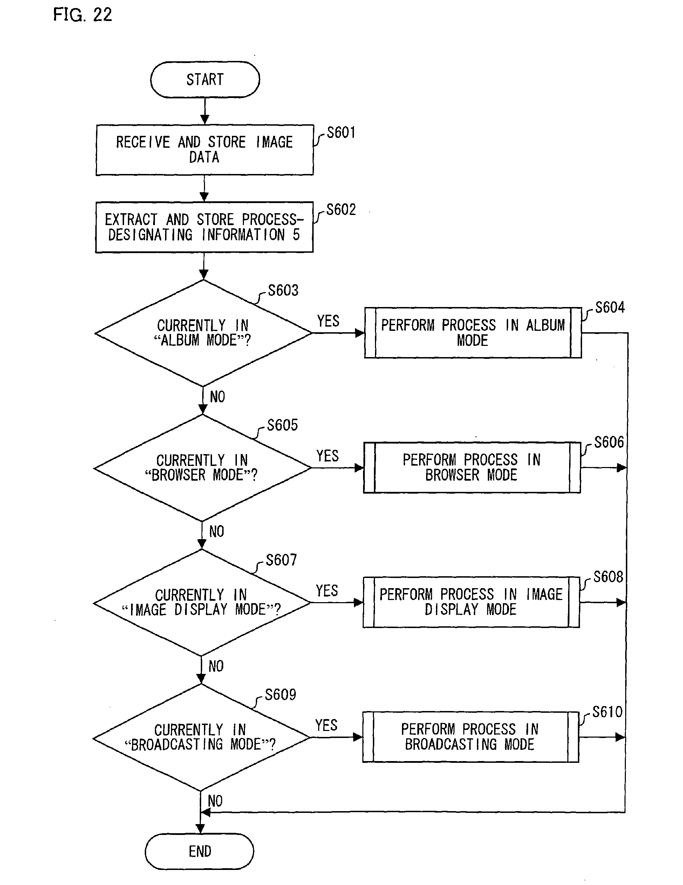

   Fig. 22 is a flow chart schematically showing the flow of a process that the image data reception processing device (television) shown in Fig. 21 performs upon receiving image data.
Fig. 23

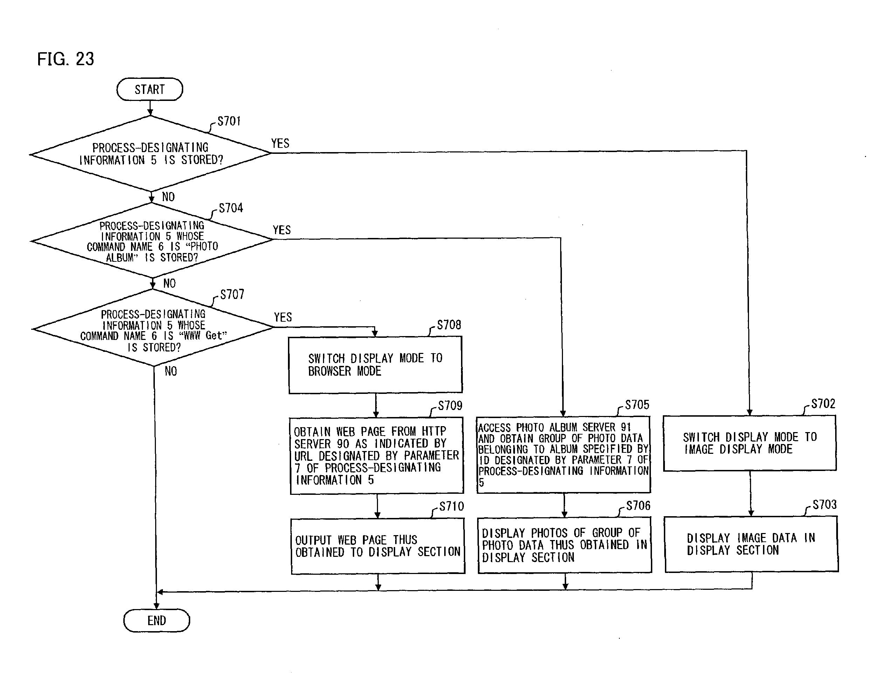

   Fig. 23 is a flow chart showing the flow of a process that the image data reception processing device (television) shown in Fig. 21 performs on receipt of image data in cases where the display mode of the image data reception processing device is an album mode.
Fig. 24

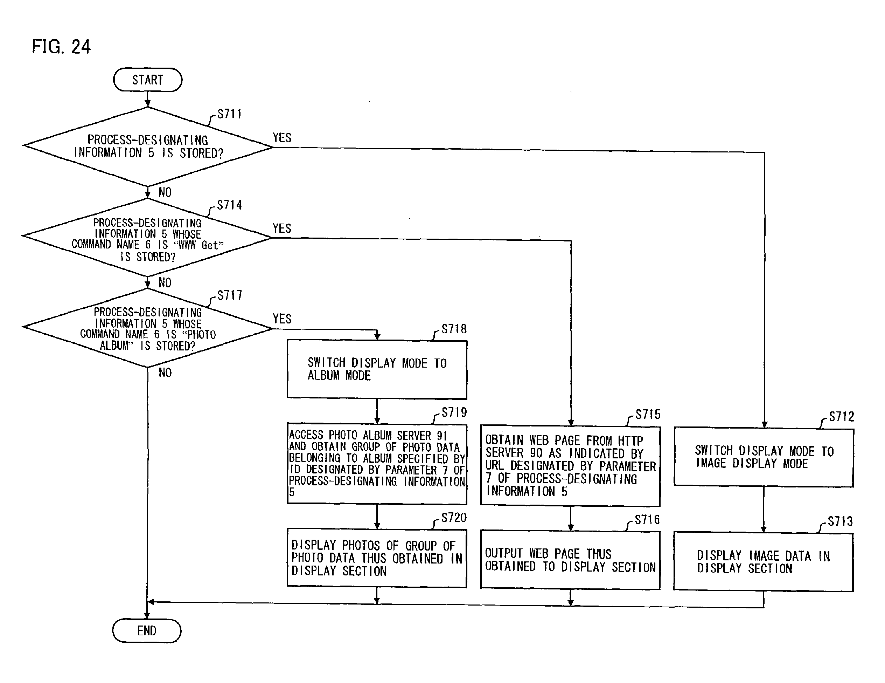

   Fig. 24 is a flow chart showing the flow of a process that the image data reception processing device (television) shown in Fig. 21 performs on receipt of image data in cases where the display mode of the image data reception processing device is a browser mode.
Fig. 25

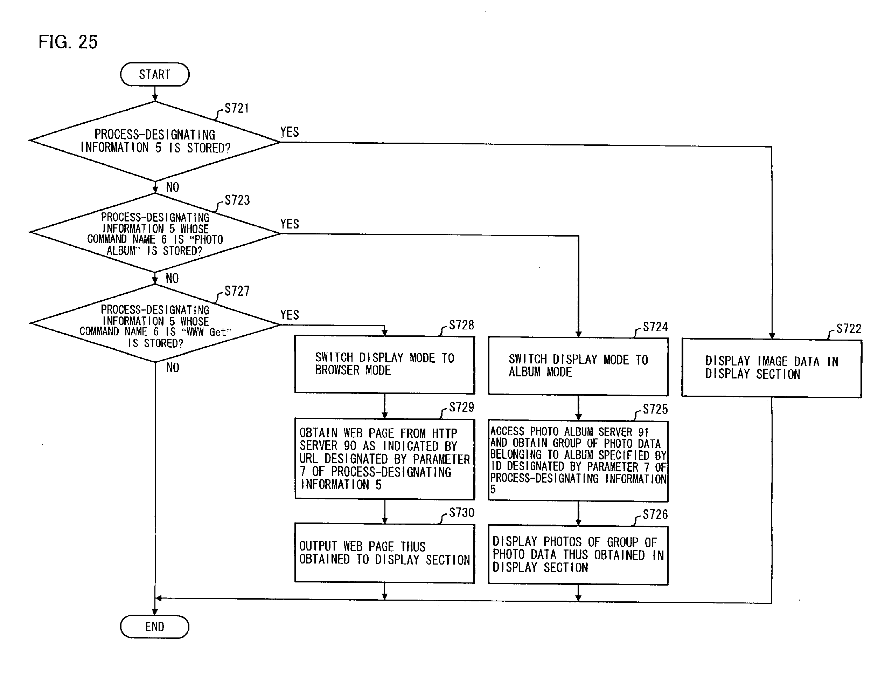

   Fig. 25 is a flow chart showing the flow of a process that the image data reception processing device (television) shown in Fig. 21 performs on receipt of image data in cases where the display mode of the image data reception processing device is an image display mode.
Fig. 26

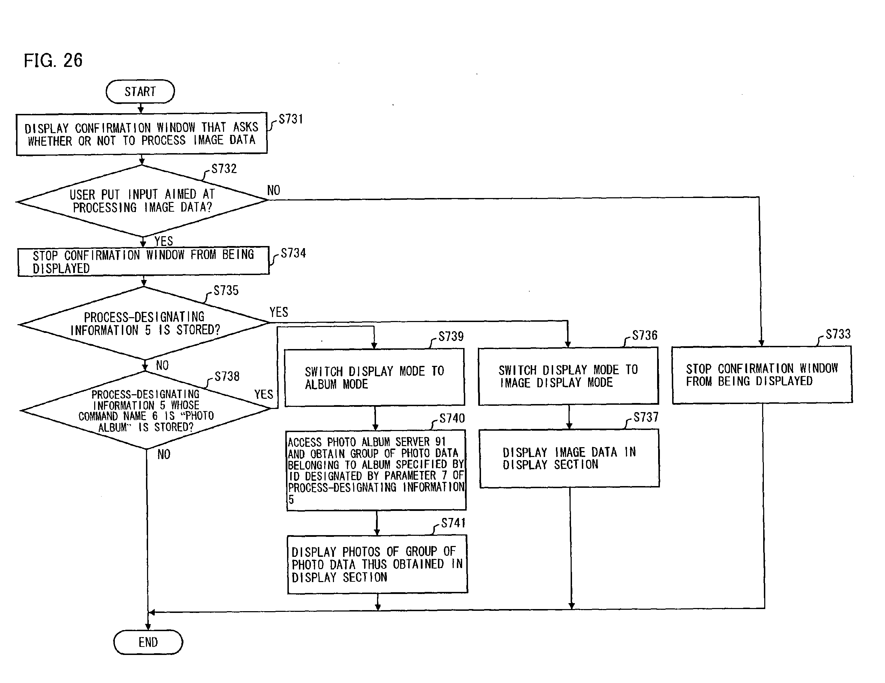

   Fig. 26 is a flow chart showing the flow of a process that the image data reception processing device (television) shown in Fig. 21 performs on receipt of image data in cases where the display mode of the image data reception processing device is a broadcasting mode.
Fig. 27

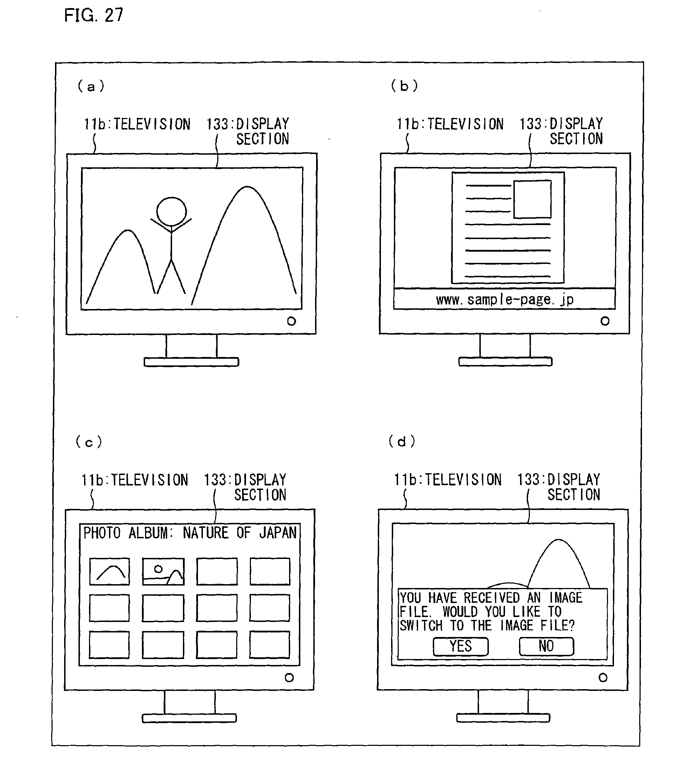

   Fig. 27 includes: (a) a diagram showing the appearance of image data, as displayed in a display section of the image data reception processing device (television) of Fig. 21 in the image display mode; (b) a diagram showing the appearance of a Web page obtained from an HTTP server, as displayed in the display section of the image data reception processing device (television) of Fig. 21 in the browser mode; (c) a diagram showing the appearance of a list of photos represented by a group of photo data obtained from a photo album server, as displayed in the display section of the image data reception processing device (television) of Fig. 21 in the album mode; and (d) a diagram showing the appearance of a confirmation window that asks the user whether or not to process the image data, as displayed in the display section of the image data reception processing device (television) of Fig. 21 in the broadcasting mode.

### Description of Embodiments

In each of the embodiments, operation data that a data-processing device according to the present invention receives from an operation device is described by taking image data as an example. The image data is in a general format such as a JPEG (Joint Photographic Experts Group) format and has such a data structure as to be able to contain process-designating information 5 designating a process/processes that is/are to be executed by one or more data-processing devices. In each of the embodiments, the term "operating image data 3" means image data containing process-designating information 5, and the term "displaying image data 4" means image data containing no process-designating information 5. A data structure of operating image data 3 and details of process-designating information 5 will be described later.

Further, in each of the embodiments, a data-processing device according to the present invention is described by taking as an example an image data reception processing device that receives image data as operation data and executes a process in accordance with the image data.

### [Embodiment 1]

An embodiment of the present invention is described below with reference to Figs. 1 through 12.

### (Configuration of a Data-processing System 900)

A basic configuration of a data-processing system 900 according to the present embodiment is described with reference to Fig. 2. Fig. 2 is a schematic view showing: a basic configuration of a data-processing system 900 including at least an operation device 20 and image data reception processing devices 10; and the flow of information that is transmitted between the operation device 20 and each of the image data reception processing devices 10.

It should be noted that Fig. 2 also shows an image data providing device 30 that is communicably connected to the operation device 20 and an HTTP (hypertext transfer protocol) server 90 and a photo album server 91 (which will be described later) that are communicably connected to a television receiver (hereinafter referred to as "television") 11, which is one of the image data reception processing devices 10.

### (Image Data Providing Device 30)

The image data providing device 30 is a server device that provides image data, and is a device owned by a service provider or the like who provides an image data delivery service. Moreover, the image data providing device 30 transmits image data to the operation device 20 through a communication network 400 (flow (1) shown in Fig. 2).

### (Operation Device 20)

The operation device 20 is a device owned by a user who enjoys the image data delivery service, and is a device for operating an image data reception processing device 10. For that purpose, the operation device 20 obtains image data provided by the image data providing device 30. Then, the operation device 20 transmits the image data thus received to one or more image data reception processing devices 10 through wireless communication 500 or the like with the user's operation or the like as a trigger (flow (2) shown in Fig. 2).

Examples of the operation device 20 include a PDA (personal digital assistant), a PHS (personal handy phone system), a laptop PC (personal computer), etc. In the present embodiment, the operation device 20 is described, in particular, by taking a cellular phone 21 as an example. As such, the cellular phone 21 has at least an image data transmitting function of transmitting image data, in addition to a basic function as a cellular phone, for example, of making or receiving a voice call to or from another cellular phone. It should be noted that the cellular phone 21 is supposed to be usually owned by a user who is in close proximity to an image data reception processing device 10.

### (Image Data Reception Processing Device 10)

Each of the image data reception processing devices 10 is a device owned by the user who enjoys the image data delivery service, and is a device for executing various type of processing in accordance with image data transmitted from the operation device 20. For that purpose, the image data reception processing device 10 receives image data transmitted from the operation device 20. Then, in cases where the image data thus received contains process-designating information 5 (i.e., in cases where the image data thus received is operating image data 3), the image data reception processing device 10 extracts the process-designating information 5 contained in the image data thus received and executes a process according to the process-designating information 5 thus extracted.

As will be described later, the operating image data 3 may contain one or more pieces of process-designating information 5. Moreover, it is one of the features of the present invention that the image data reception processing device 10 determines whether or not a command identified by a command name 6 (which will be described later) of the process-designating information 5 extracted from the operating image data 3 can be executed by the image data reception processing device 10, thereby executing only a command that can be executed by the image data reception processing device 10.

Examples of the image data reception processing devices 10 include a television 11, a microwave oven 12, a recorder 13 capable of recording a video signal, a PC 14, a car navigation system 15, etc. In the present embodiment, the image data reception processing devices 10 are described, in particular, by taking the television 11 and the microwave oven 12 as examples. As such, the television 11 has at least an image data receiving function of receiving image data, in addition to a basic function as a television receiver, for example, of receiving and displaying a television broadcast. Similarly, the microwave oven 12 has at least an image data receiving function of receiving image data, in addition to a basic function as a microwave oven, for example, of cooking food or the like by generating electromagnetic waves. It should be noted that the television 11 and the microwave oven 12 are supposed to be usually installed in the user's home.

Further, the image data reception processing devices 10 may be communicably connected to an external server device through a communication network. In the example shown in Fig. 2, the television 11 is connected to the HTTP server 90, which provides a predetermined Web page, and the photo album server 91, which classifies photo data into a plurality of albums for management and provides the albums, through a communication network 800 such as the Internet.

### (Communication between the Devices)

The image data providing device 30 and the operation device 20 are communicably connected to each other through the communication network 400 in order to exchange image data with each other. In the present embodiment, in which the operation device 20 is a cellular phone 21, the communication network 400 is supposed to be a cellular phone network 401. Therefore, transmission of image data to the cellular phone 21 is carried out, for example, by attaching the image data to an e-mail that is transmitted from the image data providing device 30 through the cellular phone network 401 or by downloading the image data from the image data providing device 30, which functions as an HTTP server.

Further, the operation device 20 and each of the image data reception processing devices 10 are communicably connected to each other, for example, through the wireless communication 500 in order to exchange image data with each other. Exchange of image data can be suitably carried out, for example, according to a high-speed infrared communication protocol such as IrSimple (Registered Trademark) (hereinafter referred to as "IrSimple") or a short-distance wireless communication protocol such as Bluetooth (Registered Trademark) (hereinafter referred to as "Bluetooth"). In particular, in the case of use of IrSS (Registered Trademark) (hereinafter referred to as "IrSS"), which does not require a response from a reception processing device, image data can be transferred to a plurality of devices at the same time. This enables the operation device 20 to transfer image data to the image data reception processing devices 10 instantaneously.

It should be noted that if it is not necessary to consider a degradation in usability due to connecting means through which the operation device 20 is connected to each of the image data reception processing devices 10, it is possible to connect the operation device 20 to each of the image data reception processing devices 10 through connecting means such as a conducting wire or a fiber-optic cable instead of the wireless communication 500 and transfer image data through cable communication using the connecting means.

It should be noted that the following description assumes that the television 11 and the microwave oven 12, which are image data reception processing devices 10, can receive image data from the cellular phone 21, which is an operation device 20, through the wireless communication 500 according to an infrared communication protocol (e.g., IrSimple or IrSS). The way in which the cellular phone 21 and the television 11 and microwave oven 12 are communicably disposed is described with reference to Fig. 3. Fig. 3 is a schematic view showing how the cellular phone 21 and the television 11 and microwave oven 12 are communicably disposed. As shown in Fig. 3, the television 11 and the microwave oven 12 are supposed, for example, to be disposed side by side in a kitchen or elsewhere in the user's home. In this case, as long as the cellular phone 21 and the television 11 and microwave oven 12 are positioned to be able to communicate with each other according to the IrSS protocol, both the television 11 and the microwave oven 12 can simultaneously receive image data transmitted from the cellular phone 21. Moreover, in cases where the image data thus received contains process-designating information 5, the television 11 and the microwave oven 12 each extract the process-designating information 5 and execute only a command that can be executed by the device.

### (Operating Image Data 3)

As described above, image data that is exchanged in the data-processing system 900 is either operating image data 3 or displaying image data 4. A data structure of operating image data 3 is described here with reference to Fig. 4. Fig. 4 is a schematic view schematically showing a data structure of operating image data 3. Schematically speaking, as shown in Fig. 4, the operating image data 3 is JPEG-format image data including an image region 610 and an EXIF region 620.

The image region 610 is a region in which an image such as a photo is stored in compressed form. On the other hand, the EXIF region 620 is a region in which meta-information concerning image information stored in the image region 610 and the like are mainly stored.

The EXIF region 620 includes a maker note region 621 whose specification can be changed for use by a provider who provides a service of delivery of the operating image data 3. Moreover, it is possible to store one or more pieces of process-designating information 5 in the maker note region 621. Process-designating information 5 may be stored in any part of the maker note region 621. In the example shown in Fig. 4, two pieces of process-designating information 5 (process-designating information 5A and process-designating information 5B) are stored.

It should be noted that the image region 610 may have stored therein an image representing the content of a process designated by process-designating information 5 stored in the maker note region 621. Thus, in cases where the operation device 20 displays operating image data 3 in its display section, the user can view the content of a process that can be executed by an image data reception processing device 10 that has received the operating image data 3. This allows the user to judge whether or not to transmit the operating image data 3 to the image data reception processing device 10.

It should be noted that a data structure of displaying image data 4 is such that in the data structure shown in Fig. 4, the maker note region 621 does not contain process-designating information 5, and as such, is not described here.

### (Process-designating Information 5)

Process-designating information 5 is composed of a command name 6 and a parameter 7. The command name 6 is the name of a command that designates a process that is to be executed by an image data reception processing device 10, and the parameter 7 is a parameter for the command. Depending on commands, there does not need to be a parameter 7. Further, it is possible to use a code capable of identifying a command, instead of using a command name 6.

In the example shown in Fig. 4, the process-designating information 5A is composed of a command name 6 "WWW Get" and a parameter 7 "URL: http://www.sample-page.jp". As will be described later, the process-designating information 5A is a command to obtain a Web page from the HTTP server 90 as indicated by the URL (uniform resource locator) designated by the parameter 7. Further, the process-designating information 5B is composed of a command 6 "PHOTO ALBUM" and a parameter 7 "ALBUM ID: 1234567890123456". As will be described later, the process-designating information 5B is a command to access the photo album server 91, which classifies photo data into a plurality of albums for management, obtain a group of photo data belonging to an album specified by the ID (1234567890123456) designated by the parameter 7, and display a list or slide show of photos of the group of photo data thus obtained.

Examples of command names 6 are listed in Table 1 below. Table 1 shows command names 6 and the content of processes that an image data reception processing device 10 executes according to the command names 6, respectively.

**[Table 1]**

| Command Names | Content of Processes |
|---|---|
| WWW Get | Obtain a Web page from the HTTP server 90 as indicated by the URL designated by the parameter 7 and display the Web page. |
| WWW Post | Transmit operating image data 3 to the HTTP server 90 as indicated by the URL designated by the parameter 7. |
| Photo Album | Access the photo album server 91, obtain a group of photo data belonging to an album specified by the ID designated by the parameter 7, and display photos of the group of photo data thus obtained. |
| Television Command | Control an ordinary function of the television in accordance with information designated by the parameter 7. |
| Recorder Command | Control an ordinary function of the recorder in accordance with information designated by the parameter 7. |
| Recipe | Perform cooking in accordance with recipe data designated by the parameter 7. |
| Position Designation | Perform navigation or the like by using, as a destination, position information designated by the parameter 7. |
| Health Data | Perform display or the like of health data (such as height, weight, body temperature, and blood pressure). |

"WWW Get" is a command that can be executed by a device mounted with a Web function (e.g., the television 11 or the PC 104). Upon receiving this command, the device obtains a Web page from the HTTP server 90 as indicated by the parameter 7 and displays the Web page in its display section.

"WWW Post" is a command that can be executed by a device mounted with a Web function (e.g., the television 11 or the PC 104). Upon receiving this command, the device transmits operating image data 3 to the HTTP server 90 as indicated by the URL designated by the parameter 7. In the case of return of predetermined data as a response from the HTTP server 90, the device receives the predetermined data and displays the predetermined data in its display section.

"Photo Album" is a command that can be executed by the television 11. Upon receiving this command, the television 11 accesses the photo album server 91, which classifies photo data into a plurality of albums for management, obtains a group of photo data belonging to an album specified by the ID designated by the parameter 7, and then displays in its display section a list or slide show of photos of the group of photo data thus obtained.

"Television Command" is a command that can be executed by the television 11. Upon receiving this command, the television 11 controls itself in accordance with information designated by the parameter 7. For example, when the information designated by the parameter 7 is aimed at switching external inputs on the television 11, the television 11, which has received this command, switches its external inputs in accordance with the information designated by the parameter 7.

"Recorder Command" is a command that can be executed by the recorder 13. Upon receiving this command, the recorder 13 controls itself in accordance with information designated by the parameter 7. For example, when the information designated by the parameter 7 is aimed at making a recording reservation for a television program in a predetermined period of time, the television 11, which has received this command, makes a recording reservation for a television program in accordance with the information designated by the parameter 7.

"Recipe" is a command that can be executed by a cooking device such as the microwave oven 12. Upon receiving this command, the device stores therein recipe data designated by the parameter 7 and performs cooking according to the recipe data as instructed by the user.

"Position Designation" is a command that can be executed by a device, such as the car navigation system 15, which uses position information. Upon receiving this command, the car navigation system 15, for example, starts navigation after setting, as a destination, position information designated by the parameter 7.

"Health Data" is a command that can be executed by a device such as a PC and a cellular phone. Upon receiving this command, the device receives data from a bathroom scale, a thermometer, a blood-pressure meter, etc. (not shown) connected to the device. Then, the device stores therein the data thus received, displays the data thus received in an easy-to-understand manner, or displays indicator-of-health information according to the data thus received.

### (Other Examples of Operating Image Data)

Other examples of operating image data 3 are described below with reference to Figs. 5 and 6. Figs. 5 and 6 are each a schematic view showing another example of a data structure of operating image data 3.

The operating image data 3 shown in Fig. 5 is an example of image data containing the "WWW Get" command, which can be executed by the television 11 but cannot be executed by the microwave oven 12, and the "Recipe" command, which can be executed by the microwave oven 12 but cannot be executed by the television 11. This image data has two pieces of process-designating information 5 (process-designating information 5A and process-designating information 5C) stored therein. As has been mentioned, the process-designating information 5A is a command to obtain a Web page from the HTTP server 90 (http://www.sample-page.jp) as indicated by the parameter 7. Further, the process-designating information 5C is composed of a command name 6 "RECIPE" and a parameter 7 "COOKING STEP: HEAT THE OVEN TO 180°C". This process-designating information 5C is a command to perform cooking in accordance with the cooking step designated by the parameter 7.

Therefore, in cases where the service provider or the like who provides the image data delivery service prepares a photo of a completed dish as a Web page in the HTTP server 90 (http://www.sample-page.jp) and provides the operating image data 3 shown in Fig. 5 for a user who owns such a television 11 and a microwave oven 12 as shown in Fig. 3, there is an increase in the user's convenience. This is because if the user transmits the operating image data 3 shown in Fig. 5 from the cellular phone 21, which is an operation device 20, to the television 11 and the microwave oven 12, the user can perform cooking with the microwave oven 12 and, at the same time, view the photo of the completed dish on the television 11.

The operating image data 3 shown in Fig. 6 is an example of image data containing the "WWW Get" command, which can be executed by the television 11 but cannot be executed by the car navigation system 15, and the "Position Designation" command, which can be executed by the car navigation system 15 but cannot be executed by the television 11. This image data has two pieces of process-designating information 5 (process-designating information 5A and process-designating information 5D) stored therein. As has been mentioned, the process-designating information 5A is a command to obtain a Web page from the HTTP server 90 (http://www.sample-page.jp) as indicated by the parameter 7. Further, the process-designating information 5D is composed of a command name 6 "POSITION DESIGNATION" and a parameter 7 "POSITION: LONGITUDE 135 DEGREES EAST, LATITUDE 35 DEGREES NORTH". This process-designating information 5D is a command to execute a process such as navigation or route searching in accordance with the position indicated by the longitude and latitude designated by the parameter 7.

Therefore, when the operating image data 3 shown in Fig. 6 is transmitted from the cellular phone 21, which is an operation device 20, to the television 11, the television 11 executes the command "WWW Get", which can be executed by the television 11, obtains information such as tourist information from the HTTP server 90 as indicated by the URL designated by the parameter 7 of "WWW Get", and displays the information. It should be noted that the television 11 does not execute a process designated by the "Position Designation" command.

On the other hand, when the operating image data 3 shown in Fig. 6 is transmitted from the cellular phone 21, which is an operation device 20, to the car navigation system 15, the car navigation system 15 executes a process designated only by the "Position Designation" command, which can be executed by the car navigation system 15, and, for example, performs navigation, route searching, or the like by using as a destination a position designated by the parameter 7 of "Position Designation". It should be noted that the car navigation system 15 does not execute the "WWW Get" command.

An example of a menu window, displayed in the display section of the cellular phone 21, for transmitting image data is described here with reference to Fig. 7. Fig. 7 is a schematic view showing an example of a menu window, displayed in the display section 233 (which will be described later) of the cellular phone 21, for transmitting image data.

The window has pictures P1 to P4 displayed in its left side. Each of the pictures P1 to P4 is an image stored in the image region 610 of image data that is to be transmitted, and expresses the content of a process designated by process-designating information 5. For example, each of the pictures P1 to P3 indicates that the content of a process designated by process-designating information 5 relates to cooking. Further, the picture P4 indicates that the content of a process designated by process-designating information 5 relates to position information. It is desirable that each of these images be in the form of an icon, for example, so that that the user can easily understand what the process designated by the process-designating information 5 is like.

Further displayed side by side on the right side of the pictures P1 to P4 respectively are letter strings L1 to L4 each of which serves, for example, as a file name of image data that is to be transmitted and shows the user an outline of the image data. It should be noted that the file name displayed may be a name assigned by a service provider who provides the image data or a name created by the cellular phone 21 user's changing the name assigned by the service provider.

The example shown in Fig. 7 assumes that the image data indicated by the picture P2 and the letter string L2 is image data containing the process-designating information 5C shown in Fig. 5 and that the image data indicated by the picture P4 and the letter string L4 is image data containing the process-designating information 5D shown in Fig. 6.

When the user of the cellular phone 21 carries out an operation for opening a menu window for transmitting image data to the image data reception processing devices 10, the cellular phone 21 displays a window in its display section 233 as shown in Fig. 7. Then, when the user of the cellular phone 21 selects the picture P2 and presses the send button B1 in a position that can be communicated with both the television 11 and the microwave oven 12, which are disposed as shown in Fig. 3, the cellular phone 21 transmits the image data to both the television 11 and the microwave oven 12 at the same time. Then, upon receiving the image data, the television 11 executes the "WWW Get" command, which can be executed by the television 11, and obtains a Web page from the HTTP server 90 as indicated by the URL designated by the parameter 7 of "WWW Get". Meanwhile, upon receiving the image data, the microwave oven 12 performs cooking, as instructed by the user, in accordance with the "Recipe" command, which can be executed by the microwave oven 12.

### (Configuration of the Cellular Phone 21)

A configuration of the cellular phone 21, which is an operation device 20, is schematically described below with reference to Fig. 8. Fig. 8 is a block diagram schematically showing a configuration of the cellular phone 21. It should be noted that the configuration shown in Fig. 8 is merely an example, and the configuration of the operation device 20 is not limited to that shown in Fig. 8.

As shown in Fig. 8, the cellular phone 21 includes a control section 210, a storage section 220, a first communication section 231, a second communication section 232, a display section 233, and an input operation section 234.

The control section 210 controls the storage section 220, the first communication section 231, the second communication section 232, the display section 233, and the input operation section 234, and also executes predetermined arithmetic processing. Examples of the predetermined arithmetic processing include reception processing of image data from the image data providing device 30, etc. The control section 210 can be constituted, for example, by a CPU (central processing unit), etc. A configuration of the control section 210 will be described in detail later.

The storage section 220 serves to store therein various types of data that are used in the control section 210 and data obtained by execution of programs, and is realized by a volatile memory such as a RAM (random access memory) or a nonvolatile memory such as a ROM (read-only memory) or a flash memory. The various types of data are stored in various storage sections located internally in the storage section 220. The storage section 220 includes an image data storage section 221. The image data storage section 221 stores image data therein in readable form.

It should be noted that the storage section 220 does not necessarily need to be provided in the cellular phone 21, but may be configured to be connected as an external storage device to the cellular phone 21 in readable form. Alternatively, the storage section 220 may be a memory (memory card), such as an SD card, which can be inserted into and removed from the cellular phone 21.

The first communication section 231 serves for the cellular phone 21 to communicate with an external device such as the image data providing device 30. The first communication section 231 is configured to be connectable to the cellular phone network 401, which is a communication network 400.

The second communication section 232 severs to communicate with the image data reception processing devices 10 such as the television 11 and the microwave oven 12. The second communication section 232 is configured to be able to communicate with a wireless communication section 131 of the television 11 and a wireless communication section 161 of the microwave oven 12. In the present embodiment, the cellular phone 21 is supposed to transmit image data according to an infrared communication protocol; therefore, the second communication section 232 includes an infrared-emitting section, and the infrared-emitting section transmits infrared carrier waves to carry image data. The second communication section 232 will be described in detail later.

The display section 233 is a display device that displays image data or the like in accordance with an instruction from the control section 210. For example, an LC (liquid crystal) display panel, an EL (electroluminescence) display panel, a CRT (cathode-ray tube) display device, or the like can be used as the display section 233.

The input operation section 234 serves to receive an input operation carried out by the user of the cellular phone 21. The input operation section 234 is constituted by input devices such as operating keys, switches, and touch panels. The input operation section 234 generates a control signal according to an input operation carried out by the user of the cellular phone 21, and transmits the control signal thus generated to an event processing section 212 (which will be described later).

Examples of an input operation that is carried out by the user of the cellular phone 21 include an operation for causing the display section 233 to display image data stored in the image data storage section 221, an operation for selecting image data displayed in the display section 233, an operation for transmitting the image data thus selected to the image data reception processing devices 10, etc. Accordingly, examples of the control signal that is generated include a signal aimed at causing the display section 233 to display image data stored in the image data storage section 221, a signal aimed at transmitting, to the image data reception processing devices 10, image data selected by the user of the cellular phone 21, etc.

The control section 210 is described below in detail. The control section 210 includes an image data obtaining section 211, an event processing section 212, an image data display processing section 213, and an image data transmitting section 214.

First, the image data obtaining section 211 is described. The image data obtaining section 211 obtains image data from the image data providing device 30 through the first communication section 231. An example of how the image data is obtained is, but is not particularly limited to, receiving from the image data providing device 30 an e-mail having the image data attached thereto or downloading the image data from the image data providing device 30. It is desirable that an e-mail be able to be received without any operation carried out by the user of the cellular phone 21.

Then, the image data obtaining section 211 stores in the image data storage section 221 the image data thus obtained. It should be noted that in cases where the image data attached to the e-mail thus received is stored in the image data storage section 211, only the image data is stored in the image data storage section 221 separately from the e-mail thus received.

Next, the event processing section 212 is described. The event processing section 212 receives a control signal transmitted from the input operation section 234 by an input operation carried out by the user of the cellular phone 21 and gives an instruction to each section in accordance with the content of the control signal thus received.

In particular, when the control signal is a signal aimed at displaying image data stored in the image data storage section 221, the event processing section 212 sends a signal to the image display processing section 213 accordingly. Alternatively, when the control signal is a signal aimed at transmitting, to the image data reception processing devices 10, image data selected by the user of the cellular phone 21, the event processing section 212 sends a signal to the image data transmitting section 214 accordingly.

Next, the image data display processing section 213 is described. In response to an instruction from the event processing section 212, the image data display processing section 213 obtains image data stored in the image data storage section 221 and displays the image data in the display section 233 so that the user of the cellular phone 21 can select the image data. For example, the image data display processing section 213 generates a menu for user-selectably displaying a list of image data stored in the image data storage section 221 and displays the menu thus generated in the display section 233 (Fig. 7).

It should be noted that the image data display processing section 213 includes a decoder for expanding image information contained in image data. More specifically, the decoder reads out compressed (or encoded) image information contained in image data and displayably expands (or decodes) the image information thus read out. The decoder is capable of handling image data of various formats such as JPEG and TIFF (tag image file format), and executes an expansion process according to image data to be expanded.

Next, the image data transmitting section 214 is described. In response to an instruction from the event processing section 212, the image data transmitting section 214 transmits, through the second communication section 232 to the image data reception processing devices 10, image data selected by the user of the cellular phone 21.

It should be noted that in addition to these functions, the cellular phone 21 has the functions of an ordinary cellular phone (such as a voice call function, a mail transmitting and receiving function, an Internet access function).

### (Configuration of the Television 11)

A configuration of the television 11, which is an image data reception processing device 10, is schematically described below with reference to Fig. 1. Fig. 1 is a block diagram schematically showing a configuration of the television 11. It should be noted that the configuration shown in Fig. 1 is merely an example, and the configuration of the image data reception processing device 10 is not limited to that shown in Fig. 1.

As shown in Fig. 1, the television 11 includes a control section 110, a storage section 120, a wireless communication section 131, an external communication section 132, a display section 133, an input operation section 134, a broadcast data receiving section 135, and an external input section 137.

The control section 110 controls the storage section 120, the wireless communication section 131, the external communication section 132, the display section 133, the input operation section 134, the broadcast data receiving section 135, and the external input section 137, and also executes predetermined arithmetic processing. Examples of the predetermined arithmetic processing include reception processing of image data transmitted from the cellular phone 21, which is an operation device 20. The control section 110 can be constituted, for example, by a CPU, etc. A configuration of the control section 110 will be described in detail later.

The storage section 120 serves to store therein various types of data that are used in the control section 110 and data obtained by execution of programs, and is realized by a volatile memory such as a RAM or a nonvolatile memory such as a ROM or a flash memory. The various types of data are stored in various storage sections located internally in the storage section 120. The storage section 120 includes an image data storage section 121, an executable process storage section 122, and a process-designating information storage section 123.

The image data storage section 121 stores therein, in readable form, image data transmitted from the operation device 20.

The executable process storage section 122 serves to store therein information capable of identifying a command designating a process that can be executed by the television 11. For example, the executable process storage section 122 stores therein a list of command names 6 of commands that can be executed by the television 11. It should be noted that information that is stored in the executable process storage section 122 may be set in advance at a point in time such as factory shipment or may be able to be set by the television 11 user's using the input operation section 134.

The process-designating information storage section 123 serves to store therein a piece of process-designating information 5 designating a process that can be executed by the television 11, from among pieces of process-designating information 5 contained, if any, in image data transmitted from the operation device 20.

It should be noted that the storage section 120 does not necessarily need to be provided in the television 11, but may be configured to be readably connected as an external storage device to the television 11. Alternatively, the storage section 120 may be a memory (memory card), such as an SD card, which can be inserted into and removed from the television 11.

The wireless communication section 131 serves for the television 11 to communicate with the cellular phone 21, which is an operation device 20. The wireless communication section 131 is configured to be able to communicate with the second communication section 232 of the cellular phone 21. In the present embodiment, the television 11 is supposed to receive image data from the cellular phone 21 according to an infrared communication protocol; therefore, the wireless communication section 131 includes an infrared-receiving section for receiving infrared radiation emitted from the second communication section 232 of the cellular phone 21 and converting the infrared radiation into an electrical signal, and the electrical signal obtained in the infrared-receiving section is converted into digital data according to a predetermined infrared communication protocol. It should be noted that the wireless communication section 131 uses the same protocol, such as IrSimple or IrSS, as the second communication section 232 of the cellular phone 21 does. The wireless communication section 131 will be described in detail later.

The external communication section 132 serves for the television 11 to communicate with an external device. The external communication section 132 is configured to be connectable to the communication network 800 such as the Internet. Although not illustrated, provided appropriately between the external communication section 132 and the communication network 800 is a component, such as a LAN (local area network) or a router, necessary for performing communication.

The display section 133 is a display device that displays image data, a picture, or the like in accordance with an instruction from the control section 110. For example, an LC display panel, an EL display panel, a CRT display device, or the like can be used as the display section 133.

The input operation section 134 serves to receive an input operation carried out by the user of the television 11. It is assumed here that the input operation section 134 is provided with operation keys corresponding their respective input operations. Specifically, it is assumed that the input operation section 134 is provided with an operation key for switching channels, an operation key for turning up or down the volume, an operation key for turning on/off the television 11, etc. Moreover, the input operation section 134 generates a control signal according to an input operation carried out by the user of the television 11, and transmits the control signal thus generated to an event processing section 113.

Examples of an input operation that is carried out by the user of the television 11 include an operation for setting an ordinary function of the television 11, an operation for switching display modes described later, etc. Accordingly, examples of the control signal that is generated include a signal aimed at setting an ordinary function of the television 11, a signal aimed at switching display modes, etc.

The broadcast data receiving section 135 selectively receives broadcast waves from a channel designated by the control section 110 and converts the broadcast waves into a predetermined signal for output. The broadcast data receiving section 135 needs only to have a function of receiving broadcast waves and a function of converting the broadcast waves thus received into a predetermined signal, and may be a conventional ordinary tuner such as a terrestrial digital tuner, a BS tuner, or a CS tuner.

The external input section 137 is configured to be able to communicate with an external device such as the recorder 13 through a connecting cable (not shown) or the like. Moreover, the external input section 137 receives data from an external device as input data (external input) to the television 11. The external input section 137 includes one or more external input terminals to each separate one of which an external device is connected. For example, the recorder 13 is connected to one of the external input terminals, and the PC 14 is connected to another one of the external input terminals. Moreover, in response to an instruction from the control section 110, the external input section 137 performs switching (i.e., switches external inputs) so as to receive, as input data to the television 11, one of the pieces of data outputted from the external devices connected to the one or more external input terminals.

In the following, the phrase "to perform switching so as to receive, as input data to the television 11, data outputted from an external device connected to an external input terminal N" is referred to as "to switch to an external input N". Moreover, it is assumed that the recorder 13 is connected to an external input terminal N1 through a connecting cable 700. Accordingly, the phrase "to perform switching so as to receive, as input data to the television 11, data outputted from the recorder 13" is referred to as "to switch to an external input N1".

Next, the control section 110 is described in detail. The control section 110 includes an image data receiving section (process-designating information obtaining means) 111, a process-designating information extracting section (process-designating information obtaining means, process-designating information extracting means) 112, an event processing section 113, a display mode control section 114, a process executing section (current mode obtaining means, process executing means) 115, and a broadcast data output processing section 117.

First, the image data receiving section 111 is described. The image data receiving section 111 receives image data from the cellular phone 21, which is an operation device 20, through the wireless communication section 131. Then, the image data receiving section 111 stores in the image data storage section 121 the image data thus received.

Next, the process-designating information extracting section 112 is described. As soon as the image data receiving section 111 stores image data in the image data storage section 121, the process-designating information extracting section 112 determines whether the image data thus stored contains process-designating information 5 and, if it does, extracts the process-designating information 5.

Then, the process-designating information extracting section 112 stores in the process-designating information storage section 123 only a piece of process-designating information 5 containing a command (such as "WWW Get", "WWW Post", "Photo Album", or "Television Command") designating a process that can be executed by the television 11, from among the pieces of process-designating information 5 thus extracted.

In so doing, the process-designating information extracting section 112 determines, in accordance with information, stored in the executable process storage section 122, which is capable of identifying the command designating the process that can be executed by the television 11, which one of the pieces of process-designating information 5 thus extracted is a piece of process-designating information 5 containing the command designating the process that can be executed by the television 11. For example, in cases where the executable process storage section 122 has stored therein a list of command names 6 of commands designating processes that can be executed by the television 11, the process-designating information extracting section 112 stores in the process-designating information storage section 123 those pieces of process-designating information 5 which have the command names 6 contained in the list, from among the pieces of process-designating information 5 thus extracted.

In cases (1) where the image data does not contain process-designating information 5 (i.e., where the image data is displaying image data 4) or (2) where none of the pieces of process-designating information 5 thus extracted does not contain a command designating a process that can be executed by the television 11, the process-designating information extracting section 112 terminates the process without storing anything in the process-designating information storage section 123.

Next, the event processing section 113 is described. The event processing section 113 receives a control signal transmitted from the input operation section 134 by an input operation carried out by the user of the television 11 and gives an instruction to each section in accordance with the content of the control signal thus received. In particular, when the control signal is a signal aimed at switching display modes, the event processing section 113 sends a signal to the display mode control section 114 accordingly.

Next, the display mode control section 114 is described. The display mode control section 114 controls the current "display mode". The term "display mode" here means information that indicates what data is able to be displayed in the display section 133. Moreover, the display mode control section 114 switches display modes according to the type of data that is displayed in the display section 133. In the present embodiment, the television 11 can take one of the following four display modes: (1) a browser mode; (2) an album mode; (3) an image display mode; and (4) a broadcasting mode.

The browser mode is a display mode that is used to display, in the display section 133, a Web page or the like obtained from the HTTP server 90. The album mode is a display mode that is used to display, in the display section 133, photos of a group of photo data obtained from the photo album server 91. The image display mode is a display mode that is used to display image data in the display section 133. The broadcasting mode is a display mode that is used to output, to the display section 133, a picture on a channel received by the broadcast data receiving section 135.

Moreover, the display mode control section 114 switches display modes in accordance with an instruction from an HTTP server access processing section 1151, a photo album processing section 1152, an image data display processing section 1154, or a broadcast data output processing section 117 (each of which will be described later). Further, the display mode control section 114 switches display modes in accordance with an instruction from the event processing section 113.

It should be noted that there is no particular limitations on the way in which display modes are controlled, as long as the four modes can be controlled. For example, the current display mode may be controlled by writing in a predetermined internal file a code that can be identified by the current display mode.

Next, the process executing section 115 is described. As soon as the process-designating information extracting section 112 terminates its process, the process executing section 115 executes various type of processing in accordance with the process-designating information 5 stored in the process-designating information storage section 123. For that purpose, the process executing section 115 includes an HTTP server access processing section 1151, a photo album processing section 1152, a television command processing section 1153, and an image data display processing section 1154.

If the process-designating information storage section 123 has stored therein process-designating information 5 whose command name 6 is "WWW Get", the HTTP server access processing section 1151 obtains a Web page through the external communication section 132 from the HTTP server 90 as indicated by the URL designated by the parameter 7 of the process-designating information 5. Then, the HTTP server access processing section 1151 outputs the Web page thus obtained to the display section 133.

Alternatively, if the process-designating information storage section 123 has stored therein process-designating information 5 whose command name 6 is "WWW Post", the HTTP server access processing section 1151 transmits image data containing the process-designating information 5 through the external communication section 132 to the HTTP server 90 as indicated by the URL designated by the parameter 7 of the process-designating information 5. The image data is obtained from the image data storage section 121. In the case of return of predetermined data from the HTTP server 90 in response to the image data thus transmitted, the HTTP server access processing section 1151 outputs the predetermined data to the display section 133.

If the television 11 is not in the browser mode at the time of output of the Web page thus obtained or the predetermined data to the display section 133, the HTTP server access processing section 1151 instructs the display mode control section 114 to switch the display mode to the browser mode.

Alternatively, if the process-designating information storage section 123 has stored therein process-designating information 5 whose command name 6 is "Photo Album", the photo album processing section 1152 accesses the photo album server 91 through the external communication section 132 and obtains a group of photo data belonging to an album specified by the ID designated by the parameter 7 of the process-designating information 5. Then, the photo album processing section 1152 displays in the displays section 133 a list or slide show of photos of the group of photo data thus obtained.

If the television 11 is not in the album mode at the time of display in the display section 133 of the photos of the group of photo data thus obtained, the photo album processing section 1152 instructs the display mode control section 114 to switch the display mode to the album mode.

Alternatively, if the process-designating information storage section 123 has stored therein process-designating information 5 whose command name 6 is "Television Command", the television command processing section 1153 controls the television 11 in accordance with information designated by the parameter 7 of the process-designating information 5. For example, when the information designated by the parameter 7 of the process-designating information 5 is aimed at switching external inputs on the television 11, the television command processing section 1153 instructs the input operation section 137 to switch external inputs in accordance with the information designated by the parameter 7.

Alternatively, if the image data does not contain process-designating information 5 and therefore the process-designating information extracting section 112 terminates the process without storing anything in the process-designating information storage section 123, the image data display processing section 1154 outputs the image data to the display section 133. The image data is obtained from the image data storage section 121.

If the television 11 is not in the image display mode at the time output of the image data to the display section 133, the image data display processing section 1154 instructs the display mode control section 114 to switch the display mode to the image display mode.

It should be noted that the image data display processing section 1154 includes a decoder for expanding image information contained in image data. More specifically, the decoder reads out compressed (or encoded) image information contained in image data and displayably expands (or decodes) the image information thus read out. The decoder is capable of handling image data of various formats such as JPEG and TIFF, and executes an expansion process according to image data to be expanded.

Next, the broadcast data output processing section 117 is described. The broadcast data output processing section 117 performs processing such as decoding on a signal outputted by the broadcast data receiving section 135, thereby outputting to the display section 133 the picture on the channel received.

If the television 11 is not in the broadcasting mode at the time of output of the pictures to the display section 133, the broadcast data output processing section 117 instructs the display mode control section 114 to switch the display mode to the broadcasting mode.

In addition to these functions, the television 11 has the functions of an ordinary television receiver (such as a channel switching function, a volume adjusting function, a screen brightness adjusting function).

### (Configuration of the Microwave Oven 12)

A configuration of the microwave oven 12, which is an image data reception processing device 10, is schematically described below with reference to Fig. 9. Fig. 9 is a block diagram schematically showing a configuration of the microwave oven 12. It should be noted that the configuration shown in Fig. 9 is merely an example, and the configuration of the image data reception processing device 10 is not limited to that shown in Fig. 9.

As shown in Fig. 9, the microwave oven 12 includes a control section 140, a storage section 150, a wireless communication section 161, a display section 163, an input operation section 164, and an electromagnetic wave generating section 166.

The control section 140 controls the storage section 150, the wireless communication section 161, the display section 163, the input operation section 164, and the electromagnetic wave generating section 166, and also executes predetermined arithmetic processing. Examples of the predetermined arithmetic processing include reception processing of image data transmitted from the cellular phone 21, which is an operation device 20. The control section 140 can be constituted, for example, by a CPU, etc. A configuration of the control section 140 will be described in detail later.

The storage section 150 serves to store therein various types of data that are used in the control section 140 and data obtained by execution of programs, and is realized by a volatile memory such as a RAM or a nonvolatile memory such as a ROM or a flash memory. The various types of data are stored in various storage sections located internally in the storage section 150. The storage section 150 includes an image data storage section 151, an executable process storage section 152, and a process-designating information storage section 153.

The image data storage section 151 stores therein, in readable form, image data transmitted from the operation device 20.

The executable process storage section 152 serves to store therein information (executable process information) capable of identifying a command designating a process that can be executed by the microwave oven 12. For example, the executable process storage section 152 stores therein a list of command names 6 of commands that can be executed by the microwave oven 12. Information that is stored in the executable process storage section 152 may be set in advance at a point in time such as factory shipment or may be able to be set by the microwave oven 12 user's using the input operation section 164.

The process-designating information storage section 153 serves to store therein a piece of process-designating information 5 designating a process that can be executed by the microwave oven 12, from among pieces of process-designating information 5 contained, if any, in image data transmitted from the operation device 20.

It should be noted that the storage section 150 does not necessarily need to be provided in the microwave oven 12, but may be configured to be readably connected as an external storage device to the microwave oven 12. Alternatively, the storage section 150 may be a memory (memory card), such as an SD card, which can be inserted into and removed from the microwave oven 12.

The wireless communication section 161 serves for the microwave oven 12 to communicate with the cellular phone 21, which is an operation device 20. The wireless communication section 161 is configured to be able to communicate with the second communication section 232 of the cellular phone 21. The wireless communication section 161 will be described in detail later.

The display section 163 is a display device that displays image data or the like in accordance with an instruction from the control section 140. For example, an LC display panel, an EL display panel, a CRT display device, or the like can be used as the display section 163.

The input operation section 164 serves to receive an input operation carried out by the user of the microwave oven 12. It is assumed here that the input operation section 164 is provided with operation keys corresponding their respective input operations (such as setting cooking time, setting heating temperature, giving an instruction to display a recipe, giving an instruction to cook in accordance with a selected recipe). Moreover, the input operation section 164 generates a control signal according to an input operation carried out by the user of the microwave oven 12, and transmits the control signal thus generated to an event processing section 143. Accordingly, examples of the control signal that is generated include a signal aimed at displaying a recipe, a signal aimed at cooking in accordance with a recipe selected by the user of the microwave oven 12, etc.

The electromagnetic wave generating section 166 generates high-frequency electromagnetic waves in accordance with an instruction from the control section 140 and heats food or the like by irradiating it with the electromagnetic waves thus generated. The electromagnetic wave generating section 166 needs only to have a function of generating high-frequency electromagnetic waves, and may be a conventionally known one.

Next, the control section 140 is described in detail. The control section 140 includes an image data receiving section (process-designating information obtaining means) 141, a process-designating information extracting section (process-designating information obtaining means, process-designating information extracting means) 142, an event processing section 143, a recipe display processing section 144, and a process executing section (process executing means) 145.

First, the image data receiving section 141 is described. The image data receiving section 141 receives image data from the cellular phone 21, which is an operation device 20, through the wireless communication section 161. Then, the image data receiving section 141 stores in the image data storage section 151 the image data thus received.

Next, the process-designating information extracting section 142 is described. As soon as the image data receiving section 141 stores image data in the image data storage section 151, the process-designating information extracting section 142 determines whether the image data thus stored contains process-designating information 5 and, if it does, extracts the process-designating information 5.

Then, the process-designating information extracting section 142 stores in the process-designating information storage section 153 only a piece of process-designating information 5 containing a command (such as "Recipe") designating a process that can be executed by the microwave oven 12, from among the pieces of process-designating information 5 thus extracted.

In so doing, the process-designating information extracting section 142 determines, in accordance with information, stored in the executable process storage section 152, which is capable of identifying the command that can be executed by the microwave oven 12, which one of the pieces of process-designating information 5 thus extracted is a piece of process-designating information 5 designating the process that can be executed by the microwave oven 12. For example, in cases where the executable process storage section 152 has stored therein a list of command names 6 of commands designating processes that can be executed by the microwave oven 12, the process-designating information extracting section 142 stores in the process-designating information storage section 153 those pieces of process-designating information 5 which have the command names 6 contained in the list, from among the pieces of process-designating information 5 thus extracted.

Next, the event processing section 143 is described. The event processing section 143 receives a control signal transmitted from the input operation section 164 by an input operation carried out by the user of the microwave oven 12 and gives an instruction to each section in accordance with the content of the control signal thus received. In particular, when the control signal is a signal aimed at displaying a list of recipes, the event processing section 143 sends a signal to the recipe display processing section 144 accordingly. Alternatively, when the control signal is a signal aimed at performing cooking in accordance with a recipe selected by the user of the microwave oven 12, the event processing section 143 sends a signal to the process executing section 145 accordingly.

Next, the recipe display processing section 144 is described. In response to an instruction from the event processing section 143, the recipe display processing section 144 obtains the process-designating information 5 of "Recipe" as stored in the process-designating information storage section 153 and displays the process-designating information 5 in the display section 163 so that the user of the microwave oven 12 can select the process-designating information 5.

Next, the process executing section 145 is described. In response to an instruction from the event processing section 143, the process executing section 145 executes various types of processing in accordance with process-designating information 5 selected by the user of the microwave oven 12. For that purpose, the process executing section 145 includes an electromagnetic wave control section 1451.

The electromagnetic wave control section 1451 controls the operation of the electromagnetic wave generating section 166, etc. in accordance with recipe data designated by the parameter 7 of the process-designating information 5 selected by the user of the microwave oven 12.

It should be noted that in addition to these functions, the microwave oven 12 has the functions of an ordinary microwave oven.

### (Communication between the Cellular Phone 21 and the Television 11 and Microwave Oven 12)

As described above, the second communication section 232 of the cellular phone 21 is configured to be able to communicate with the wireless communication section 131 of the television 11. Similarly, the second communication section 232 of the cellular phone 21 is configured to be able to communicate with the wireless communication section 161 of the microwave oven 12. That is, the cellular phone 21 and the television 11 can communicate with each other through a communication path formed by the second communication section 232 and the wireless communication section 131. Similarly, the cellular phone 21 and the microwave oven 12 can communicate with each other through a communication path formed by the second communication section 232 and the wireless communication section 161.

The communication path formed by the second communication section 232 and the wireless communication section 131 and the communication path formed by the second communication section 232 and the wireless communication section 161 are used for exchange of image data between the cellular phone 21 and the television 11 and between the cellular phone 21 and the microwave oven 12, respectively. It is assumed here, as mentioned above, that infrared communication according the IrSS protocol is applied to the communication paths. That is, the second communication section 232, the wireless communication section 131, and the wireless communication section 161 are communication sections that can transmit and receive signals through infrared communication according to the IrSS protocol.

### (Outline of the Flow of a Process in the Cellular Phone 21)

A flow through which the cellular phone 21 receives image data from the image data providing device 30 and transmits the image data to an image data reception processing device 10 is schematically described below with reference to Fig. 10. Fig. 10 is a flow chart schematically showing a flow through which the cellular phone 21 receives image data from the image data providing device 30 and transmits the image data to an image data reception processing device 10. It should be noted that the flow of a process as shown in Fig. 10 is merely an example without implying any limitations.

First, the image data obtaining section 211 of the cellular phone 21 obtains image data from the image data providing device 30 through the first communication section 231, and then stores in the image data storage section 221 the image data thus obtained (Step S101). As mentioned above, an example of how the image data is obtained is, but is not particularly limited to, receiving from the image data providing device 30 an e-mail having the image data attached thereto or downloading the image data from the image data providing device 30.

Then, when the user of the cellular phone 21 carries out an operation for displaying the image data, the event processing section 212, which has received a control signal transmitted from the input operation section 234, sends an instruction to the image data display processing section 213. Then, the image data display processing section 213 obtains the image data stored in the image data storage section 221, and then displays the image data in the display section 233 so that the user of the cellular phone 21 can select the image data (e.g., as a menu displaying the image data on a list) (Step S102).

Then, when the user of the cellular phone 21 carries out an operation for selecting the image data (Step S103) and carries out an operation for transmitting the image data thus selected to the image data reception processing device 10 (YES in Step S104), the image data transmitting section 214 transmits the image data thus selected to the image data reception processing device 10 (which is at least either the television 11 or the microwave oven 12) through the second communication section 232 (Step S105). It should be noted that if the transmission of the image data to the image data reception processing device 10 ends up in failure for some reason, for example, and therefore the user gives an instruction to retransmit the image data thus selected (YES in Step S106), the process returns to Step S105.

On the other hand, if the user of the cellular phone 21 does not carry out an operation for transmitting the image data thus selected to the image data reception processing device 10 (NO in Step S104), but carries out an operation for canceling the transmission of the image data to the image data reception processing device 10 (YES in Step S107), the process is terminated.

If an operation for canceling the transmission of the image data to the image data reception processing device 10 is not carried out (NO in Step S107), the process returns to an operation for selecting the image data (returns to Step S103).

### (Outline of the Flow of a Process in the Television 11)

The flow of a process that the television 11 performs upon receiving image data is schematically described below with reference to Fig. 11. Fig. 11 is a flow chart schematically showing the flow of a process that the television 11 performs upon receiving image data. It should be noted that the flow of a process as shown in Fig. 11 is merely an example without implying any limitations.

First, the image data receiving section 111 receives image data from the cellular phone 21, which is an operation device 20, through the wireless communication section 131, and then stores in the image data storage section 121 the image data thus received (Step S201).

Then, the process-designating information extracting section 112 determines whether the image data thus stored contains process-designating information 5 and, if it does, extracts the process-designating information 5. Then, the process-designating information extracting section 112 stores in the process-designating information storage section 123 only a piece of process-designating information 5 containing a command (such as "WWW Get", "WWW Post", "Photo Album", or "Television Command") designating a process that can be executed by the television 11, from among the pieces of process-designating information 5 thus extracted (Step S202) (process-designating information obtaining step).

Next, the process executing section 115 executes various types of processing in accordance with the process-designating information 5 stored in the process-designating information storage section 123.

Specifically, if the process-designating information storage section 123 has stored therein process-designating information 5 whose command name 6 is "WWW Get" (YES in Step S203), the HTTP server access processing section 1151 obtains a Web page through the external communication section 132 from the HTTP server 90 as indicated by the URL designated by the parameter 7 of the process-designating information 5 (Step S204) (process executing step). Then, the HTTP server access processing section 1151 outputs the Web page thus obtained to the display section 133 (Step S205).

If the television 11 is not in the browser mode at the time of output of the Web page thus obtained to the display section 133, the HTTP server access processing section 1151 instructs the display mode control section 114 to switch the display mode to the browser mode, and the display mode control section 114 switches the display mode to the browser mode.

Alternatively, if the process-designating information storage section 123 does not have stored therein process-designating information 5 whose command name 6 is "WWW Get" (NO in Step S203), but has stored therein process-designating information 5 whose command name 6 is "WWW Post" (YES in Step S206), the HTTP server access processing section 1151 transmits image data containing the process-designating information 5 through the external communication section 132 to the HTTP server 90 as indicated by the URL designated by the parameter 7 of the process-designating information 5 (Step S207) (process executing step).

Then, in the case of return of predetermined data from the HTTP server 90 in response to the image data thus transmitted, the HTTP server access processing section 1151 receives the predetermined data through the external communication section 132, and then outputs the predetermined data to the display section 133 (Step S208).

If the television 11 is not in the browser mode at the time of output of the data thus received to the display section 133, the HTTP server access processing section 1151 instructs the display mode control section 114 to switch the display mode to the browser mode, and the display mode control section 114 switches the display mode to the browser mode.

Alternatively, if the process-designating information storage section 123 does not have stored therein process-designating information 5 whose command name 6 is "WWW Post" (NO in Step S206), but has stored therein process-designating information 5 whose command name 6 is "Photo Album" (YES in Step S209), the photo album processing section 1152 accesses the photo album server 91 through the external communication section 132 and obtains a group of photo data belonging to an album specified by the ID designated by the parameter 7 of the process-designating information 5 (Step S210) (process executing step). Then, the photo album processing section 1152 displays in the displays section 133 a list or slide show of photos of the group of photo data thus obtained (Step S211).

If the television 11 is not in the album mode at the time of display in the display section 133 of the photos of the group of photo data thus obtained, the photo album processing section 1152 instructs the display mode control section 114 to switch the display mode to the album mode, and the display mode control section 114 switches the display mode to the album mode.

Alternatively, if the process-designating information storage section 123 does not have stored therein process-designating information 5 whose command name 6 is "Photo Album" (NO in Step S209), but has stored therein process-designating information 5 whose command name 6 is "Television Command" (YES in Step S212), the television command processing section 1153 controls the television 11 in accordance with information designated by the parameter 7 of the process-designating information 5 (Step S213) (process executing step).

Alternatively, if the process-designating information storage section 123 does not have stored therein process-designating information 5 whose command name 6 is "Television Command" (NO in Step S212), but has no process-designating information 5 stored therein, the image data display processing section 1154 outputs the image data to the display section 133 (Step S214) (process executing step).

If the television 11 is not in the image display mode at the time output of the image data to the display section 133, the image data display processing section 1154 instructs the display mode control section 114 to switch the display mode to the image display mode, and the display mode control section 114 switches the display mode to the image display mode.

Although the flow chart shown in Fig. 11 shows an example where whether the process-designating information storage section 123 has stored therein process-designating information 5 whose command name 6 is "WWW Get" (Step S203), whether the process-designating information storage section 123 has stored therein process-designating information 5 whose command name 6 is "WWW Post" (Step S206), whether the process-designating information storage section 123 has stored therein process-designating information 5 whose command name 6 is "Photo Album" (Step S209), and whether the process-designating information storage section 123 has stored therein process-designating information 5 whose command name 6 is "Television Command" (Step S212) are checked in the order named, this order does not imply any limitations.

### (Outline of the Flow of a Process in the Microwave Oven 12)

The flow of a process that the microwave oven 12 performs upon receiving image data is schematically described below with reference to Fig. 12. Fig. 12 is a flow chart schematically showing the flow of a process that the microwave oven 12 performs upon receiving image data. It should be noted that the flow of a process as shown in Fig. 12 is merely an example without implying any limitations.

First, the image data receiving section 141 receives image data from the cellular phone 21, which is an operation device 20, through the wireless communication section 161, and then stores in the image data storage section 151 the image data thus received (Step S301).

Then, the process-designating information extracting section 142 determines whether the image data thus stored contains process-designating information 5 and, if it does, extracts the process-designating information 5. Then, the process-designating information extracting section 142 stores in the process-designating information storage section 153 only a piece of process-designating information 5 containing a command (such as "Recipe") designating a process that can be executed by the microwave oven 12, from among the pieces of process-designating information 5 thus extracted (Step S302) (process-designating information obtaining step).

Next, the process executing section 145 executes various types of processing in accordance with the process-designating information 5 stored in the process-designating information storage section 153.

Specifically, if the process-designating information storage section 153 has stored therein process-designating information 5 whose command name 6 is "Recipe" (YES in Step S303) and the user of the microwave oven 12 selects the process-designating information 5 of "Recipe" as displayed in the display section 163 by the recipe display processing section 144 and gives an instruction to cook (YES in Step S304), the electromagnetic wave control section 1451 controls the operation of the electromagnetic wave generating section 166 in accordance with recipe data designated by the parameter 7 of the process-designating information 5 selected by the user of the microwave oven 12. Then, the electromagnetic wave generating section 166 generates high-frequency electromagnetic waves and irradiates food or the like with the electromagnetic waves thus generated, whereby the microwave oven 12 performs cooking (Step S305) (process executing step).

Alternatively, if the process-designating information storage section 153 does not have stored therein process-designating information 5 whose command name 6 is "Recipe" (NO in Step S303) and the user of the microwave oven 12 does not give an instruction to cook (NO in Step S304), the process is terminated.

### (Effects)

As described above, the operation device 20 (cellular phone 21) obtains image data from the image data providing device 30 and transmits the image data to the plurality of image data reception processing devices 10 (television 11 and the microwave oven 12 in the user's home). Then, upon receiving the image data, each of the image data reception processing devices 10 extracts process-designating information 5 contained, if any, in the image data, determines whether or not a process designated by the process-designating information 5 thus extracted can be executed by the image data reception processing device 10, and executes only a process that can be executed by the image data reception processing device 10.

Thus, an image data reception processing device 10 according to the present invention can receive operating image data 3 containing one or more pieces of process-designating information 5 and execute only a process that can be executed by the image data reception processing device 10.

This allows the user to cause the plurality of image data reception processing devices 10 to execute processes at the same time, by only once transmitting a piece of operating image data 3 containing one or more pieces of process-designating information 5 by using the cellular phone 21, which is an operation device 20. For example, the user can cause the television 11 and the microwave oven 12 to execute their respective processes, by only once transmitting, to the television 11 and the microwave oven 12, a piece of operating image data 3 containing process-designating information 5 designating the content of the processes that are to be executed by the television 11 and the microwave oven 12 respectively.

In other words, there is no need for the user to transmit operating image data 3 to each separate image data reception processing device 10. That is, there is no need to separately carry out an operation for transmitting, to the television 11, operating image data 3 containing process-designating information 5 designating the content of a process that is to be executed by the television 11 and an operation for transmitting, to the microwave oven 12, operating image data 3 containing process-designating information 5 designating the content of a process that is to be executed by the microwave oven 12.

Therefore, the present invention brings about improvement in operability and convenience for a user who uses an operation device 20 to operate an image data reception processing device 10.

Furthermore, the service provider, who provides the image data delivery service, needs only to create a piece of operating image data 3 containing plural pieces of process-designating information 5 and provides the user with the piece of operating image data 3 thus created. For example, the service provider can create a piece of operating image data 3 containing process-designating information 5 designating the content of a process that is to be executed by the television 11 and process-designating information 5 designating the content of a process that is to be executed by the microwave oven 12 and provide the user with the piece of operating image data 3 thus created.

In other words, there is no need for the service provider, who provides the image data delivery service, to separately create operating image data 3 containing process-designating information 5 designating the content of a process that is to be executed by the television 11 and operating image data 3 containing process-designating information 5 designating the content of a process that is to be executed by the microwave oven 12.

Therefore, the present invention saves the service provider the trouble of creating and managing operating image data 3.

### [Embodiment 2]

In Embodiment 1 above, the operation device 20 provides the image data reception processing devices 10 with operating image data 3 obtained from the image data providing device 30. It should be noted, however, that such operating image data 3 is not limited to being managed or provided by the image data providing device 30. For example, the operation device 20 may generate operating image data 3 in accordance with predetermined information and provide the image data reception processing devices with the operating image data 3 thus generated.

Accordingly, the present embodiment is described by taking as an example a case where when a user of an operation device capable of receiving a television program selects a television program on the operation device and instructs a recorder and a television to make a recording reservation for the television program thus selected, the operation device generates operating image data 3 containing process-designating information 5 aimed at making a recording reservation for the television program thus selected and provides the recorder and the television, which are image data reception processing devices, with the operating image data 3 thus generated.

An embodiment of the present invention is described below with reference to Figs. 13 through 20. For convenience of explanation, members having the same functions as those described in Embodiment 1 are given the same reference numerals, and as such, are not described below. Similarly, processes identical to those described in Embodiment 1 are not described below, either.

### (Configuration of a Data-processing System 910)

A basic configuration of a data-processing system 910 according to the present embodiment is described with reference to Fig. 13. Fig. 13 is a schematic view showing: a basic configuration of a data-processing system 910 including an operation device 20b and image data reception processing devices 10; and the flow of information that is transmitted between the operation device 20b and each of the image data reception processing devices 10 and between the image data reception processing devices 10.

### (Operation Device 20b)

As with the operation device 20 described in Embodiment 1, the operation device 20b is a device for operating an image data reception processing device 10. However, unlike the operation device 20 described in Embodiment 1, the operation device 20b generates operating image data 3 containing process-designating information 5 in accordance with predetermined information (e.g., television program information, etc.). Then, the operation device 20b transmits the operating image data 3 thus generated to one or more image data reception processing devices 10, for example, through wireless communication 500 with the user's operation or the like as a trigger. It should be noted that the predetermined information is supposed to be obtained from an external server (not shown) or inputted by the user.

As with the operation device 20 described in Embodiment 1, examples of the operation device 20b include a PDA, a PHS, a laptop PC, etc. In the present embodiment, the operation device 20b is described, in particular, by taking a cellular phone 21b as an example. As such, the cellular phone 21 has at least an image data generating function of generating operating image data 3 and an image data transmitting function of transmitting generated image data, in addition to a basic function as a cellular phone, for example, of making or receiving a voice call to or from another cellular phone. It should be noted that the cellular phone 21b is supposed to be usually owned by a user who is in close proximity to an image data reception processing device 10.

### (Image Data Reception Processing Device 10)

In the present embodiment, the image data reception processing devices 10 serve to execute various types of processing in accordance with image data received from the operation device 20b. It should be noted that the image data reception processing devices 10 of the present embodiment are the same as those of Embodiment 1 except that the image data reception processing devices 10 of the present embodiment receive image data not from the operation device 20 but from the operation device 20b, and as such, are not described here.

In the present embodiment, the image data reception processing devices 10 are described, in particular, by taking the television 11 and the recorder 13 as examples. As such, the recorder 13 has at least an image data receiving function of receiving image data, in addition to a basic function as a recorder, for example, of recording and playing back a television program. It should be noted that the television 11 and the recorder 13 are supposed to be usually installed in the user's home.

Further, an input terminal of the television 11 and an output terminal of the recorder 13 are in connection with each other through a connecting cable 700. A signal representing a picture that is played back in the recorder 13 and information concerning recording are transmitted to the television 11 through the connecting cable 700 and can be displayed in a display section of the television 11. It should be noted here that the connecting cable 700 is in connection with an external input terminal N1 of the television 11.

### (Communication between the Devices)

The present embodiment is described on the assumption that the television 11 and the recorder 13, which are image data reception processing devices 10, can receive image data from the cellular phone 21 b, which is an operation device 20b, according to an infrared communication protocol (e.g., IrSS). Moreover, as shown in Fig. 13, the television 11 and the recorder 13 are supposed, for example, to be disposed side by side in a living room or elsewhere in the user's home.

In this case, as long as the cellular phone 21 b and the television 11 and recorder 13 are positioned to be able to communicate with each other according to the IrSS protocol, both the television 11 and the recorder 13 can simultaneously receive image data transmitted from the cellular phone 21 b at a time. Moreover, in cases where the image data thus received contains process-designating information 5, the television 11 and the recorder 13 each extract the process-designating information 5 and execute only a process that can be executed by the device.

### (Configuration of the Cellular Phone 21 b)

A configuration of the cellular phone 21b, which is an operation device 20b, is schematically described below with reference to Fig. 14. Fig. 14 is a block diagram schematically showing a configuration of the cellular phone 21 b. It should be noted that the configuration shown in Fig. 14 is merely an example, and the configuration of the operation device 20b is not limited to that shown in Fig. 14.

As shown in Fig. 14, the cellular phone 21b includes a control section 510, a storage section 520, a first communication section 231, a second communication section 232, a display section 233, and an input operation section 234.

The control section 510 controls the storage section 520, the first communication section 231, the second communication section 232, the display section 233, and the input operation section 234, and also executes predetermined arithmetic processing. Examples of the predetermined arithmetic processing include a process for obtaining image data from an external server (not shown), etc. The control section 510 can be constituted, for example, by a CPU, etc. A configuration of the control section 510 will be described in detail later.

The storage section 520 serves to store therein various types of data that are used in the control section 510 and data obtained by execution of programs, and is realized by a volatile memory such as a RAM or a nonvolatile memory such as a ROM or a flash memory. The various types of data are stored in various storage sections located internally in the storage section 520. The storage section 520 includes a program information storage section 521, a device connection information storage section 522, and an image data template storage section 523.

The program information storage section 521 serves to program information on a television broadcast therein in readable form. The program information is not particularly limited in data format, and it is possible, for example, to directly store HTML (hypertext markup language) data descriptive of the program information.

The device connection information storage section 522 serves to store information on connection between the television 11 and an external device connected to the television 11 therein in readable form. Specifically, the information on connection is a combination of an external input terminal of the television 11 and an external device connected to the external input terminal (i.e., a combination of an external input of the television 11 and an external device).

The image data template storage section 523 serves to store a template for image data therein in readable form. The term "template for image data" here means image data that is used as an template for generating operating image data 3 for the image data reception processing devices 10. The template for image data is used for an image data generating section 514 (which will be described later) to generate image data with process-designating information 5 embedded therein. Therefore, it is desirable that the template for image data have regions set in advance for data other than the process-designating information 5.

It should be noted that the storage section 520 does not necessarily need to be provided in the cellular phone 21b, but may be configured to be connected as an external storage device to the cellular phone 21 in readable form. Alternatively, the storage section 520 may be a memory (memory card), such as an SD card, which can be inserted into and removed from the cellular phone 21 b.

The first communication section 231 and the second communication section 232 have the functions described in Embodiment 1, respectively. It should be noted the second communication section 232 is configured to be able to communicate with the wireless communication section 131 of the television 11 and a wireless communication section 191 (which will be described later) of the recorder 13.

The display section 233 is a display device that displays image data or the like in accordance with an instruction from the control section 510. As described above, the display section 233 is an LC display panel, an EL display panel, a CRT display device, or the like.

The input operation section 234 serves to receive an input operation carried out by the user of the cellular phone 21b and transmits a control signal according to the input operation to an event processing section 512 (which will be described later). The input operation section 234 is constituted by input devices such as operating keys, switches, and touch panels. The input operation section 234 generates a control signal according to an input operation carried out by the user of the cellular phone 21b, and transmits the control signal thus generated to the event processing section 512.

Examples of an input operation that is carried out by the user of the cellular phone 21b include an operation for selecting, in accordance with electronic program information displayed in the display section 233, a program for which a recording reservation is made, an operation for transmitting, to the image data reception processing devices 10, an instruction to make a recording reservation for the program thus selected, etc. Accordingly, examples of the control signal that is generated include a signal aimed at selecting, in accordance with electronic program information, a program for which a recording reservation is made, a signal aimed at transmitting, to the image data reception processing devices 10, an instruction to make a recording reservation for the program thus selected, etc.

Next, the control section 510 is described in detail. The control section 510 includes a program information obtaining section 511, an event processing section 512, a recording reservation processing section 513, an image data generating section 514, and an image data transmitting section 515.

First, the program information obtaining section 511 is described. The program information obtaining section 511 obtains program information on a television broadcast through the first communication section 231 from an external server (not shown) that provides program information on television broadcasts. The program information may be automatically delivered from the external server or may be downloaded by the cellular phone 21b user's accessing the external server, without implying any particular limitations. Further, the program information on the television broadcast is not particularly limited in data format and may be, for example, HTML data. Then, the program information obtaining section 511 stores in the program information storage section 521 the program information thus obtained.

Although the present embodiment is supposed to obtain program information from the external server that provides program information, the user of the cellular phone 21 may use the input operation section 234 to directly input program information (combination of the date on which a program is broadcast, the time at which the program starts, the time at which the program ends, the channel on which the program is broadcast, and the like). In this case, it is not necessary to include the program information obtaining section 511.

Next, the event processing section 512 is described. The event processing section 512 receives a control signal transmitted from the input operation section 234 by an input operation carried out by the user of the cellular phone 21b and gives an instruction to each section in accordance with the content of the control signal thus received.

In particular, when the control signal is a signal aimed at selecting, in accordance with electronic program information, a program for which a recording reservation is made, the event processing section 512 sends a signal to the recording reservation processing section 513 accordingly. Alternatively, when the control signal is a signal aimed at transmitting, to the image data reception processing devices 10, an instruction to make a recording reservation for the program thus selected, the event processing section 512 sends a signal to the image data generating section 514 accordingly.

Next, the recording reservation processing section 513 is described. In response to an instruction from the event processing section 512, the recording reservation processing section 513 obtains program information stored in the program information storage section 521 and displays the program information in the display section 233 so that the user of the cellular phone 21b can select a program. For example, in accordance with the program information stored in the program information storage section 521, the recording reservation processing section 513 displays in the display section 233 an electronic list of programs from which the user can select a program.

Further, in cases where the user of the cellular phone 21 b carries out an operation for selecting a program from the electronic list of programs displayed in the display section 233, the recording reservation processing section 513 displays in the display section 233 a confirmation window that asks the user whether or not to make a recording reservation for the program thus selected.

Furthermore, in accordance with the information on connection between the television 11 and an external device connected to the television 11 as stored in the device connection information storage section 522, the recording reservation processing section 513 shows, in the display section 233, which external input the television 11 needs to switch to in making a recording reservation. For example, in cases where the recorder 13 serves as an external device to execute processing concerning recording reservations, the recording reservation processing section 513 shows that the television 11 needs to switch to the external input N1 in making a recording reservation. The reason for switching external inputs on the television 11 is to cause the display section of the television 11 to display the status of recording reservations (such as a list of reserved programs) in the external device for the user's confirmation.

Next, the image data generating section 514 is described. In response to an instruction from the event processing section 512, the image data generating section 514 generates operating image data 3 for causing the television 11 and the recorder 13 to execute processing concerning a recording reservation for the program selected by the user of the cellular phone 21b.

Specifically, the image data generating section 514 generates operating image data 3 for causing the recorder 13 to execute a process for making a recording reservation for the program selected by the user of the cellular phone 21b and causing the television 11 to switch to the external input N1.

For that purpose, first, the image data generating section 514 generates process-designating information 5 containing a command targeted at the recorder 13 and process-designating information 5 containing a command targeted at the television 11. More specifically, the image data generating section 514 generates process-designating information 5, targeted at the recorder 13, whose command name 6 is "Recorder Command" and whose parameter 7 is information concerning a recording reservation for the program selected by the user (combination of the date on which the reserved program is broadcast, the time at which the reserved program starts, the time at which the reserved program ends, the channel on which the reserved program is broadcast, and the like). Further, the image data generating section 514 generates process-designating information 5, targeted at the television 11, whose command name 6 is "Television Command" and whose parameter 7 is aimed at switching to the external input N 1.

Then, the image data generating section 514 obtains a template for image data stored in the image data template storage section 523 and puts, into the maker note region 621 of the template thus obtained, the process-designating information 5 containing a command targeted at the recorder 13 thus generated and the generated process-designating information 5 containing a command targeted at the television 11 thus generated, thereby generating operating image data 3. It should be noted that a specific example of the operating image data 3 thus generated will be described later.

Next, the image data transmitting section 515 is described. The image data transmitting section 515 transmits, through the second communication section 232 to the image data reception processing devices 10, operating image data 3 generated by the image data generating section 514.

It should be noted that in addition to these functions, the cellular phone 21b has the ordinary functions of a cellular phone (such as a voice call function, a mail transmitting and receiving function, an Internet access function).

### (Example of Operating Image Data 3 That Is Generated by the Image Data Generating Section 514)

An example of operating image data 3 that is generated by the image data generating section 514 is described below with reference to Fig. 15. Fig. 15 is a schematic view showing an example of operating image data 3 that is generated by the image data generating section 514. A data structure of operating image data 3 that is generated by the image data generating section 514 is the same as that described in Embodiment 1.

The maker note region 621 of operating image data 3 shown in Fig. 15 has two pieces of process-designating information 5 (process-designating information 5E and process-designating information 5F) embedded therein.

The process-designating information 5E is process-designating information 5 containing a command targeted at the television 11 with its command name 6 set as "Television Command" and its parameter 7 set to switch to the external input N 1.

The process-designating information 5F is process-designating information 5 containing a command targeted at the recorder 13 with its command name 6 set as "Recorder Command" and its parameter 7 set to make a recording reservation for a program that is broadcast on Channel 2 from seven to eight everyday.

Accordingly, upon receiving the operating image data 3 shown in Fig. 15, the television 11 switches external inputs in accordance with "Television Command" contained in the process-designating information 5E. Meanwhile, upon receiving the operating image data 3 shown in Fig. 15, the recorder 13 makes a recording reservation in accordance with "Recorder Command" contained in the process-designating information 5F.

### (Configuration of the Television 11)

A configuration of the television 11 is the same as that described with reference to Fig. 1 in Embodiment 1, and as such, is not described here.

### (Configuration of the Recorder 13)

A configuration of the recorder 13, which is an image data reception processing device 10, is schematically described below with reference to Fig. 16. Fig. 16 is a block diagram schematically showing a configuration of the recorder 13. It should be noted that the configuration shown in Fig. 16 is merely an example, and the configuration of the image data reception processing device 10 is not limited to that shown in Fig. 16.

As shown in Fig. 16, the recorder 13 includes a control section 170, a storage section 180, a wireless communication section 191, and an external output section 197.

The control section 170 controls the storage section 180, the wireless communication section 191 and the external output section 197, and also executes predetermined arithmetic processing. Examples of the predetermined arithmetic processing include reception processing of image data transmitted from the cellular phone 21b, which is an operation device 20b. The control section 170 can be constituted, for example, by a CPU, etc. A configuration of the control section 170 will be described in detail later.

The storage section 180 serves to store therein various types of data that are used in the control section 170 and data obtained by execution of programs, and is realized by a volatile memory such as a RAM or a nonvolatile memory such as a ROM or a flash memory. The various types of data are stored in various storage sections located internally in the storage section 180. The storage section 180 includes an image data storage section 181, an executable process storage section 182, a process-designating information storage section 183, and a recording reservation information storage section 184.

The image data storage section 181 stores therein, in readable form, image data transmitted from the operation device 20b.

The executable process storage section 182 serves to store therein information capable of identifying a command designating a process that can be executed by the recorder 13. For example, the executable process storage section 182 stores therein a list of command names 6 of commands that can be executed by the recorder 13. Information that is stored in the executable process storage section 182 may be set in advance at a point in time such as factory shipment or may be able to be set by the recorder 13 user's using an input operation section (not shown).

The process-designating information storage section 183 serves to store therein a piece of process-designating information 5 designating a process that can be executed by the recorder 13, from among pieces of process-designating information 5 contained, if any, in image data transmitted from the operation device 20b.

The recording reservation information storage section 184 manages information concerning a recording reservation for a television program. For example, the recording reservation information storage section 184 manages a combination of the date on which the reserved program is broadcast, the time at which the reserved program starts, the time at which the reserved program ends, the channel on which the reserved program is broadcast, and the like. The recorder 13 executes recording in accordance with the information managed in the recording reservation information storage section 184.

Information that is stored in the recording reservation information storage section 184 may be stored by a recording reservation processing section 1751 (which will be described later) or set or may be set by the recorder 13 user's using an input operation section (not shown).

It should be noted that the storage section 180 does not necessarily need to be provided in the recorder 13, but may be configured to be connected as an external storage device to the recorder 13 in readable form. Alternatively, the storage section 180 may be a memory (memory card), such as an SD card, which can be inserted into and removed from the recorder 13.

The wireless communication section 191 serves for the recorder 13 to communicate with the cellular phone 21b, which is an operation device 20b. The wireless communication section 191 is configured to be able to communicate with the second communication section 232 of the cellular phone 21b. Therefore, the cellular phone 21b and the recorder 13 can communicate with each other through a communication path formed by the second communication section 232 and the wireless communication section 191. The wireless communication section 191 is a communication section that can receive a signal through infrared communication according to the IrSS protocol.

The external output section 197 is configured to able to communicate with an external device such as the television 11 through the connecting cable 700. Moreover, the external output section 197 transmits output data from the recorder 13 to the external device through the connection cable 700. For example, the external output section 197 outputs a video signal at the time of video playback and outputs the status of recording reservations at the time of a recording reservation.

Next, the control section 170 is described in detail. The control section 170 includes an image data receiving section (process-designating information obtaining means) 171, a process-designating information extracting section 172 (process-designating information obtaining means, process-designating information extracting means), and a process executing section (process executing means) 175.

First, the image data receiving section 171 is described. The image data receiving section 171 receives operating image data 3 from the cellular phone 21b, which is an operation device 20b, through the wireless communication section 191. Then, the image data receiving section 171 stores in the image data storage section 181 the operating image data 3 thus received.

Next, the process-designating information extracting section 172 is described. As soon as the image data receiving section 171 stores operating image data 3 in the image data storage section 181, the process-designating information extracting section 172 determines whether the operating image data 3 thus stored contains process-designating information 5 and, if it does, extracts the process-designating information 5.

Then, the process-designating information extracting section 172 stores in the process-designating information storage section 183 only a piece of process-designating information 5 containing a command (such as "Recorder Command") designating a process that can be executed by the recorder 13, from among the pieces of process-designating information 5 thus extracted.

In so doing, the process-designating information extracting section 172 determines, in accordance with information, stored in the executable process storage section 182, which is capable of identifying the command designating the process that can be executed by the recorder 13, which one of the pieces of process-designating information 5 thus extracted is a piece of process-designating information 5 designating the process that can be executed by the recorder 13. For example, in cases where the executable process storage section 182 has stored therein a list of command names 6 of commands designating processes that can be executed by the recorder 13, the process-designating information extracting section 172 stores in the process-designating information storage section 183 those pieces of process-designating information 5 which have the command names 6 contained in the list, from among the pieces of process-designating information 5 thus extracted.

Next, the process executing section 175 is described. As soon as the process-designating information extracting section 172 terminates its process, the process executing section 175 executes various type of processing in accordance with process-designating information 5 stored in the process-designating information storage section 183. The process executing section 175 includes a recording reservation processing section 1751.

The recording reservation processing section 1751 updates the recording reservation information storage section 184 in accordance with information concerning a recording reservation (combination of the date on which the reserved program is broadcast, the time at which the reserved program starts, the time at which the reserved program ends, the channel on which the reserved program is broadcast, and the like) designated by the parameter 7 of process-designating information 5 stored in the process-designating information storage section 183.

It should be noted that the recording reservation processing section 1751 outputs the status of recording reservations (such a list of reserved programs) to the television 11 through the external output section 197 so that the television 11 displays the status of recording reservations in its display section 133. The way in which the television 11 displays the status of recording reservations in its display section 133 will be described with reference to the drawings later.

Furthermore, when the recording reservation processing section 1751 determines that it is not appropriate to make an recording reservation in accordance with information concerning a recording reservation as designated by the parameter 7 of process-designating information 5 (e.g., in cases where a recording reservation is made for just around the same time as another recording reservation, such as cases where information concerning a recording reservation as designated by the parameter 7 is aimed at making a recording reservation for the program that is broadcast on Channel 2 from seven to eight everyday and the recording reservation information storage section 184 has already stored therein information aimed at making a recording reservation for a program that is broadcast on Channel 8 from seven thirty to eight tomorrow) the recording reservation processing section 1751 outputs an error message accordingly to the television 11 through the external output section 197 so that the television 11 displays the error message in its display section 133. The way in which the television 11 displays such an error message in its display section 133 will be described with reference to the drawings later.

### (Outline of the Flow of a Process in the Cellular Phone 21 b)

A flow through which the cellular phone 21b receives program information from an external server that provides program information on television broadcasts, generates operating image data 3 in accordance with the program information thus received, and transmits the operating image data 3 to image data reception processing devices 10 is schematically described below with reference to Fig. 17. Fig. 17 is a flow chart schematically showing a flow through which the cellular phone 21b generates operating image data 3 in accordance with program information and transmits the operating image data 3 to image data reception processing devices 10. It should be noted that the flow of a process as shown in Fig. 17 is merely an example without implying any limitations.

First, the program information obtaining section 511 of the cellular phone 21b obtains program information on a television broadcast through the first communication section 231 from an external device (not shown) that provides program information on television broadcasts, and then stores in the program information storage section 521 the program information thus obtained (Step S401). As mentioned above, the program information may be automatically delivered from the external server or may be downloaded by the cellular phone 21b user's accessing the external server, without implying any particular limitations.

Then, when the user of the cellular phone 21b carries out an operation for displaying the program information, the event processing section 512, which has received a control signal transmitted from the input operation section 234, sends an instruction to the recording reservation processing section 513. Then, the recording reservation processing section 513 obtains the program information stored in the program information storage section 521, and then displays in the display section 233 an electronic list of programs from which the user can select a program. (Step S402).

Then, when the user of the cellular phone 21b selects a program from the electronic list of programs displayed in the display section 233, the recording reservation processing section 513 displays in the display section 233 a confirmation window that asks the user whether or not to make a recording reservation for the program thus selected (Step S403) and, at the same time, shows that the television 11 needs to switch to the external input N1 in making a recording reservation. Then, when an operation for making a recording reservation for the program thus selected is carried out (YES in Step S404), the image data generating section 514 generates process-designating information 5, targeted at the recorder 13, whose command name 6 is "Recorder Command" and whose parameter 7 is information concerning a recording reservation for the program selected by the user (combination of the date on which the reserved program is broadcast, the time at which the reserved program starts, the time at which the reserved program ends, the channel on which the reserved program is broadcast, and the like). Further, the image data generating section 514 generates process-designating information 5, targeted at the television 11, whose command name 6 is "Television Command" and whose parameter 7 is aimed at switching to the external input N1 (Step S405).

Then, the image data generating section 514 obtains a template for image data stored in the image data template storage section 523 and puts, into the maker note region 621 of the template thus obtained, the process-designating information 5 containing a command targeted at the recorder 13 thus generated and the generated process-designating information 5 containing a command targeted at the television 11 thus generated, thereby generating operating image data 3 (Step S406).

Then, the image data transmitting section 515 transmits, through the second communication section 232 to the image data reception processing devices 10, the operating image data 3 generated by the image data generating section 514 (Step S107). It should be noted that if the transmission of the operating image data 3 to the image data reception processing devices 10 ends up in failure for some reason, for example, and therefore the user gives an instruction to retransmit the operating image data 3 (YES in Step S408), the process returns to Step S407.

### (Outline of the Flow of a Process in the Television 11)

The flow of a process that the television 11 performs upon receiving operating image data 3 transmitted from the cellular phone 21b is the same as the flow of a process described in Embodiment 1 with reference to the flow chart shown in Fig. 11. In the present embodiment, the cellular phone 21b transmits operating image data 3 containing, in its maker note region 621, process-designating information 5 whose command name 6 is "Television Command" and whose parameter 7 is aimed at switching external inputs; therefore, Steps S212 and S213 in the process of the flow chart shown in Fig. 11 are explained again.

In the case of the present embodiment, the process-designating information storage section 123 has stored therein process-designating information 5 whose command name 6 is "Television Command" (YES in Step S212). Moreover, information designated by the parameter 7 of the process-designating information 5 is aimed at switching external inputs on the television 11. Therefore, in accordance with the information designated by the parameter 7, the television command processing section 1153 instructs the external input section 137 to switch external inputs. Then, the external input section 137 switches external inputs in accordance with the instruction (Step S213).

### (Outline of the Flow of a Process in the Recorder 13)

The flow of a process that the recorder 13 performs upon receiving operating image data 3 from the cellular phone 21 b is schematically described below with reference to Fig. 18. Fig. 18 is a flow chart schematically showing the flow of a process that the recorder 13 performs upon receiving operating image data 3 from the cellular phone 21b. It should be noted that the flow of a process as shown in Fig. 18 is merely an example without implying any limitations.

First, the image data receiving section 171 receives operating image data 3 from the cellular phone 21 b, which is an operation device 20b, through the wireless communication section 191, and then stores in the image data storage section 181 the operating image data 3 thus received (Step S501).

Then, the process-designating information extracting section 172 determines whether the operating image data 3 thus stored contains process-designating information 5 and, if it does, extracts the process-designating information 5. Then, the process-designating information extracting section 172 stores in the process-designating information storage section 183 only a piece of process-designating information 5 containing a command (such as "Recorder Command") designating a process that can be executed by the recorder 13, from among the pieces of process-designating information 5 thus extracted (Step S502) (process-designating information obtaining step).

Next, the process executing section 175 executes various type of processing in accordance with the process-designating information 5 stored in the process-designating information storage section 183.

Specifically, if the process-designating information storage section 183 has stored therein process-designating information 5 whose command name 6 is "Recorder Command" (YES in Step S503), the recording reservation processing section 1751 updates the recording reservation information storage section 184 in accordance with information concerning a recording reservation (combination of the date on which the reserved program is broadcast, the time at which the reserved program starts, the time at which the reserved program ends, the channel on which the reserved program is broadcast, and the like) designated by the parameter 7 of the process-designating information 5 (Step S504) (process executing process). The recording reservation processing section 1751 outputs the status of recording reservations (such a list of reserved programs) to the television 11 so that the television 11 displays the status of recording reservations in its display section 133. Alternatively, if a recording reservation cannot be made, the recording reservation processing section 1751 outputs an error message accordingly to the television 11 so that the television 11 shows the user the error message in its display section 133.

### (Examples of Windows)

An example of a window that the recording reservation processing section 513 of the cellular phone 21b displays in the display section 233 is described below with reference to Fig. 19. Fig. 19 is a schematic view showing an example of a window that the recording reservation processing section 513 of the cellular phone 21b displays in the display section 233.

As shown in Fig. 19, the recording reservation processing section 513 displays in the display section 233 a window that asks the user whether or not to make a recording reservation for a program selected by the user. In this example, the recording reservation processing section 513 displays in the display region R1 a window that asks the user whether or not to make a recording reservation for the program that is broadcast on Channel 2 from seven to eight everyday.

Further, as shown in Fig. 19, the recording reservation processing section 513 shows, in the display section 233, which external input the television 11 needs to switch to in making a recording reservation. In this example, the recording reservation processing section 513 shows, in the display region R2, that the television 11 needs to switch to the external input N 1.

It should be noted that when the user presses the send button B1 displayed in a lower part of the display section 233, the image data generating section 514 generates operating image data 3, and the image data transmitting section 515 transmits the operating image data 3 thus generated to the image data reception processing devices 10. In this example, the operating image data 3 that is generated is the operating image data 3 shown in Fig. 15.

Further, when the user presses the repeat button B2, the image data transmitting section 515 transmits the operating image data 3 thus generated to the image data reception processing devices 10.

Further, when the user presses the cancel button B3, the recording reservation for the program selected by the user is cancelled.

An example of a window where the recording reservation processing section 1751 of the recorder 13 outputs the status of recording reservations and an error message indicating that a recording reservation cannot be made to the display section 133 of the television 11 is described below with reference to Fig. 20. Fig. 20 is a schematic view showing an example of a window where the recording reservation processing section 1751 of the recorder 13 outputs the status of recording reservations and an error message indicating that a recording reservation cannot be made to the display section 133 of the television 11.

It is assumed here that (1) the user has pressed the send button B1 in the window shown in Fig. 19. That is, it is assumed that the operating image data 3 shown in Fig. 15 has been transmitted to the television 11 and the recorder 13. Further, it is assumed that (2) the recording reservation information storage section 184 of the recorder 13 has already stored therein information concerning a recording reservation for a program that is broadcast on Channel 8 from seven thirty to eight on June 1.

As shown in Fig. 20, the recording reservation processing section 1751 outputs the status of recording reservations to the display region R3 of the display section 133 of the television 11. In this example, the recording reservation processing section 1751 outputs, as the status of recording reservations, information indicating that there is already a recording reservation made for the program that is broadcast on Channel 8 from seven thirty to eight on June 1.

Furthermore, as shown in Fig. 20, the recording reservation processing section 1751 outputs an error message to the display region R4 of the display section 133 of the television 11. In this example, the error message outputted is an error message indicating that a recording reservation has been made for just around the same time as another recording reservation. That is, the error message tells the user as follows: although the operating image data 3 shown in Fig. 15 (i.e., operating image data 3 containing process-designating information 5 having a parameter 7 aimed at making a recording reservation for the program that is broadcast on Channel 2 from seven to eight everyday) has been transmitted to the recorder 13, there is already a recording reservation made for the program that is broadcast on Channel 8 from seven thirty to eight on June 1; therefore, the two recording reservations overlap in time with each other.

### (Effects)

As described above, the user transmits operating image data 3 from the operation device 20b (cellular phone 21b) to the plurality of image data reception processing devices 10 (television 11 and the recorder 13 in the user's home).

Then, each of the image data reception processing devices 10 extracts process-designating information 5 from the operating image data 3 thus received, determines whether or not a process designated by the process-designating information 5 thus extracted can be executed by the image data reception processing device 10, and executes only a process that can be executed by the image data reception processing device 10.

This allows the user to operate the plurality of related image data reception processing devices 10 at the same time by only once transmitting a piece of operating image data 3 containing one or more pieces of process-designating information 5 by using the cellular phone 21b, which is an operation device 20b. In particular, according to the present embodiment, in making a recording reservation for a television program, the user can cause the recorder 13 to make a recording reservation and the television 11 to switch external inputs, by only once transmitting, to the television 11 and the recorder 13, a piece of operating image data 3 containing process-designating information 5 designating the content of the processes that are to be executed by the television 11 and the recorder 13 respectively.

In other words, there is no need for the user to transmit appropriate operating image data 3 to each separate image data reception processing device 10. That is, there is no need to separately carry out an operation for transmitting, to the television 11, operating image data 3 containing process-designating information 5 designating the content of a process that is to be executed by the television 11 and an operation for transmitting, to the recorder 13, operating image data 3 containing process-designating information 5 designating the content of a process that is to be executed by the recorder 13.

Therefore, the present invention brings about improvement in operability and convenience for a user who uses an operation device 20b to operate an image data reception processing device 10.

### [Embodiment 3]

In each of the embodiments above, an image data reception processing device 10 having received image data executes a process according to the image data thus received, regardless of the status of the device. However, an image data reception processing device 10 may receive image data and then execute a process according to the mode of the device.

Accordingly, the present embodiment is described by taking as an example a case where a television serving as an image data reception processing device that receives image data executes a process according to the display mode of the device.

An embodiment of the present invention is described below with reference to Figs. 21 through 27. For convenience of explanation, members having the same functions as those described in Embodiments 1 and 2 are given the same reference numerals, and as such, are not described below. Similarly, processes identical to those described in Embodiments 1 and 2 are not described below, either.

It should be noted that an operation device, an image data providing device, and a data-processing system according to the present embodiment are the same as the operation device 20, the image data providing device 30, and the data-processing system 900 described in Embodiment 1, and as such, are not described here.

Moreover, an image data reception processing device according to the present embodiment is described, in particular, by taking a television 11b as an example. As such, the television 11b receives image data from the cellular phone 21, which an operation device 20, extracts process-designating information 5 contained, if any, in the image data thus received, and executes a process according to the process-designating information 5 thus extracted. As with the television 11 described in Embodiment 1, the television 11b is connected to the HTTP server 90 and the photo album server 91 through the communication network 800 such as the Internet.

### (Configuration of the Television 11b)

A configuration of the television 11b is schematically described with reference to Fig. 21. Fig. 21 is a block diagram schematically showing a configuration of the television 11b. It should be noted that the configuration shown in Fig. 21 is merely an example, and the configuration of the television 11b is not limited to that shown in Fig. 21.

As shown in Fig. 21, the television 11b includes a control section 110b, a storage section 120b, a wireless communication section 131, an external communication section 132, a display section 133, an input operation section 134, a broadcast data receiving section 135, and an external input section 137.

The control section 110b controls the storage section 120b, the wireless communication section 131, the external communication section 132, the display section 133, the input operation section 134, the broadcast data receiving section 135, and the external input section 137, and also executes predetermined arithmetic processing. Examples of the predetermined arithmetic processing include reception processing of image data transmitted from the cellular phone 21. The control section 110b can be constituted, for example, by a CPU, etc. A configuration of the control section 110b will be described in detail later.

The storage section 120b serves to store therein various types of data that are used in the control section 110b and data obtained by execution of programs, and is realized by a volatile memory such as a RAM or a nonvolatile memory such as a ROM or a flash memory. The various types of data are stored in various storage sections located internally in the storage section 120b. The storage section 120b includes an image data storage section 121, an executable process storage section 122b, and a process-designating information storage section 123.

The executable process storage section 122b serves to store therein a process that can be executed by the television 11b in each display mode. For that purpose, the executable process storage section 122b stores therein, in readable form, a combination of a display mode and a command name 6 designating a process that can be executed in that display mode. Furthermore, for each mode, the executable process storage section 122b stores therein the execution order that a process designated by a command name 6 associated with the mode is to be executed, with the execution order associated with the command name 6.

The executable process storage section 122b can have such a data structure as shown below in Table 2. Table 2 shows an example of a data structure of the executable process storage section 122b. As shown in Fig. 2, the executable process storage section 122b contains a record composed of a combination of a "Display Modes" column, a "Commands" column, and an "Execution Orders" column. The "Display Modes" column contains information that identifies display modes. The "Commands" column contains information that identifies commands, e.g., command names 6. The "Execution Orders" column contains information (e.g., a numerical value) that indicates the order that a process designated by a command 6 is to be executed. It should be noted that the "Execution Orders" column does not necessarily need to be contained.

In the example shown in Table 2, "Photo Album" and "WWW Get" are stored in the "Commands" column as command names 6 designating processes that are executed in the browser mode. Moreover, "Photo Album" is assigned an "execution order" of "1", and "WWW Get" is assigned an "execution order" of "2". Therefore, in the browser mode, the process designated by "Photo Album" and the process designated by "WWW Get" can be executed. Moreover, in the browser mode, the process designated by "Photo Album" is a process that is to be executed first, and the process designated by "Photo Album" is a process that is to be executed second. It should be noted that a process stored to be executed second or later does not necessarily need to be executed.

Further, for example, only "Photo Album" is stored in the "Commands" column as a command name 6 designating a process that is executed in the broadcasting mode. Moreover, "Photo Album" is assigned an "execution order" of "1". Therefore, in the broadcasting mode, only the process designated by "Photo Album" can be executed.

Further, information that is stored in the executable process storage section 122b may be set in advance at a point in time such as factory shipment or may be able to be set by the television 11b user's using the input operation section 134.

**[Table 2]**

| Display Modes | Commands | Execution Orders |
|---|---|---|
| Browser Mode | Photo Album | 1 |
| | WWW Get | 2 |
| Album Mode | WWW Get | 1 |
| | Photo Album | 2 |
| Image Display Mode | Photo Album | 1 |
| | WWW Get | 2 |
| Broadcasting Mode | Photo Album | 1 |

The process-designating information storage section 123 serves to store therein a piece of process-designating information 5 designating a process that can be executed by the television 11b, from among pieces of process-designating information 5 contained, if any, in image data transmitted from the operation device.

It should be noted that the storage section 120b does not necessarily need to be provided in the television 11b, but may be configured to be readably connected as an external storage device to the television 11. Alternatively, the storage section 120b may be a memory (memory card), such as an SD card, which can be inserted into and removed from the television 11b.

The control section 110b includes an image data receiving section (process-designating information obtaining means) 111, a process-designating information extracting section (process-designating information obtaining means, process-designating information extracting means) 112b, an event processing section 113, a display mode control section 114, a process executing section (current mode obtaining means, process executing means) 115b, and a broadcast data output processing section 117.

The process-designating information extracting section 112b has the same functions as the process-designating information extracting section 112 of Embodiment 1. However, unlike the process-designating information extracting section 112 of Embodiment 1, the process-designating information extracting section 112b determines, in accordance with information, stored in the executable process storage section 122b, which is capable of identifying a command designating a process that can be executed by the television 11b, which one of the pieces of process-designating information 5 thus extracted is a piece of process-designating information 5 containing the command designating the process that can be executed by the television 11.

As soon as the process-designating information extracting section 112b terminates its process, the process executing section 115b first obtains the current display mode as controlled by the display mode control section 114, and then executes various type of processing in accordance with the process-designating information 5 stored in the process-designating information storage section 123 and the information stored in the executable process storage section 122b, depending on whether the television 11b is currently in (1) the album mode, (2) the browser mode, (3) the image display mode, or (4) the broadcasting mode.

For the purpose of executing various types of processing, the process executing section 115b includes an HTTP server access processing section 1151b, a photo album processing section 1152b, a television command processing section 1153b, and an image data display processing section 1154b.

The HTTP server access processing section 1151b obtains a Web page through the external communication section 132 from the HTTP server 90 as indicated by the URL designated by the parameter 7 of process-designating information 5 whose command name 6 is "WWW Get". Then, the HTTP server access processing section 1151b outputs the Web page thus obtained to the display section 133.

Alternatively, the HTTP server access processing section 1151b may transmit image data containing the process-designating information 5 through the external communication section 132 to the HTTP server 90 as indicated by the URL designated by the parameter 7 of the process-designating information 5 whose command name 6 is "WWW Post". The image data is obtained from the image data storage section 121. In the case of return of predetermined data from the HTTP server 90 in response to the image data thus transmitted, the HTTP server access processing section 1151b may output the predetermined data to the display section 133.

The photo album processing section 1152b accesses the photo album server 91 through the external communication section 132 and obtains a group of photo data belonging to an album specified by the ID designated by the parameter 7 of process-designating information 5 whose command name 6 is "Photo Album". Then, the photo album processing section 1152b displays in the displays section 133 a list or slide show of photos of the group of photo data thus obtained.

The television command processing section 1153b controls the television 11 in accordance with information designated by the parameter 7 of process-designating information 5 whose command name 6 is "Television Command". For example, when the information designated by the parameter 7 of the process-designating information 5 is aimed at switching external inputs on the television 11b, the television command processing section 1153b instructs the input operation section 137 to switch external inputs in accordance with the information designated by the parameter 7.

The image data display processing section 1154b outputs image data to the display section 133. The image data is obtained from the image data storage section 121.

It should be noted that the image data display processing section 1154b includes a decoder for expanding image information contained in image data. More specifically, the decoder reads out compressed (or encoded) image information contained in image data and displayably expands (or decodes) the image information thus read out. The decoder is capable of handling image data of various formats such as JPEG and TIFF, and executes an expansion process according to image data to be expanded.

In following, the content of processing is described for each case where the television 11b is currently in (1) the album mode, (2) the browser mode, (3) the image display mode, or (4) the broadcasting mode. It should be noted that in executing various types of processing, the process executing section 115b refers to the executable process storage section 122b and obtains, in advance, a command name 6 designating a process that can be executed in the current display mode and the execution order that the process is executed. The following description assumes that the executable process storage section 122b contains the information shown in Table 2.

### (Content of a Process in the Album Mode)

First, a case where the television 11b is currently in the album mode is described. First, the process executing section 115b checks whether or not the process-designating information storage section 123 has process-designating information 5 stored therein. Then, if the process-designating information storage section 123 has no process-designating information 5 stored therein, the process executing section 115b instructs the display mode control section 114 to switch the display mode to the image display mode. After that, the process executing section 115b causes the image data display processing section 1154b to perform the process.

Alternatively, if the process-designating information storage section 123 has process-designating information 5 stored therein, the process executing section 115b first checks whether or not the process-designating information storage section 123 has stored therein process-designating information 5 whose command name 6 is "Photo Album", which designates a process that is to be executed first in the album mode. Then, if the process-designating information storage section 123 has stored therein process-designating information 5 whose command name 6 is "Photo Album", the process executing section 115b instructs the photo album processing section 1152b to perform the process.

Alternatively, if the process-designating information storage section 123 does not have stored therein process-designating information 5 whose command name 6 is "Photo Album", the process executing section 115b checks whether or not the process-designating information storage section 123 has stored therein process-designating information 5 whose command name 6 is "WWW Get", which designates a process that is to be executed second in the album mode. Then, if the process-designating information storage section 123 has stored therein process-designating information 5 whose command name 6 is "WWW Get", the process executing section 115b instructs the display mode control section 114 to switch the display mode to the browser mode. After that, the process executing section 115b causes the HTTP server access processing section 1151b to perform the process.

As described above, in cases where the television 11b is currently in the album mode and the process-designating information storage section 123 has process-designating information 5 stored therein, the process executing section 115b first checks whether or not the process-designating information storage section 123 has stored therein process-designating information 5 whose command name 6 is "Photo Album", which designates a process that is to be executed first, and then checks whether or not the process-designating information storage section 123 has stored therein process-designating information 5 whose command name 6 is "WWW Get", which designates a process that is to be executed second. The process executing section 115b carries out these checks in accordance with the command name 6 of a process that can be executed in the current display mode and the execution order that the process is executed, as obtained in advance with reference to the executable process storage section 122b. It should be noted that all processes assigned execution orders do not necessarily need to be executed, and an upper limit to the number of processes that are executed may be set up in advance.

It should be noted that if the process-designating information storage section 123 has stored therein process-designating information 5 whose command name 6 is "Television Command", the process executing section 115b may cause the television command processing section 1153b to perform the process.

### (Content of Processing in the Browser Mode)

Next, a case where the television 11b is currently in the browser mode is described. First, the process executing section 115b checks whether or not the process-designating information storage section 123 has process-designating information 5 stored therein. Then, if the process-designating information storage section 123 has no process-designating information 5 stored therein, the process executing section 115b instructs the display mode control section 114 to switch the display mode to the image display mode. After that, the process executing section 115b causes the image data display processing section 1154b to perform the process.

Alternatively, if the process-designating information storage section 123 has process-designating information 5 stored therein, the process executing section 115b first checks whether or not the process-designating information storage section 123 has stored therein process-designating information 5 whose command name 6 is "WWW Get", which designates a process that is to be executed first in the browser mode. Then, if the process-designating information storage section 123 has stored therein process-designating information 5 whose command name 6 is "WWW Get", the process executing section 115b instructs the HTTP server access processing section 1151b to perform the process.

Alternatively, if the process-designating information storage section 123 does not have stored therein process-designating information 5 whose command name 6 is "WWW Get", the process executing section 115b checks whether or not the process-designating information storage section 123 has stored therein process-designating information 5 whose command name 6 is "Photo Album", which designates a process that is to be executed second in the browser mode. Then, if the process-designating information storage section 123 has stored therein process-designating information 5 whose command name 6 is "Photo Album", the process executing section 115b instructs the display mode control section 114 to switch the display mode to the album mode. After that, the process executing section 115b causes the photo album processing section 1152b to perform the process.

As described above, in cases where the television 11b is currently in the browser mode and the process-designating information storage section 123 has process-designating information 5 stored therein, the process executing section 115b first checks whether or not the process-designating information storage section 123 has stored therein process-designating information 5 whose command name 6 is "WWW Get", which designates a process that is to be executed first in the browser mode, and then checks whether or not the process-designating information storage section 123 has stored therein process-designating information 5 whose command name 6 is "Photo Album", which designates a process that is to be executed second in the browser mode. The process executing section 115b carries out these checks in accordance with the command name 6 of a process that can be executed in the current display mode and the execution order that the process is executed, as obtained in advance with reference to the executable process storage section 122b.

It should be noted that if the process-designating information storage section 123 has stored therein process-designating information 5 whose command name 6 is "Television Command", the process executing section 115b may cause the television command processing section 1153b to perform the process.

### (Content of a Process in the Image Display Mode)

Next, a case where the television 11b is currently in the image display mode is described. First, the process executing section 115b checks whether or not the process-designating information storage section 123 has process-designating information 5 stored therein. Then, if the process-designating information storage section 123 has no process-designating information 5 stored therein, the process executing section 115b causes the image data display processing section 1154b to perform the process.

Alternatively, if the process-designating information storage section 123 has process-designating information 5 stored therein, the process executing section 115b first checks whether or not the process-designating information storage section 123 has stored therein process-designating information 5 whose command name 6 is "Photo Album", which designates a process that is to be executed first in the image display mode. Then, if the process-designating information storage section 123 has stored therein process-designating information 5 whose command name 6 is "Photo Album", the process executing section 115b instructs the display mode control section 114 to switch the display mode to the album mode. After that, the process executing section 115b causes the photo album processing section 1152b to perform the process.

Alternatively, if the process-designating information storage section 123 does not have stored therein process-designating information 5 whose command name 6 is "Photo Album", the process executing section 115b checks whether or not the process-designating information storage section 123 has stored therein process-designating information 5 whose command name 6 is "WWW Get", which designates a process that is to be executed second in the image display mode. Then, if the process-designating information storage section 123 has stored therein process-designating information 5 whose command name 6 is "WWW Get", the process executing section 115b instructs the display mode control section 114 to switch the display mode to the browser mode. After that, the process executing section 115b causes the HTTP server access processing section 1151b to perform the process.

As described above, in cases where the television 11b is currently in the image display mode and the process-designating information storage section 123 has process-designating information 5 stored therein, the process executing section 115b first checks whether or not the process-designating information storage section 123 has stored therein process-designating information 5 whose command name 6 is "Photo Album", which designates a process that is to be executed first in the image display mode, and then checks whether or not the process-designating information storage section 123 has stored therein process-designating information 5 whose command name 6 is "WWW Get", which designates a process that is to be executed second in the image display mode. The process executing section 115b carries out these checks in accordance with the command name 6 of a process that can be executed in the current display mode and the order that the process is executed, as obtained in advance with reference to the executable process storage section 122b.

It should be noted that if the process-designating information storage section 123 has stored therein process-designating information 5 whose command name 6 is "Television Command", the process executing section 115b may cause the television command processing section 1153b to perform the process.

### (Content of a Process in the Broadcasting Mode)

Next, a case where the television 11b is currently in the broadcasting mode is described. First, the process executing section 115b displays in the display section 133 a confirmation window that asks the user whether or not to process image data. After that, if the user puts into the confirmation window an input aimed at not processing the image data (such as pressing a button aimed at not processing the image data), the process executing section 115b stops the confirmation window from being displayed. The television 11b continues, in the broadcasting mode, to output, to the display section 133, a picture on a channel received by the broadcast data receiving section 135.

Alternatively, if the user puts into the confirmation window an input aimed at processing the image data (such as pressing a button aimed at processing the image data), the process executing section 115b stops the confirmation window from being displayed, and then checks whether or not the process-designating information storage section 123 has process-designating information 5 stored therein. Then, if the process-designating information storage section 123 has no process-designating information 5 stored therein, the process executing section 115b causes the image data display processing section 1154b to perform the process.

Alternatively, if the process-designating information storage section 123 has process-designating information 5 stored therein, the process executing section 115b first checks whether or not the process-designating information storage section 123 has stored therein process-designating information 5 whose command name 6 is "Photo Album", which designates a process that is to be executed first in the broadcasting mode. Then, if the process-designating information storage section 123 has stored therein process-designating information 5 whose command name 6 is "Photo Album", the process executing section 115b instructs the display mode control section 114 to switch the display mode to the album mode. After that, the process executing section 115b causes the photo album processing section 1152b to perform the process.

Alternatively, if the process-designating information storage section 123 does not have stored therein process-designating information 5 whose command name 6 is "Photo Album", the process executing section 115b terminates the process without executing anything.

As described above, in cases where the television 11b is currently in the broadcasting mode and the process-designating information storage section 123 has process-designating information 5 stored therein, the process executing section 115b checks whether or not the process-designating information storage section 123 has stored therein process-designating information 5 whose command name 6 is "Photo Album", which designates a process that is to be executed first in the broadcasting mode. The process executing section 115b carries out this check in accordance with the command name 6 of a process that can be executed in the current display mode and the order that the process is executed, as obtained in advance with reference to the executable process storage section 122b.

It should be noted that if the process-designating information storage section 123 has stored therein process-designating information 5 whose command name 6 is "Television Command", the process executing section 115b may cause the television command processing section 1153b to perform the process.

### (Outline of the Flow of a Process in the Television 11b)

The flow of a process that the television 11 performs upon receiving image data is schematically described below with reference to Figs. 22 through 26. It should be noted that the flow of a process as shown in Figs. 22 through 26 is merely an example, and the flow of a process that the television 11b performs upon receiving image data is not limited to this example.

Fig. 22 is a flow chart schematically showing the flow of a process that the television 11b performs upon receiving image data.

First, the image data receiving section 111 receives image data from the cellular phone 21, which is an operation device 20, through the wireless communication section 131, and then stores in the image data storage section 121 the image data thus received (Step S601).

Then, the process-designating information extracting section 112 determines whether the image data thus stored contains process-designating information 5 and, if it does, extracts the process-designating information 5. Then, the process-designating information extracting section 112 stores in the process-designating information storage section 123 only a piece of process-designating information 5 containing a command (such as "WWW Get", "WWW Post", "Photo Album", or "Television Command") designating a process that can be executed by the television 11, from among the pieces of process-designating information 5 thus extracted (Step S602) (process-designating information obtaining step).

Next, the process executing section 115 refers to the current display mode as controlled by the display mode control section 114, and then executes various type of processing, depending on whether the television 11b is currently in (1) the album mode, (2) the browser mode, (3) the image display mode, or (4) the broadcasting mode (process executing step).

If the television 11b is currently in the album mode (YES in Step S603), the process executing section 115 performs a process in the album mode (Step S604). Alternatively, if the television 11b is currently in the browser mode (YES in Step S605), the process executing section 115 performs a process in the browser mode (Step S606). Alternatively, if the television 11b is currently in the image display mode (YES in Step S607), the process executing section 115 performs a process in the image display mode (Step S608). Alternatively, if the television 11b is currently in the broadcasting mode (YES in Step S609), the process executing section 115 performs a process in the broadcasting mode (Step S610). The following describes a process in the album mode, a process in the browser mode, a process in the image display mode, and a process in the broadcasting mode.

### (Flow of a Process in the Album Mode)

Fig. 23 is a flow chart showing the flow of a process that the television 11b performs in the album mode upon receiving image data.

First, the process executing section 115b checks whether or not the process-designating information storage section 123 has process-designating information 5 stored therein (Step S701). Then, if the process-designating information storage section 123 has no process-designating information 5 stored therein (YES in Step S701), the process executing section 115b instructs the display mode control section 114 to switch the display mode to the image display mode, and the display mode control section 114 switches the display mode to the image display mode (Step S702).

After that, the process executing section 115b causes the image data display processing section 1154b to perform a process. That is, the image data display processing section 1154b outputs the image data to the display section 133 (Step S703).

Alternatively, if the process-designating information storage section 123 has process-designating information 5 stored therein (NO in Step S701) and the process-designating information storage section 123 has stored therein process-designating information 5 whose command name 6 is "Photo Album", which designates a process that is to be executed first in the album mode (YES in Step S704), the process executing section 115b causes the photo album processing section 1152b to perform the process. That is, the photo album processing section 1152b accesses the photo album server 91 and obtains a group of photo data belonging to an album specified by the ID designated by the parameter 7 of the process-designating information 5 whose command name 6 is "Photo Album" (Step S705). Then, the photo album processing section 1152b displays in the displays section 133 a list or slide show of photos of the group of photo data thus obtained (Step S706).

Alternatively, if the process-designating information storage section 123 does not have stored therein process-designating information 5 whose command name 6 is "Photo Album" (NO in Step S704) and the process-designating information storage section 123 has stored therein process-designating information 5 whose command name 6 is "WWW Get", which designates a process that is to be executed second in the album mode (YES in Step S707), the process executing section 115b instructs the display mode control section 114 to switch the display mode to the browser mode, and the display mode control section 114 switches the display mode to the browser mode (Step S708).

After that, the process executing section 115b causes the HTTP server access processing section 1151b to perform the process. That is, the HTTP server access processing section 1151b obtains a Web page from the HTTP server 90 as indicated by the URL designated by the parameter 7 of the process-designating information 5 whose command name 6 is "WWW Get" (Step S709). Then, the HTTP server access processing section 1151b outputs the Web page thus obtained to the display section 133 (Step S710).

It should be noted that if the process-designating information storage section 123 does not have stored therein process-designating information 5 whose command name 6 is "WWW Get" (NO in Step S707), the process is terminated.

### (Flow of a Process in the Browser Mode)

Fig. 24 is a flow chart showing the flow of a process that the television 11b performs in the browser mode upon receiving image data. Steps S711, S712, and S713 are the same as Steps S701, S702, and S703 of the flow chart shown in Fig. 24, and as such, are not described here.

If the process-designating information storage section 123 has process-designating information 5 stored therein (NO in Step S711) and the process-designating information storage section 123 has stored therein process-designating information 5 whose command name 6 is "WWW Get", which designates a process that is to be executed first in the browser mode (YES in Step S714), the process executing section 115b causes the image data display processing section 1154b to perform the process (Steps S715 and S716). Steps S715 and S716 are the same as Steps S709 and S710 of the flow chart shown in Fig. 23, and as such, are not described here.

Alternatively, if the process-designating information storage section 123 does not have stored therein process-designating information 5 whose command name 6 is "WWW Get" (NO in Step S714) and the process-designating information storage section 123 has stored therein process-designating information 5 whose command name 6 is "Photo Album", which designates a process that is to be executed second in the browser mode (YES in Step S717), the process executing section 115b instructs the display mode control section 114 to switch the display mode to the album mode, and the display mode control section 114 switches the display mode to the album mode (Step S718). After that, the process executing section 115b causes the photo album processing section 1152b to perform the process (Steps S719 and S720). Steps S719 and S720 are the same as Steps S705 and S706 of the flow chart shown in Fig. 23, and as such, are not described here.

It should be noted that if the process-designating information storage section 123 does not have stored therein process-designating information 5 whose command name 6 is "Photo Album" (NO in Step S717), the process is terminated.

### (Flow of a Process in the Image Display Mode)

Fig. 25 is a flow chart showing the flow of a process that the television 11b performs in the image display mode upon receiving image data.

First, the process executing section 115b checks whether or not the process-designating information storage section 123 has process-designating information 5 stored therein (Step S721). Then, if the process-designating information storage section 123 has no process-designating information 5 stored therein (YES in Steps S721), the process executing section 115b causes the image data display processing section 1154b to perform the process. That is, the image data display processing section 1154b outputs the image data to the display section 133 (Step S722).

Alternatively, in cases where the process-designating information storage section 123 has process-designating information 5 stored therein (NO in Step S701) and the process-designating information storage section 123 has stored therein process-designating information 5 whose command name 6 is "Photo Album", which designates a process that is to be executed first in the image display mode (YES in Step S704), the process executing section 115b instructs the display mode control section 114 to switch the display mode to the album mode, and the display mode control section 114 switches the display mode to the album mode (Step S724). After that, the process executing section 115b causes the photo album processing section 1152b to perform the process (Steps S725 and S726). Steps S725 and S726 are the same as Steps S705 and S706 of the flow chart shown in Fig. 23, and as such, are not described here.

Alternatively, in cases where the process-designating information storage section 123 does not have stored therein process-designating information 5 whose command name 6 is "Photo Album" (NO in Step S723) and the process-designating information storage section 123 has stored therein process-designating information 5 whose command name 6 is "WWW Get", which designates a process that is to be executed second in the image display mode (YES in Step S727), the process executing section 115b instructs the display mode control section 114 to switch the display mode to the browser mode, and the display mode control section 114 switches the display mode to the browser mode (Step S728).

After that, the process executing section 115b causes the HTTP server access processing section 1151b to perform the process (Steps S729 and S730). Steps S729 and S730 are the same as Steps S709 and S710 of the flow chart shown in Fig. 23, and as such, are not described here.

It should be noted that if the process-designating information storage section 123 does not have stored therein process-designating information 5 whose command name 6 is "WWW Get" (NO in Step S727), the process is terminated.

### (Flow of a Process in the Broadcasting Mode)

Fig. 26 is a flow chart showing the flow of a process that the television 11b performs in the broadcasting mode upon receiving image data.

First, the process executing section 115b displays in the display section 133 a confirmation window that asks the user whether or not to process the image data (Step S731). Then, if the user puts into the confirmation window an input aimed at not processing the image data (NO in Step S732), the process executing section 115b stops the confirmation window from being displayed (Step S733). Then, the television 11b continues, in the broadcasting mode, to output, to the display section 133, a picture on a channel received by the broadcast data receiving section 135.

Alternatively, if the user puts into the confirmation window an input aimed at processing the image data (YES in Step S732), the process executing section 115b stops the confirmation window from being displayed (Step S734). Meanwhile, the picture on the channel received by the broadcast data receiving section 135 is output once again to the display section 133.

Then, the process executing section 115b checks whether or not the process-designating information storage section 123 has process-designating information 5 stored therein (Step S735). Then, if the process-designating information storage section 123 has no process-designating information 5 stored therein (YES in Step S735), the process executing section 115b instructs the display mode control section 114 to switch the display mode to the image display mode, and the display mode control section 114 switches the display mode to the image display mode (Step S736).

After that, the process executing section 115b causes the image data display processing section 1154b to perform the process. That is, the image data display processing section 1154b outputs the image data to the display section 133 (Step S737).

Alternatively, in cases where the process-designating information storage section 123 has process-designating information 5 stored therein (NO in Step S735) and the process-designating information storage section 123 has stored therein process-designating information 5 whose command name 6 is "Photo Album", which designates a process that is to be executed first in the broadcasting mode (YES in Step S738), the process executing section 115b instructs the display mode control section 114 to switch the display mode to the album mode, and the display mode control section 114 switches the display mode to the album mode (Step S739). After that, the process executing section 115b causes the photo album processing section 1152b to perform the process (Steps S740 and S741). Steps S740 and S741 are the same as Steps S705 and S706 of the flow chart shown in Fig. 23, and as such, are not described here.

It should be noted that if the process-designating information storage section 123 does not have stored therein process-designating information 5 whose command name 6 is "Photo Album" (NO in Step S738), the process is terminated.

It is hard for the user to understand what is happening when the television 11b abruptly changes from outputting a picture of a television broadcast to the display section 133 in the broadcasting mode to displaying a Web page in the browser mode, and this may hamper convenience for the user. Accordingly, in the flow chart above, only if the process-designating information storage section 123 has no process-designating information 5 stored therein (YES in Step S735) or the process-designating information storage section 123 has stored therein process-designating information 5 whose command name 6 is "Photo Album" (YES in Step S738), the television 11b performs the process.

Further, by displaying, in advance, in the display section 133 a confirmation window that asks the user whether or not to process the image data (Step S731), the television 11b helps the user to understand when is going to happen.

It should be noted that the flow of a process in the broadcasting mode is not limited to the flow chart shown in Fig. 26 and, for example, may be such a flow that image data is not processed in the broadcasting mode.

### (Examples of Windows)

Transition from one window to another for display in the display section 133 of the television 11b in the flows of processes shown in Figs. 23 through 26 is described below with reference to Fig. 27 by taking eight cases as examples.

Fig. 27 includes: (a) a diagram showing the appearance of image data, as displayed in the display section 133 in the image display mode; (b) a diagram showing the appearance of a Web page obtained from the HTTP server 90, as displayed in the display section 133 in the browser mode; (c) a diagram showing the appearance of a list of photos represented by a group of photo data obtained from the photo album server 91, as displayed in the display section 133 in the album mode; and (d) a diagram showing the appearance of a confirmation window that asks the user whether or not to process the image data, as displayed in the display section 133 in the broadcasting mode.

### (Case 1)

First, a case is described where while displaying a Web page in the display section 133 in the browser mode as obtained from the HTTP server 90 (e.g., (b) of Fig. 27), the television 11b has received image data containing process-designating information 5 whose command name 6 is "WWW Get".

In this case, Steps S601 and S602 of the flow chart shown in Fig. 22 are performed, and then the process-designating information 5 whose command name 6 is "WWW Get" is stored in the process-designating information storage section 123. Then, since the television 11b is in the browser mode (YES in Step S605), it performs a process in the browser mode (Step S606).

That is, because in the flow chart shown in Fig. 24 the process-designating information storage section 123 has stored therein the process-designating information 5 whose command name 6 is "WWW Get" (NO in Step S711, YES in Step S714), the HTTP server access processing section 1151b obtains a Web page from the HTTP server 90 as indicated by the URL designated by the parameter 7 of the process-designating information 5 whose command name 6 is "Photo Album" (Step S715), and then outputs the Web page thus obtained to the display section 133 (Step S716).

Therefore, the television 11b changes to displaying in the display section 133 a window that shows the Web page thus obtained.

### (Case 2)

Next, a case is described where while displaying photos in the display section 133 in the album mode as obtained from the photo album server 91 (e.g., (c) of Fig. 27), the television 11b has received image data containing process-designating information 5 whose command name 6 is "WWW Get".

In this case, Steps S601 and S602 of the flow chart shown in Fig. 22 are performed, and then the process-designating information 5 whose command name 6 is "WWW Get" is stored in the process-designating information storage section 123. Then, since the television 11b is in the album mode (YES in Step S603), it performs a process in the album mode (Step S604).

That is, because in the flow chart shown in Fig. 23 the process-designating information storage section 123 has stored therein the process-designating information 5 whose command name 6 is "WWW Get" (NO in Step S701, NO in Step S704, YES in Step S707), the display mode control section 114 switches the display mode to the browser mode in accordance with an instruction from the process executing section 115b (Step S708).

After that, the process executing section 115b causes the HTTP server access processing section 1151b to perform the process. That is, the HTTP server access processing section 1151b obtains a Web page from the HTTP server 90 as indicated by the URL designated by the parameter 7 of the process-designating information 5 whose command name 6 is "WWW Get" (Step S709), and then outputs the Web page thus obtained to the display section 133 (Step S710).

Therefore, the television 11b changes to displaying in the display section 133 a window that shows the Web page thus obtained (e.g., the window shown in (b) of Fig. 27).

### (Case 3)

Next, a case is described where while displaying a Web page in the display section 133 in the browser mode as obtained from the HTTP server 90 (e.g., (b) of Fig. 27), the television 11b has received image data containing no process-designating information 5 (i.e., displaying image data 4).

In this case, Steps S601 and S602 of the flow chart shown in Fig. 22 are performed, but no process-designating information 5 is stored in the process-designating information storage section 123. Then, since the television 11b is in the browser mode (YES in Step S605), it performs a process in the browser mode (Step S606).

That is, because in the flow chart shown in Fig. 24 the process-designating information storage section 123 does not have stored therein process-designating information 5 whose command name 6 is "WWW Get" (YES in Step S711), the display mode control section 114 switches the display mode to the image display mode in accordance with an instruction from the process executing section 115b (Step S712). After that, the image data display processing section 1154b outputs the image data to the display section 133 (Step S713).

Therefore, the television 11b changes to displaying in the display section 133 a window that shows the image data (e.g., the window shown in (a) of Fig. 27).

### (Case 4)

Next, a case is described where while displaying image data in the display section 133 in the image display mode (e.g., (a) of Fig. 27), the television 11b has received image data containing process-designating information 5 whose command name 6 is "WWW Get" and process-designating information 5 whose command name 6 is "Photo Album".

In this case, Steps S601 and S602 of the flow chart shown in Fig. 22 are performed, and then the process-designating information 5 whose command name 6 is "WWW Get" and the process-designating information 5 whose command name 6 is "Photo Album" are stored in the process-designating information storage section 123. Then, since the television 11b is in the image display mode (YES in Step S607), it performs a process in the image display mode (Step S608).

That is, because in the flow chart shown in Fig. 25 the process-designating information storage section 123 has stored therein the process-designating information 5 whose command name 6 is "Photo Album" (NO in Step S721, YES in Step S723), the display mode control section 114 switches the display mode to the album mode in accordance with an instruction from the process executing section 115b (Step S724). Then, the photo album processing section 1152b accesses the photo album server 91, obtains a group of photo data belonging to an album specified by the ID designated by the parameter 7 of the process-designating information 5 whose command name 6 is "Photo Album" (Step S725), and then displays in the displays section 133 a list or slide show of photos of the group of photo data thus obtained (Step S726).

Therefore, the television 11b changes to displaying in the display section 133 a window that shows the photos (e.g., the window shown in (c) of Fig. 27).

In this case, although the process-designating information storage section 123 has stored therein the process-designating information 5 whose command name 6 is "WWW Get", the process does not reach Step S727 as noted above; therefore; the television 11b does not switch to a window that shows a Web page (e.g., the window shown in (b) of Fig. 27).

### (Case 5)

Next, a case is described where while displaying a Web page in the display section 133 in the browser mode as obtained from the HTTP server 90 (e.g., (b) of Fig. 27), the television 11b has received image data containing process-designating information 5 whose command name 6 is "WWW Get" and process-designating information 5 whose command name 6 is "Photo Album".

In this case, Steps S601 and S602 of the flow chart shown in Fig. 22 are performed, and then the process-designating information 5 whose command name 6 is "WWW Get" and the process-designating information 5 whose command name 6 is "Photo Album" are stored in the process-designating information storage section 123. Then, since the television 11b is in the browser mode (YES in Step S605), it performs a process in the browser mode (Step S606).

That is, because in the flow chart shown in Fig. 24 the process-designating information storage section 123 has stored therein the process-designating information 5 whose command name 6 is "WWW Get" (NO in Step S711, YES in Step S714), the HTTP server access processing section 1151b obtains a Web page from the HTTP server 90 as indicated by the URL designated by the parameter 7 of the process-designating information 5 whose command name 6 is "WWW Get" (Step S715), and then outputs the Web page thus obtained to the display section 133 (Step S716).

Therefore, the television 11b changes to displaying in the display section 133 a window that shows the Web page thus obtained.

In this case, although the process-designating information storage section 123 has stored therein the process-designating information 5 whose command name 6 is "Photo Album", the process does not reach Step S717 as noted above; therefore; the television 11b does not switch to a window that shows photos (e.g., the window shown in (c) of Fig. 27).

### (Case 6)

Next, a case is described where while displaying photos in the display section 133 in the album mode as obtained from the photo album server 91 (e.g., (c) of Fig. 27), the television 11b has received image data containing process-designating information 5 whose command name 6 is "WWW Get" and process-designating information 5 whose command name 6 is "Photo Album".

In this case, Steps S601 and S602 of the flow chart shown in Fig. 22 are performed, and then the process-designating information 5 whose command name 6 is "WWW Get" and the process-designating information 5 whose command name 6 is "Photo Album" are stored in the process-designating information storage section 123. Then, since the television 11b is in the album mode (YES in Step S603), it performs a process in the album mode (Step S604).

That is, because in the flow chart shown in Fig. 23 the process-designating information storage section 123 has stored therein the process-designating information 5 whose command name 6 is "Photo Album" (NO in Step S701, YES in Step S704), the photo album processing section 1152b accesses the photo album server 91, obtains a group of photo data belonging to an album specified by the ID designated by the parameter 7 of the process-designating information 5 whose command name 6 is "Photo Album" (Step S705), and then displays in the displays section 133 a list or slide show of photos of the group of photo data thus obtained (Step S706).

Therefore, the television 11b changes to displaying in the display section 133 a window that shows the photos (e.g., the window shown in (c) of Fig. 27).

In this case, although the process-designating information storage section 123 has stored therein the process-designating information 5 whose command name 6 is "WWW Get", the process does not reach Step S707 as noted above; therefore; the television 11b does not switch to a window that shows a Web page (e.g., the window shown in (b) of Fig. 27).

### (Case 7)

Next, a case is described where while displaying a picture of a television broadcast in the display section 133 in the broadcasting mode, the television 11b has received image data containing process-designating information 5 whose command name 6 is "Photo Album".

In this case, Steps S601 and S602 of the flow chart shown in Fig. 22 are performed, and then the process-designating information 5 whose command name 6 is "Photo Album" are stored in the process-designating information storage section 123. Then, since the television 11b is in the broadcasting mode (YES in Step S609), it performs a process in the broadcasting mode (Step S610).

That is, in the flow chart shown in Fig. 26, first, the process executing section 115b displays in the display section 133 a confirmation window that asks the user whether or not to process the image data (Step S731). The confirmation window here is described by taking as an example the window shown in (d) of Fig. 27.

Then, if the user presses the "NO" button on the window shown in (d) of Fig. 27 (i.e., if the uses puts into the window shown in (d) of Fig. 27 an input aimed at not processing the image data (NO in Step S732)), the process executing section 115b stops the confirmation window from being displayed (Step S733). Then, the television 11b continues, in the broadcasting mode, to output the picture of the television broadcast to the display section 133.

Alternatively, if the user presses the "YES" button on the window shown in (d) of Fig. 27 (i.e., if the user puts into in the window shown in (d) of Fig. 27 an input aimed at processing the image data (YES in Step S732)), the process executing section 115b stops the confirmation window from being displayed (Step S734). Then, because the process-designating information storage section 123 has stored therein the process-designating information 5 whose command name 6 is "Photo Album" (NO in Step S735, YES in Step S738), the display mode control section 114 switches the display mode to the album mode in accordance with an instruction from the process executing section 115b (Step S739). Then, the photo album processing section 1152b accesses the photo album server 91, obtains a group of photo data belonging to an album specified by the ID designated by the parameter 7 of the process-designating information 5 whose command name 6 is "Photo Album" (Step S740), and then displays in the displays section 133 a list or slide show of photos of the group of photo data thus obtained (Step S741).

Therefore, the television 11b changes to displaying in the display section 133 a window that shows the photos (e.g., the window shown in (c) of Fig. 27).

### (Case 8)

Next, a case is described where while displaying a picture of a television broadcast in the display section 133 in the broadcasting mode, the television 11b has received image data containing process-designating information 5 whose command name 6 is "WWW Get".

In this case, Steps S601 and S602 of the flow chart shown in Fig. 22 are performed, and then the process-designating information 5 whose command name 6 is "WWW Get" are stored in the process-designating information storage section 123. Then, since the television 11b is in the broadcasting mode (YES in Step S609), it performs a process in the broadcasting mode (Step S610).

That is, in the flow chart shown in Fig. 26, the display section 133 displays a confirmation window that asks the user whether or not to process the image data (Step S731). The process that will be performed if the "YES" or "NO" button is pressed on the confirmation window is the same as that described in Case 6, and as such, is not described here.

Then, after the user presses the "YES" button on the window shown in (d) of Fig. 27 and the confirmation window is stopped from being displayed (Step S734), the process is terminated without anything done (NO in Step S735, NO in Step S738), because the process-designating information storage section 123 has stored therein the process-designating information 5 whose command name 6 is "WWW Get Album".

Therefore, the television 11b continues to display the picture of the television broadcast in the display section 133 in the broadcasting mode.

### (Effects)

As described above, the image data reception processing device according to the present embodiment extracts process-designating information 5 contained, if any, in the image data thus received, determines whether or not a process designated by the process-designating information 5 thus extracted can be executed by the image data reception processing device, and executes only a process that can be executed by the image data reception processing device. Moreover, the image data reception processing device further executes a process according to the mode of the image data reception processing device. Furthermore, the image data reception processing device executes a process in accordance with an execution order.

This allows the image data reception processing device according to the present embodiment to execute a process according to the mode of the image data reception processing device, from among processes that can be executed by the image data reception processing device. For this reason, by presetting for each mode only a (predictable) process expected by the user, from among the processes that can be executed by the image data reception processing device, the image data reception processing device can execute only that process.

In other words, for each mode, the image data reception processing device according to the present embodiment can be set not to execute a process that is not appropriate for execution (that the user does not expect to be executed) in that mode. For example, in cases where it is not appropriate for the image data reception processing device to, while displaying a picture of a television broadcast in its display section in the broadcasting mode, display a Web page in its display section as obtained from an HTTP server, the image data reception processing device can be set not to execute, in the broadcasting mode, a process for obtaining a Web page from an HTTP server, whereby the image data reception processing device can be set not to obtain a Web page from an HTTP server.

Furthermore, in cases where there exist a plurality of processes that are to be executed according to a mode, the processes can be executed in the mode in an order starting from an more appropriate one of the processes by presetting an execution order for the mode. It should be noted that all processes assigned execution orders do not necessarily need to be executed, and an upper limit to the number of processes that are executed may be set up in advance.

For example, by setting, as a process that can be executed first in a mode, a process for obtaining a group of photo data belonging to an album from a photo album server and setting, as a process that can be executed second in the mode, a process for the image data reception processing device to display a Web page in its display section as obtained from an HTTP server, the processes can be executed in the execution order. That is, the image data reception processing device first obtains a group of photo data belonging to an album from a photo album server, and then displays a Web page in its display section as obtained from an HTTP server. Alternatively, the image data reception processing device may execute only the process for obtaining a group of photo data belonging to an album from a photo album server.

Therefore, the present invention brings about improvement in convenience for a user who uses an operation device 20b to operate an image data reception processing device 10.

### (Note)

In each of the embodiments above, it is assumed that the image data is in a JPEG format; however, the image data needs only to be in a form in which a maker note region 621 can be stored. For example, the image data may be constructed by embedding an equivalent of the maker note region 621 in TIFF-format image data. Alternatively, the image data may be constructed by embedding an equivalent of the maker note region 621 in a text chunk of PNG (Portable Network Graphics)-format image data. Alternatively, the image data may be GIF (Graphics Interchange Format) image data.

Further, in each of the embodiments above, the image data may contain signature information for the prevention of tampering of the image data. The signature information here is supposed to certify that the process-designating information (the command name 6 and parameter 7 (e.g., URL information as a parameter of the "WWW Get" command)) contained in the image data has not been tampered. Moreover, the image data reception processing device 10 may be set to process the image data only when it finds, with reference to the signature information, that the image data has been delivered from a trustworthy provider and has not been tampered. Alternatively, in the case of image data delivered from an untrustworthy provider or image data containing no signature information, the image data reception processing device 10 may ask the user whether or not to process the image data.

Further, in each of the embodiments above, the IrSS protocol, which is infrared-based one-way communication, is used to transmit image data from the operation device 20 (20b) to one or more image data reception processing devices 10. However, transmission of image data is not limited to one-way communication, but may be carried out according to an interactive response protocol. However, when there occur simultaneous responses from a plurality of image data reception processing devices 10, communication cannot be established. Therefore, it is desirable to prevent simultaneous responses from a plurality of image data reception processing devices 10 by using such a communication protocol that there do not occur simultaneous responses or randomizing the response time.

Further, in each of the embodiments above, infrared-based wireless communication is used to transmit image data from the operation device 20 (20b) to one or more image data reception processing devices 10. However, transmission of image data is not limited to infrared-based communication, but may be carried out through radio wireless communication such as Bluetooth or visible-light wireless communication. Alternatively, it is possible to connect the operation device 20 (20b) to each of the image data reception processing devices 10 through connecting means such as a conducting wire or a fiber-optic cable and transfer image data through cable communication using the connecting means.

It should be noted that in addition to being described above, the present invention can be expressed as follows:
[1] A data-processing system according to the present invention may be composed of: (a) an image data transmitting device including (a-i) image data creating means for creating image data containing plural pieces of process-designating information capable of controlling one or more image data reception processing devices and (a-ii) image data transmitting means for transmitting the image data thus created; (b) a first image data reception processing device including (b-i) first image data receiving means for receiving image data containing first process-designating information, (b-ii) first process extracting means for extracting processes from the image data thus received, (b-iii) first selecting means for selecting a process appropriate for the current status of the first image data reception processing device from among the processes thus extracted, and (b-iv) control means for executing the process thus selected; and (c) a second image data reception processing device including (c-i) second image data receiving means for receiving image data containing first process-designating information, (c-ii) second process extracting means for extracting processes from the image data thus received, (c-iii) second selecting means for selecting a process appropriate for the current status of the second image data reception processing device from among the processes thus extracted, and (c-iv) control means for executing the process thus selected.
[2] Furthermore, the data-processing system according to the present invention may be composed of: (a) an image data transmitting device including (a-i) image data creating means for creating image data containing plural pieces of process-designating information capable of controlling one or more image data reception processing devices and (a-ii) image data transmitting means for transmitting the image data thus created; (b) an image data relaying device including (b-i) image data receiving means for receiving image data containing plural pieces of process-designating information and (b-ii) image data transmitting means for transmitting the image data thus received; (c) a first image data reception processing device including (c-i) first image data receiving means for receiving image data containing first process-designating information, (c-ii) first process extracting means for extracting processes from the image data thus received, (c-iii) first selecting means for selecting a process appropriate for the current status of the first image data reception processing device from among the processes thus extracted, and (c-iv) control means for executing the process thus selected; and (d) a second image data reception processing device including (d-i) second image data receiving means for receiving image data containing first process-designating information, (d-ii) second process extracting means for extracting processes from the image data thus received, (d-iii) second selecting means for selecting a process appropriate for the current status of the second image data reception processing device from among the processes thus extracted, and (d-iv) control means for executing the process thus selected.
[3] A data-processing device according to the present invention may include: image data receiving means for receiving, from an external source, image data containing plural pieces of process-designating information capable of controlling the data-processing device; process extracting means for extracting processes from the image data thus received; selecting means for selecting a process appropriate for the current status of the data-processing device from among the processes thus extracted; and control means for executing control in accordance with the process thus selected.
[4] Furthermore, the data-processing device according to the present invention may receive the image data according to a one-way communication protocol whose communication medium is infrared radiation.
[5] An operation device according to the present invention may include: image data creating means for creating image data containing plural pieces of process-designating information capable of controlling one or more image data reception processing devices; and image data transmitting means for transmitting the image data thus created.
[6] Furthermore, the operation device according to the present invention may transmit the image data according to a one-way communication protocol whose communication medium is infrared radiation.

Finally, the control sections 110, 110b, 140, 170, 210, and 510 may be realized by way of hardware or software as executed by a CPU as follows: The television 11 (11b), the microwave oven 12, the recorder 13, and the cellular phone 21 (21b) each include a CPU (central processing unit) and storage devices (recording media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting to the television 11 (11b), the microwave oven 12, the recorder 13, and the cellular phone 21 (21b) a computer-readable recording medium containing control program code (executable program, intermediate code program, or source program) for the television 11 (11b), the microwave oven 12, the recorder 13, and the cellular phone 21 (21b), which is software realizing the aforementioned functions, in order for the computer (or CPU, MPU (micro processing unit)) to retrieve and execute the program code contained in the recording medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.
The television 11 (11b), the microwave oven 12, the recorder 13, and the cellular phone 21 (21 b) may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (Registered Trademark), 802.11 wireless, HDR, mobile telephone network, satellite line, or terrestrial digital network. The present invention encompasses a carrier wave or data signal transmission in which the program code is embodied electronically.
The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention can be applied to a data-processing device that receives data outputted from an operation device and executes a process in accordance with the data thus received. In particular, the present invention can be suitably applied to an image data-processing device that receives image data outputted from an operation device and executes a process in accordance with the image data thus received.

### Reference Signs List

3 Operating image data (operation data)
5 Process-designating information
6 Command name
7 Parameter
10 Image data reception processing device (data-processing device)
11, 11b Television (data-processing device)
12 Microwave oven (data-processing device)
13 Recorder (data-processing device)
20, 20b Operation device
21, 21b Cellular phone (operation device)
111 Image data receiving section (process-designating information obtaining means)
112 Process-designating information extracting section (process-designating information obtaining means, process-designating information extracting means)
112b Process-designating information extracting section (process-designating information obtaining means, process-designating information extracting means)
114 Display mode control section
115 Process executing section (process executing means)
115b Process executing section (current mode obtaining means, process executing means)
122, 122b Executable process storage section
123 Process-designating information storage section
141 Image data receiving section (process-designating information obtaining means)
142 Process-designating information extracting section (process-designating information obtaining means, process-designating information extracting means)
145 Process executing section (process executing means)
152 Executable process storage section
153 Process-designating information storage section
171 Image data receiving section (process-designating information obtaining means)
172 Process-designating information extracting section (process-designating information obtaining means, process-designating information extracting means)
175 Process executing section (process executing means)
182 Executable process storage section
183 Process-designating information storage section
900, 910 Data-processing system

## Claims

1. A data-processing device for receiving operation data outputted by an operation device to operate a plurality of data-processing devices including at least the data-processing device, and for executing a process in accordance with the operation data, the data-processing device comprising:
an executable process storage section having stored therein pieces of executable process information respectively indicating one or more processes that are able to be executed by the data-processing device;
process-designating information obtaining means for obtaining, from the operation data thus received, pieces of process-designating information designating processes that are to be executed by the plurality of data-processing devices; and
process executing means for, from among the processes indicated by the pieces of executable process information stored in the executable process storage section, executing a process that matches a process designated by a piece of process-designating information obtained by the process-designating information obtaining means.

2. The data-processing device as set forth in claim 1, further comprising current mode obtaining means for obtaining a current mode of the data-processing device, wherein:
the executable process storage section further has stored therein modes of the data-processing device in which the processes indicated by the pieces of executable process information are to be executed, with the modes associated with the pieces of executable process information; and
from among processes indicated by those ones of the pieces of executable process information, stored in the executable process storage section, which are associated with the current mode of the data-processing device as obtained by the current mode obtaining means, the process executing means executes a process that matches a process designated by a piece of process-designating information obtained by the process-designating information obtaining means.

3. The data-processing device as set forth in claim 2, wherein:
for each of the modes associated with the pieces of executable process information, the executable process storage section further has stored therein an execution order that a process indicated by that one of the pieces of executable process information which is associated with the mode is to be executed, with the execution order associated with that piece of executable process information; and
from among processes indicated by those ones of the pieces of executable process information, stored in the executable process storage section, which are associated with the current mode of the data-processing device as obtained by the current mode obtaining means, the process executing means executes a process that matches a process designated by a piece process-designating information obtained by the process-designating information obtaining means, the process being executed in accordance with the execution order associated with the process.

4. The data-processing device as set forth in any one of claims 1 to 3, wherein:
the operation data is image data having the pieces of process-designating information stored in a predetermined region; and
the process-designating information obtaining means includes process-designating information extracting means for extracting the pieces of process-designating information from the image data.

5. A data-processing system comprising:
a plurality of data-processing devices as set forth in any one of claims 1 to 4; and
an operation device for outputting the operation data to operate the plurality of data-processing devices.

6. The data-processing system as set forth in claim 5, wherein when the operation device transmits the operation data, which contains the pieces of process-designating information designating processes that are to be executed by the plurality of data-processing devices, with the plurality of data-processing devices ready to receive the operation data, each of the data-processing devices uses its process executing means to, from among the processes indicated by the pieces of executable process information stored in the executable process storage section, execute a process that matches a process designated by a piece of process-designating information obtained by the process-designating information obtaining means.

7. A method for controlling a data-processing device for receiving operation data outputted by an operation device to operate a plurality of data-processing devices including at least the data-processing device, and for executing a process in accordance with the operation data, the data-processing device including an executable process storage section having stored therein pieces of executable process information respectively indicating one or more processes that are able to be executed by the data-processing device, the method comprising:
a process-designating information obtaining step of obtaining, from the operation data thus received, pieces of process-designating information designating processes that are to be executed by the plurality of data-processing devices; and
a process executing step of, from among the processes indicated by the pieces of executable process information stored in the executable process storage section, executing a process that matches a process designated by a piece of process-designating information obtained in the process-designating information obtaining step.

8. A control program for causing a computer to function as a data-processing device as set forth in any one of claims 1 to 4, the control program causing the computer to function as each of the means.

9. A computer-readable storage medium containing a control program as set forth in claim 8.
